(19)

Europäisches
Patentamt
European
Patent Office
Office européen
des brevets

(11) **EP 4 660 659 A1**

(12) **EUROPEAN PATENT APPLICATION**
published in accordance with Art. 153(4) EPC

(43) Date of publication:
**10.12.2025 Bulletin 2025/50**

(21) Application number: **23925095.4**

(22) Date of filing: **20.12.2023**

(51) International Patent Classification (IPC):
**G01S 5/22** *(2006.01)*      **G01S 5/18** *(2006.01)*

(52) Cooperative Patent Classification (CPC):
**G01S 5/18; G01S 5/22; G01S 5/26; H04R 9/02;
H04R 9/06; H04W 4/80**

(86) International application number:
**PCT/CN2023/140438**

(87) International publication number:
**WO 2024/179150 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2023   CN 202310225172**

(71) Applicant: **Huawei Technologies Co., Ltd.
Shenzhen, Guangdong 518129 (CN)**

(72) Inventors:
• **WANG, Qi
Shenzhen, Guangdong 518129 (CN)**

• **LIN, Lixin
Shenzhen, Guangdong 518129 (CN)**
• **HUANG, Qingqian
Shenzhen, Guangdong 518129 (CN)**
• **DU, Zhenguo
Shenzhen, Guangdong 518129 (CN)**
• **ZHOU, Yongxing
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **METHOD FOR DETERMINING LOCATION INFORMATION AND ELECTRONIC DEVICE**

(57)      A location information determining method and an electronic device are provided. A first electronic device may respectively send a first ultrasonic signal and a second ultrasonic signal via a first loudspeaker and a second loudspeaker, and a second electronic device may also send a third ultrasonic signal via a third loudspeaker. The first electronic device may determine location information of the second electronic device based on first time information, second time information, third time information, fourth time information, and locations of the first loudspeaker, the second loudspeaker, and a first microphone in the first electronic device. In this way, a case in which a user needs to learn of the location information of the second electronic device is avoided, user experience can be improved, and operation complexity can be reduced.

FIG. 6

EP 4 660 659 A1

## Description

This application claims priority to Chinese Patent Application No. 202310225172.8, filed with the China National Intellectual Property Administration on February 28, 2023 and entitled "LOCATION INFORMATION DETERMINING METHOD AND ELECTRONIC DEVICE", which is incorporated herein by reference in its entirety.

## TECHNICAL FIELD

This application relates to the field of electronic technologies, and more specifically, to a location information determining method and an electronic device in the field of electronic technologies.

## BACKGROUND

In some scenarios, a plurality of electronic devices may collaborate to implement some functions. In a collaboration process of the plurality of electronic devices, a user needs to learn of locations of the electronic devices and manually set roles of the electronic devices based on the locations of the electronic devices. Some functions may be implemented based on different roles of the electronic devices. This imposes a high requirement on the user, and an operation is complex. For example, a large screen may play different audio signals via a plurality of speakers to implement a stereo effect. For example, the large screen may be a television, a computer, or a projector. The user may perform an operation on a display interface of the large screen based on a location of each speaker, to set an audio channel of the speaker. The plurality of speakers play the different audio signals from the large screen to implement the stereo effect. However, in this process, the user needs to perform manual setting, the user needs to have audio channel allocation knowledge, the operation is complex, and user experience is poor.

## SUMMARY

Embodiments of this application provide a location information determining method and an electronic device, to improve user experience and reduce operation complexity.

According to a first aspect, a location information determining method is provided, and includes: A first electronic device sends a first ultrasonic signal via a first loudspeaker. The first electronic device sends a second ultrasonic signal via a second loudspeaker. The first electronic device receives, via a first microphone, a third ultrasonic signal sent by a second electronic device via a third loudspeaker. The first electronic device obtains first time information and second time information, where the first time information indicates a time difference obtained by subtracting a time point at which the second electronic device processes the third ultrasonic signal from a time point at which the second electronic device receives the first ultrasonic signal, the second time information indicates a time difference obtained by subtracting the time point at which the second electronic device processes the third ultrasonic signal from a time point at which the second electronic device receives the second ultrasonic signal, and the time point at which the second electronic device processes the third ultrasonic signal includes: a time point at which the second electronic device sends the third ultrasonic signal via the third loudspeaker or a time point at which the second electronic device receives the third ultrasonic signal via a second microphone. The first electronic device determines location information of the second electronic device based on the first time information, the second time information, third time information, fourth time information, and locations of the first loudspeaker, the second loudspeaker, and the first microphone in the first electronic device, where the third time information indicates a time difference obtained by subtracting a time point at which the first electronic device processes the first ultrasonic signal from a time point at which the first electronic device receives the third ultrasonic signal, the fourth time information indicates a time difference obtained by subtracting a time point at which the first electronic device processes the second ultrasonic signal from the time point at which the first electronic device receives the third ultrasonic signal, the time point at which the first electronic device processes the first ultrasonic signal includes: a time point at which the first electronic device sends the first ultrasonic signal via the first loudspeaker or a time point at which the first electronic device receives the first ultrasonic signal via the first microphone, and the time point at which the first electronic device processes the second ultrasonic signal includes: a time point at which the first electronic device sends the second ultrasonic signal via the second loudspeaker or a time point at which the first electronic device receives the second ultrasonic signal via the first microphone.

In the foregoing solution, the first electronic device may respectively send the first ultrasonic signal and the second ultrasonic signal via the first loudspeaker and the second loudspeaker, and the second electronic device may also send the third ultrasonic signal via the third loudspeaker. The first electronic device may determine the location information of the second electronic device based on the first time information, the second time information, the third time information, the fourth time information, and the locations of the first loudspeaker, the second loudspeaker, and the first microphone in the first electronic device. In this way, a case in which a user needs to learn of the location information of the second electronic device is avoided, user experience can be improved, and operation complexity can be reduced. In a scenario in which a large screen may play different audio signals via a plurality of speakers to implement a stereo effect, the first electronic device may be the large screen, and the second electronic device may be a speaker. The large screen may determine a location of the speaker based on the first time information, the second time information, the third time information, the fourth time information, and the locations of the first loudspeaker, the second loudspeaker, and the first microphone in the large screen, and the large screen may allocate an audio channel to the speaker based on the location of the speaker, to avoid a case in which the user needs to learn of locations of the speakers and manually allocate audio channels based on the locations of the speakers, so that user experience can be improved, and the complexity can be reduced.

Optionally, a time difference in embodiments of this application may be a positive value, or may be a negative value.

Optionally, the first time information indicates the time difference obtained by subtracting the time point at which the second electronic device processes the third ultrasonic signal from the time point at which the second electronic device receives the first ultrasonic signal. If the second electronic device receives the first ultrasonic signal before the second electronic device processes the third ultrasonic signal, the time difference that is indicated by the first time information and that is obtained by subtracting the time point at which the second electronic device processes the third ultrasonic signal from the time point at which the second electronic device receives the first ultrasonic signal may be a negative value. If the second electronic device receives the first ultrasonic signal after the second electronic device processes the third ultrasonic signal, the time difference that is indicated by the first time information and that is obtained by subtracting the time point at which the second electronic device processes the third ultrasonic signal from the time point at which the second electronic device receives the first ultrasonic signal may be a positive value.

Optionally, the second time information indicates the time difference obtained by subtracting the time point at which the second electronic device processes the third ultrasonic signal from the time point at which the second electronic device receives the second ultrasonic signal. If the second electronic device receives the second ultrasonic signal before the second electronic device processes the third ultrasonic signal, the time difference that is indicated by the second time information and that is obtained by subtracting the time point at which the second electronic device processes the third ultrasonic signal from the time point at which the second electronic device receives the second ultrasonic signal may be a negative value. If the second electronic device receives the second ultrasonic signal after the second electronic device processes the third ultrasonic signal, the time difference that is indicated by the second time information and that is obtained by subtracting the time point at which the second electronic device processes the third ultrasonic signal from the time point at which the second electronic device receives the second ultrasonic signal may be a positive value.

Optionally, the third time information indicates the time difference obtained by subtracting the time point at which the first electronic device processes the first ultrasonic signal from the time point at which the first electronic device receives the third ultrasonic signal. If the first electronic device receives the third ultrasonic signal before the first electronic device processes the first ultrasonic signal, the difference that is indicated by the third time information and that is obtained by subtracting the time point at which the first electronic device processes the first ultrasonic signal from the time point at which the first electronic device receives the third ultrasonic signal is a negative value. If the first electronic device receives the third ultrasonic signal after the first electronic device processes the first ultrasonic signal, the difference that is indicated by the third time information and that is obtained by subtracting the time point at which the first electronic device processes the first ultrasonic signal from the time point at which the first electronic device receives the third ultrasonic signal is a positive value.

Optionally, the fourth time information indicates the time difference obtained by subtracting the time point at which the first electronic device processes the second ultrasonic signal from the time point at which the first electronic device receives the third ultrasonic signal. If the first electronic device receives the third ultrasonic signal before the first electronic device processes the second ultrasonic signal, the difference that is indicated by the fourth time information and that is obtained by subtracting the time point at which the first electronic device processes the second ultrasonic signal from the time point at which the first electronic device receives the third ultrasonic signal is a negative value. If the first electronic device receives the third ultrasonic signal after the first electronic device processes the second ultrasonic signal, the difference that is indicated by the fourth time information and that is obtained by subtracting the time point at which the first electronic device processes the second ultrasonic signal from the time point at which the first electronic device receives the third ultrasonic signal is a positive value.

Optionally, the locations of the first loudspeaker, the second loudspeaker, and the first microphone in the first electronic device may be known, and the first electronic device may learn of the locations of the first loudspeaker, the second loudspeaker, and the first microphone in the first electronic device.

Optionally, the location of the first loudspeaker in the first electronic device may be coordinates of the first loudspeaker, the location of the second loudspeaker in the first electronic device may be coordinates of the second loudspeaker, and the location of the first microphone in the first electronic device may be coordinates of the first microphone.

Optionally, the first loudspeaker may be a left loudspeaker of the first electronic device, and the second loudspeaker may be a right loudspeaker of the first electronic device.

Optionally, a distance between the first loudspeaker and the second loudspeaker is greater than a preset value.

Optionally, a size of the first electronic device is greater than a preset value. For example, a display screen of the first electronic device may be greater than a preset size.

Optionally, the first electronic device may be a smart television.

Optionally, the first electronic device may be a smart screen.

Optionally, the second electronic device may be an audio playing device, for example, the speaker.

Optionally, the first ultrasonic signal is different from the second ultrasonic signal. In this way, the second electronic device can recognize that the first ultrasonic signal and the second ultrasonic signal are sent by two different loudspeakers. Optionally, if the first ultrasonic signal is different from the second ultrasonic signal, the time point at which the first electronic device sends the first ultrasonic signal via the first loudspeaker may be the same as the time point at which the first electronic device sends the second ultrasonic signal via the second loudspeaker. In other words, the first electronic device may simultaneously send the first ultrasonic signal and the second ultrasonic signal. Optionally, that the first ultrasonic signal is different from the second ultrasonic signal includes: Frequencies at which the first electronic device sends the first ultrasonic signal and the second ultrasonic signal are different, or the first ultrasonic signal and the second ultrasonic signal are orthogonal signals.

Optionally, the first ultrasonic signal may be the same as the second ultrasonic signal, but the time point at which the first electronic device sends the first ultrasonic signal via the first loudspeaker is different from the time point at which the first electronic device sends the second ultrasonic signal via the second loudspeaker. In this way, the second electronic device can recognize the first ultrasonic signal and the second ultrasonic signal.

In some possible implementations, the time point at which the first electronic device processes the first ultrasonic signal is the time point at which the first electronic device sends the first ultrasonic signal via the first loudspeaker; and the time point at which the first electronic device processes the second ultrasonic signal is the time point at which the first electronic device sends the second ultrasonic signal via the second loudspeaker.

In some possible implementations, that the first electronic device determines the location information of the second electronic device based on the first time information, the second time information, the third time information, the fourth time information, and the locations of the first loudspeaker, the second loudspeaker, and the first microphone in the first electronic device includes: The first electronic device determines a sum of a first distance and a second distance based on the first time information and the third time information, where the first distance is a distance between the first loudspeaker and the second electronic device, and the second distance is a distance between the first microphone and the second electronic device. The first electronic device determines a sum of a third distance and the second distance based on the second time information and the fourth time information, where the third distance is a distance between the second loudspeaker and the second electronic device. The first electronic device determines the location information of the second electronic device based on the sum of the first distance and the second distance, the sum of the third distance and the second distance, and the locations of the first loudspeaker, the second loudspeaker, and the first microphone in the first electronic device.

In the foregoing solution, the first electronic device may determine the sum of the distance from the first loudspeaker to the second electronic device and the distance from the first microphone to the second electronic device based on the first time information and the third time information, and determine the sum of the distance from the second loudspeaker to the second electronic device and the distance from the first microphone to the second electronic device based on the second time information and the fourth time information. The first electronic device may determine the location information of the second electronic device based on the two distance sums and the locations of the first loudspeaker, the second loudspeaker, and the first microphone in the first electronic device. In this way, a case in which the user needs to learn of the location information of the second electronic device is avoided, user experience can be improved, and the operation complexity can be reduced.

It may be understood that the first electronic device cannot determine the first distance, the second distance, and the third distance, but may determine the sum of the first distance and the second distance, and may also determine the sum of the second distance and the third distance. In other words, the first electronic device may determine the sum of the two distances based on the first time information, the third time information, and the locations of the first loudspeaker, the second loudspeaker, and the first microphone in the first electronic device, but cannot determine each distance; and may determine the sum of the two distances based on the second time information, the fourth time information, and the locations of the first loudspeaker, the second loudspeaker, and the first microphone in the first electronic device, but cannot determine each distance.

In some possible implementations, the time point at which the first electronic device processes the first ultrasonic signal is the time point at which the first electronic device receives the first ultrasonic signal via the first microphone; and the time point at which the first electronic device processes the second ultrasonic signal is the time point at which the first electronic device receives the second ultrasonic signal via the first microphone.

In some possible implementations, that the first electronic device determines the location information of the second electronic device based on the first time information, the second time information, the third time information, the fourth time information, and the locations of the first loudspeaker, the second loudspeaker, and the first microphone in the first electronic device includes: The first electronic device determines a sum of a first distance and a second distance based on the first time information, the third time information, and a distance between the first loudspeaker and the first microphone, where the first distance is a distance between the first loudspeaker and the second electronic device, and the second distance is a distance between the first microphone and the second electronic device. The first electronic device determines a sum of a third distance and the second distance based on the second time information, the fourth time information, and a distance between the second loudspeaker and the first microphone, where the third distance is a distance between the second loudspeaker and the second electronic device. The location information of the second electronic device is determined based on the sum of the first distance and the second distance, the sum of the third distance and the second distance, and the locations of the first loudspeaker, the second loudspeaker, and the first microphone in the first electronic device.

In the foregoing solution, the first electronic device may determine the sum of the distance from the first loudspeaker to the second electronic device and the distance from the first microphone to the second electronic device based on the first time information, the third time information, and the distance from the first loudspeaker to the first microphone, and determine the sum of the distance from the second loudspeaker to the second electronic device and the distance from the first microphone to the second electronic device based on the second time information, the fourth time information, and the distance from the second loudspeaker to the first microphone. The first electronic device may determine the location information of the second electronic device based on the two distance sums and the locations of the first loudspeaker, the second loudspeaker, and the first microphone in the first electronic device. In this way, a case in which the user needs to determine the location information of the second electronic device is avoided, user experience can be improved, and the operation complexity can be reduced.

Optionally, the distance between the first loudspeaker and the first microphone may be an absolute value of the distance between the first loudspeaker and the first microphone.

It may be understood that the first electronic device cannot determine the first distance, the second distance, and the third distance, but may determine the sum of the first distance and the second distance, and may also determine the sum of the second distance and the third distance. In other words, the first electronic device may determine the sum of the two distances based on the first time information, the third time information, and the locations of the first loudspeaker, the second loudspeaker, and the first microphone in the first electronic device, but cannot determine each distance; and may determine the sum of the two distances based on the second time information, the fourth time information, and the locations of the first loudspeaker, the second loudspeaker, and the first microphone in the first electronic device, but cannot determine each distance.

In some possible implementations, that the first electronic device obtains the first time information and the second time information includes: The first electronic device receives the first time information and the second time information from the second electronic device.

In the foregoing solution, the second electronic device may determine the first time information and the second time information, and send the first time information and the second time information to the first electronic device.

In some possible implementations, that the first electronic device obtains the first time information and the second time information includes: The first electronic device receives a first recorded file from the second electronic device, where the first recorded file includes the first ultrasonic signal, the second ultrasonic signal, and the third ultrasonic signal. The first electronic device determines the first time information and the second time information based on the first recorded file.

Optionally, the second electronic device may establish a Bluetooth channel with the first electronic device. The first electronic device sends a first instruction to the second electronic device through the established Bluetooth channel, where the first instruction indicates the second electronic device to start recording. The second electronic device may start recording based on the first instruction. Recording ends after the second electronic device receives the first ultrasonic signal and the second ultrasonic signal and sends the third ultrasonic signal. The second electronic device may send the obtained first recorded file to the first electronic device. Optionally, it may be specified that the second electronic device sends the third ultrasonic signal after receiving the first ultrasonic signal and the second ultrasonic signal, or it may be specified that the first electronic device may send the first ultrasonic signal and the second ultrasonic signal after the first electronic device receives the third ultrasonic signal sent by the second electronic device. In other words, a time interval between the time point at which the second electronic device sends the third ultrasonic signal and the time point at which the first electronic device sends the first ultrasonic signal is fixed, or a time interval between the time point at which the second electronic device sends the third ultrasonic signal and the time point at which the first electronic device sends the second ultrasonic signal is fixed. In this way, the first electronic device can determine a time range for sending the first ultrasonic signal and the second ultrasonic signal and receiving the third ultrasonic signal, and the first electronic device can indicate the second electronic device to perform recording within the time range. In this way, it can be ensured that the first recorded file obtained by the second electronic device through recording includes the first ultrasonic signal, the second ultrasonic signal, and the third ultrasonic signal.

In some possible implementations, the method further includes: receiving first identification information from the second electronic device, where the first identification information corresponds to the third ultrasonic signal. If a device identified by the first identification information is the second electronic device, the first electronic device determines that the third ultrasonic signal is sent by the second electronic device.

In the foregoing solution, if the first identification information received by the first electronic device corresponds to the third ultrasonic signal, the first electronic device may determine that the third ultrasonic signal is sent by the second electronic device identified by the first identification information. In this way, a case in which the first electronic device cannot determine which electronic device sends the third ultrasonic signal is avoided.

Optionally, receiving the first identification information from the second electronic device includes: receiving the first identification information and the third ultrasonic signal from the second electronic device via the first microphone. In other words, the first electronic device may simultaneously receive the first identification information and the third ultrasonic signal.

In some possible implementations, before the first electronic device sends the first ultrasonic signal via the first loudspeaker, the method further includes: The first electronic device determines whether the second electronic device and the first electronic device are in same space. If the second electronic device and the first electronic device are in the same space, the first electronic device sends the first ultrasonic signal via the first loudspeaker, and the first electronic device sends the second ultrasonic signal via the second loudspeaker.

In the foregoing solution, if the first electronic device and the second electronic device are in the same space, the first electronic device may determine the location information of the second electronic device, so that the first electronic device can send the first ultrasonic signal and the second ultrasonic signal, to avoid that the second electronic device cannot receive the first ultrasonic signal and the second ultrasonic signal after the first electronic device sends the first ultrasonic signal and the second ultrasonic signal. For example, the first electronic device is the large screen, and the second electronic device is the speaker. If the large screen and the speaker are in the same space, the large screen sends the first ultrasonic signal and the second ultrasonic signal, and the large screen may allocate the audio channel to the speaker based on the determined location of the speaker. If the large screen and the speaker are not in the same space, the large screen may not send the first ultrasonic signal and the second ultrasonic signal.

In some possible implementations, the method further includes: The first electronic device receives, via the first microphone, a fourth ultrasonic signal sent by a fourth loudspeaker of a third electronic device. The first electronic device obtains fifth time information and sixth time information, where the fifth time information indicates a time difference obtained by subtracting a time point at which the third electronic device processes the fourth ultrasonic signal from a time point at which the third electronic device receives the first ultrasonic signal, the sixth time information indicates a time difference obtained by subtracting the time point at which the third electronic device processes the fourth ultrasonic signal from a time point at which the third electronic device receives the second ultrasonic signal, and the time point at which the third electronic device processes the fourth ultrasonic signal includes: a time point at which the third electronic device sends the fourth ultrasonic signal via the third loudspeaker or a time point at which a third microphone of the third electronic device receives the fourth ultrasonic signal. The first electronic device determines location information of the third electronic device based on the fifth time information, the sixth time information, seventh time information, eighth time information, and the locations of the first loudspeaker, the second loudspeaker, and the first microphone in the first electronic device, where the seventh time information indicates a time difference obtained by subtracting the time point at which the first electronic device processes the first ultrasonic signal from a time point at which the first electronic device receives the fourth ultrasonic signal, the eighth time information indicates a time difference obtained by subtracting a time point at which the first electronic device processes the second ultrasonic signal from the time point at which the first electronic device receives the fourth ultrasonic signal, the time point at which the first electronic device processes the first ultrasonic signal includes: the time point at which the first electronic device sends the first ultrasonic signal via the first loudspeaker or the time point at which the first electronic device receives the first ultrasonic signal via the first microphone, and the time point at which the first electronic device processes the second ultrasonic signal includes: the time point at which the first electronic device sends the second ultrasonic signal via the second loudspeaker or the time point at which the first electronic device receives the second ultrasonic signal via the first microphone.

In the foregoing solution, the first electronic device may send the first ultrasonic signal and the second ultrasonic signal, both the second electronic device and the third electronic device may receive the first ultrasonic signal and the second ultrasonic signal, the second electronic device may send the fourth ultrasonic signal, and the third electronic device sends a fifth ultrasonic signal. In this way, the first electronic device can determine a location of the second electronic device based on the first time information, the second time information, the third time information, the fourth time information, and the locations of the first loudspeaker, the second loudspeaker, and the first microphone in the first electronic device, and determine the location information of the third electronic device based on the fifth time information, the sixth time information, the seventh time information, the eighth time information, and the locations of the first loudspeaker, the second loudspeaker, and the first microphone in the first electronic device. In this way, the first electronic device can simultaneously determine location information of a plurality of electronic devices based on the first ultrasonic signal and the second ultrasonic signal that are sent, so that efficiency of determining the location information of the electronic devices can be improved. Especially when a quantity of the electronic devices is large, the efficiency can be better improved.

Optionally, the fifth time information indicates a time difference obtained by subtracting the time point at which the third electronic device processes the fourth ultrasonic signal from the time point at which the third electronic device receives the first ultrasonic signal. If the second electronic device receives the first ultrasonic signal before the third electronic device processes the fourth ultrasonic signal, the time difference that is indicated by the fifth time information and that is obtained by subtracting the time point at which the third electronic device processes the fourth ultrasonic signal from the time point at which the second electronic device receives the first ultrasonic signal may be a negative value. If the second electronic device receives the first ultrasonic signal after the third electronic device processes the fourth ultrasonic signal, the time difference that is indicated by the fifth time information and that is obtained by subtracting the time point at which the third electronic device processes the fourth ultrasonic signal from the time point at which the second electronic device receives the first ultrasonic signal may be a positive value.

Optionally, the sixth time information indicates the time difference obtained by subtracting the time point at which the third electronic device processes the fourth ultrasonic signal from the time point at which the third electronic device receives the second ultrasonic signal. If the third electronic device receives the second ultrasonic signal before the third electronic device processes the fourth ultrasonic signal, the time difference that is indicated by the sixth time information and that is obtained by subtracting the time point at which the third electronic device processes the fourth ultrasonic signal from the time point at which the third electronic device receives the second ultrasonic signal may be a negative value. If the third electronic device receives the second ultrasonic signal after the third electronic device processes the fourth ultrasonic signal, the time difference that is indicated by the sixth time information and that is obtained by subtracting the time point at which the third electronic device processes the fourth ultrasonic signal from the time point at which the third electronic device receives the second ultrasonic signal may be a positive value.

Optionally, the seventh time information indicates the time difference obtained by subtracting the time point at which the first electronic device processes the first ultrasonic signal from the time point at which the first electronic device receives the fourth ultrasonic signal. If the first electronic device receives the fourth ultrasonic signal before the first electronic device processes the first ultrasonic signal, the difference that is indicated by the seventh time information and that is obtained by subtracting the time point at which the first electronic device processes the first ultrasonic signal from the time point at which the first electronic device receives the fourth ultrasonic signal is a negative value. If the first electronic device receives the fourth ultrasonic signal after the first electronic device processes the first ultrasonic signal, the difference that is indicated by the seventh time information and that is obtained by subtracting the time point at which the first electronic device processes the first ultrasonic signal from the time point at which the first electronic device receives the fourth ultrasonic signal is a positive value.

Optionally, the eighth time information indicates a time difference obtained by subtracting the time point at which the first electronic device processes the second ultrasonic signal from the time point at which the first electronic device receives the fourth ultrasonic signal. If the first electronic device receives the fourth ultrasonic signal before the first electronic device processes the second ultrasonic signal, the difference that is indicated by the eighth time information and that is obtained by subtracting the time point at which the first electronic device processes the second ultrasonic signal from the time point at which the first electronic device receives the fourth ultrasonic signal is a negative value. If the first electronic device receives the fourth ultrasonic signal after the first electronic device processes the second ultrasonic signal, the difference that is indicated by the eighth time information and that is obtained by subtracting the time point at which the first electronic device processes the second ultrasonic signal from the time point at which the first electronic device receives the fourth ultrasonic signal is a positive value.

In some possible implementations, the time point at which the first electronic device processes the first ultrasonic signal is the time point at which the first electronic device sends the first ultrasonic signal via the first loudspeaker; and the time point at which the first electronic device processes the second ultrasonic signal is the time point at which the first electronic device sends the second ultrasonic signal via the second loudspeaker.

In some possible implementations, that the first electronic device determines the location information of the third electronic device based on the fifth time information, the sixth time information, the seventh time information, the eighth time information, and the locations of the first loudspeaker, the second loudspeaker, and the first microphone in the first electronic device includes: The first electronic device determines a sum of a fourth distance and a fifth distance based on the fifth time information and the seventh time information, where the fourth distance is a distance between the first loudspeaker and the third electronic device, and the fifth distance is a distance between the first microphone and the third electronic device. The first electronic device determines a sum of a sixth distance and the fifth distance based on the sixth time information and the eighth time information, where the sixth distance is a distance between the second loudspeaker and the third electronic device. The first electronic device determines the location information of the third electronic device based on the sum of the fourth distance and the fifth distance, the sum of the sixth distance and the fifth distance, and the locations of the first loudspeaker, the second loudspeaker, and the first microphone in the first electronic device.

In the foregoing solution, the first electronic device may determine the sum of the distance from the first loudspeaker to the third electronic device and the distance from the first microphone to the third electronic device based on the fifth time information, the seventh time information, and the distance from the first loudspeaker to the first microphone, and determine the sum of the distance from the second loudspeaker to the third electronic device and the distance from the first microphone to the third electronic device based on the sixth time information, the eighth time information, and the distance from the second loudspeaker to the first microphone. The first electronic device may determine the location information of the third electronic device based on the two distance sums and the locations of the first loudspeaker, the second loudspeaker, and the first microphone in the first electronic device. In this way, a case in which the user needs to learn of the location information of the third electronic device is avoided, user experience can be improved, and the operation complexity can be reduced.

It may be understood that the first electronic device cannot determine the fourth distance, the fifth distance, and the sixth distance, but may determine the sum of the fourth distance and the fifth distance, and may also determine the sum of the fifth distance and the sixth distance. In other words, the first electronic device may determine the sum of the two distances based on the fifth time information, the seventh time information, and the locations of the first loudspeaker, the second loudspeaker, and the first microphone in the first electronic device, but cannot determine each distance; and may determine the sum of the two distances based on the sixth time information, the eighth time information, and the locations of the first loudspeaker, the second loudspeaker, and the first microphone in the first electronic device, but cannot determine each distance.

In some possible implementations, the time point at which the first electronic device processes the first ultrasonic signal is the time point at which the first electronic device receives the first ultrasonic signal via the first microphone; and the time point at which the first electronic device processes the second ultrasonic signal is the time point at which the first electronic device receives the second ultrasonic signal via the first microphone.

In some possible implementations, that the first electronic device determines the location information of the third electronic device based on the fifth time information, the sixth time information, the seventh time information, the eighth time information, and the locations of the first loudspeaker, the second loudspeaker, and the first microphone in the first electronic device includes: The first electronic device determines a sum of a fourth distance and a fifth distance based on the fifth time information, the seventh time information, and the distance between the first loudspeaker and the first microphone, where the fourth distance is a distance between the first loudspeaker and the third electronic device, and the fifth distance is a distance between the first microphone and the third electronic device. The first electronic device determines a sum of a sixth distance and the fifth distance based on the sixth time information, the eighth time information, and the distance between the second loudspeaker and the first microphone, where the sixth distance is a distance between the second loudspeaker and the third electronic device. The location information of the third electronic device is determined based on the sum of the fourth distance and the fifth distance, the sum of the sixth distance and the fifth distance, and the locations of the first loudspeaker, the second loudspeaker, and the first microphone in the first electronic device.

In the foregoing solution, the first electronic device may determine the sum of the distance from the first loudspeaker to the third electronic device and the distance from the first microphone to the third electronic device based on the fifth time information, the seventh time information, and the distance from the first loudspeaker to the first microphone, and determine the sum of the distance from the second loudspeaker to the third electronic device and the distance from the first microphone to the third electronic device based on the sixth time information, the eighth time information, and the distance from the second loudspeaker to the first microphone. The first electronic device may determine the location information of the third electronic device based on the two distance sums and the locations of the first loudspeaker, the second loudspeaker, and the first microphone in the first electronic device. In this way, a case in which the user needs to determine the location information of the third electronic device is avoided, user experience can be improved, and the operation complexity can be reduced.

It may be understood that the first electronic device cannot determine the fourth distance, the fifth distance, and the sixth distance, but may determine the sum of the fourth distance and the fifth distance, and may also determine the sum of the fifth distance and the sixth distance. In other words, the first electronic device may determine the sum of the two distances based on the fifth time information, the seventh time information, the distance from the first loudspeaker to the first microphone, and the locations of the first loudspeaker, the second loudspeaker, and the first microphone in the first electronic device, but cannot determine each distance; and may determine the sum of the two distances based on the sixth time information, the eighth time information, the distance from the second loudspeaker to the first microphone, and the locations of the first loudspeaker, the second loudspeaker, and the first microphone in the first electronic device, but cannot determine each distance.

Optionally, the distance between the first loudspeaker and the first microphone may be the absolute value of the distance between the first loudspeaker and the first microphone.

Optionally, the distance between the second loudspeaker and the first microphone may be the absolute value of the distance between the second loudspeaker and the second microphone.

In some possible implementations, that the first electronic device obtains the fifth time information and the sixth time information includes: The first electronic device receives the fifth time information and the sixth time information from the third electronic device.

In the foregoing solution, the third electronic device may determine the fifth time information and the sixth time information, and send the fifth time information and the sixth time information to the first electronic device.

In some possible implementations, that the first electronic device obtains the fifth time information and the sixth time information includes: The first electronic device receives a second recorded file from the third electronic device, where the second recorded file includes the first ultrasonic signal, the second ultrasonic signal, and the fourth ultrasonic signal. The first electronic device determines the fifth time information and the sixth time information based on the second recorded file.

Optionally, the third electronic device may establish a Bluetooth channel with the first electronic device. The first electronic device sends a second instruction to the third electronic device through the established Bluetooth channel, where the second instruction indicates the third electronic device to start recording. The third electronic device may start recording based on the second instruction. Recording ends after the third electronic device receives the first ultrasonic signal and the second ultrasonic signal and sends the fourth ultrasonic signal. The third electronic device may send the obtained second recorded file to the first electronic device. Optionally, it may be specified that the third electronic device sends the fourth ultrasonic signal after receiving the first ultrasonic signal and the second ultrasonic signal, or it may be specified that the first electronic device may send the first ultrasonic signal and the second ultrasonic signal after the first electronic device receives the fourth ultrasonic signal sent by the third electronic device. In other words, a time interval between the time point at which the third electronic device sends the fourth ultrasonic signal and the time point at which the first electronic device sends the first ultrasonic signal is fixed, or a time interval between the time point at which the third electronic device sends the fourth ultrasonic signal and the time point at which the first electronic device sends the second ultrasonic signal is fixed. In this way, the first electronic device can determine a time range for sending the first ultrasonic signal and the second ultrasonic signal and receiving the fourth ultrasonic signal, and the first electronic device can indicate the third electronic device to perform recording within the time range. In this way, it can be ensured that the second recorded file obtained by the third electronic device through recording includes the first ultrasonic signal, the second ultrasonic signal, and the fourth ultrasonic signal.

In some possible implementations, the method further includes: receiving second identification information from the third electronic device, where the second identification information corresponds to the fourth ultrasonic signal. If a device identified by the second identification information is the third electronic device, the first electronic device determines that the fourth ultrasonic signal is sent by the third electronic device.

In the foregoing solution, if the second identification information received by the first electronic device corresponds to the fourth ultrasonic signal, the first electronic device may determine that the fourth ultrasonic signal is sent by the third electronic device identified by the second identification information. In this way, a case in which the first electronic device cannot determine which electronic device sends the fourth ultrasonic signal is avoided.

Optionally, receiving the second identification information from the third electronic device includes: receiving the second identification information and the fourth ultrasonic signal from the third electronic device via the first microphone. In other words, the first electronic device may simultaneously receive the second identification information and the fourth ultrasonic signal.

In some possible implementations, before the first electronic device sends the first ultrasonic signal via the first loudspeaker, the method further includes: The first electronic device determines whether the third electronic device and the first electronic device are in same space. If the third electronic device and the first electronic device are in the same space, the first electronic device sends the first ultrasonic signal via the first loudspeaker.

In the foregoing solution, if the first electronic device and the third electronic device are in the same space, the first electronic device may determine the location information of the third electronic device, so that the first electronic device can send the first ultrasonic signal and the second ultrasonic signal, to avoid that the third electronic device cannot receive the first ultrasonic signal and the second ultrasonic signal after the first electronic device sends the first ultrasonic signal and the second ultrasonic signal. For example, the first electronic device is the large screen, and the third electronic device is a speaker. If the large screen and the speaker are in the same space, the large screen sends the first ultrasonic signal and the second ultrasonic signal, the large screen may allocate an audio channel to the speaker based on a determined location of the speaker. If the large screen and the speaker are not in the same space, the large screen may not send the first ultrasonic signal and the second ultrasonic signal.

In some possible implementations, the method further includes: The first electronic device allocates an audio channel to the third electronic device based on the location information of the third electronic device; or the first electronic device displays the location information of the third electronic device.

In some possible implementations, the method further includes: The first electronic device allocates an audio channel to the second electronic device based on the location information of the second electronic device; or the first electronic device displays the location information of the second electronic device.

According to a second aspect, a location information determining method is provided. A second electronic device receives a first ultrasonic signal from a first electronic device. The second electronic device receives a second ultrasonic signal from the first electronic device. The second electronic device sends a third ultrasonic signal via a third loudspeaker. The second electronic device sends first time information and second time information to the first electronic device, where the first time information indicates a time difference obtained by subtracting a time point at which the second electronic device processes the third ultrasonic signal from a time point at which the second electronic device receives the first ultrasonic signal, the second time information indicates a time difference obtained by subtracting the time point at which the second electronic device processes the third ultrasonic signal from a time point at which the second electronic device receives the second ultrasonic signal, the time point at which the second electronic device processes the third ultrasonic signal includes: a time point at which the second electronic device sends the third ultrasonic signal via the third loudspeaker or a time point at which the second electronic device receives the third ultrasonic signal via a second microphone, and the first time information and the second time information are for determining location information of the second electronic device.

In the foregoing solution, after receiving the first ultrasonic signal and the second ultrasonic signal, the second electronic device may send the third ultrasonic signal, may determine the first time information and the second time information, and send the first time information and the second time information to the first electronic device, to avoid that the first electronic device needs to determine the first time information and the second time information.

Optionally, the second electronic device may send the third ultrasonic signal after receiving the first ultrasonic signal and the second ultrasonic signal, or may receive the first ultrasonic signal and the second ultrasonic signal after sending the third ultrasonic signal.

In some possible implementations, that the second electronic device receives the first ultrasonic signal from the first electronic device includes: The second electronic device receives the first ultrasonic signal from the first electronic device via a fourth microphone. That the second electronic device receives the second ultrasonic signal from the first electronic device includes: The second electronic device receives the second ultrasonic signal from the first electronic device via a fifth microphone, where

the third loudspeaker is a loudspeaker that is in the second electronic device and that corresponds to the fourth microphone and the fifth microphone.

Optionally, that the third loudspeaker may be a loudspeaker corresponding to the fourth microphone for receiving the first ultrasonic signal and/or the fifth microphone for receiving the second ultrasonic signal includes that the third loudspeaker is a loudspeaker close to the fourth microphone and/or the fifth microphone, or includes that the third loudspeaker may be, if the fourth microphone receives the first ultrasonic signal before the fifth microphone receives the second ultrasonic signal, a loudspeaker close to the fourth microphone or that the third loudspeaker may be, if the fifth microphone receives the second ultrasonic signal before the fourth microphone receives the first ultrasonic signal, a loudspeaker close to the fifth microphone. Optionally, the fourth microphone and the fifth microphone may be a same microphone or different microphones.

According to a third aspect, an embodiment of this application provides a location information determining apparatus. The apparatus has a function of implementing any possible implementation of the first aspect or a function of implementing any possible implementation of the second aspect. The function may be implemented by hardware, or may be implemented by executing corresponding software by hardware. The hardware or the software includes one or more modules or units corresponding to the foregoing function, for example, a transceiver module or unit, a processing module or unit, and an obtaining module or unit.

According to a fourth aspect, an embodiment of this application provides an electronic device, including a memory and a processor. The memory is configured to store a computer program. The processor is configured to enable, when invoking the computer program, the electronic device to perform the method according to any possible implementation of the first aspect or the method according to any possible implementation of the second aspect.

According to a fifth aspect, an embodiment of this application provides a chip system. The chip system includes a processor. The processor is coupled to a memory. The processor executes a computer program stored in the memory, to implement the method according to any possible implementation of the first aspect or the method according to any possible implementation of the second aspect.

The chip system may be a single chip or a chip module including a plurality of chips.

According to a sixth aspect, an embodiment of this application provides a computer-readable storage medium. The computer-readable storage medium stores a computer program. When the computer program is executed by a processor, the method according to any possible implementation of the first aspect or the method according to any possible implementation of the second aspect is implemented.

According to a seventh aspect, an embodiment of this application provides a computer program product. When the computer program product runs on an electronic device, the electronic device is enabled to perform the method according to any possible implementation of the first aspect or the method according to any possible implementation of the second aspect.

It may be understood that, for beneficial effects of the third aspect to the seventh aspect, refer to the related descriptions in the first aspect or the second aspect. Details are not described herein again.

**BRIEF DESCRIPTION OF DRAWINGS**

FIG. 1 is a diagram of a structure of an example of an electronic device according to an embodiment of this application;

FIG. 2 is a diagram of a scenario between speakers and a large screen according to an embodiment of this application;

FIG. 3 is a diagram of another scenario between speakers and a large screen according to an embodiment of this application;

FIG. 4 shows an audio channel allocation method in which a user participates in configuration according to an embodiment of this application;

FIG. 5 is a diagram of a user settings interface according to an embodiment of this application;

FIG. 6 is a diagram of a location information determining method according to an embodiment of this application;

FIG. 7 is a diagram of another location information determining method according to an embodiment of this application;

FIG. 8 is a diagram of still another location information determining method according to an embodiment of this application;

FIG. 9 is a diagram of a layout of loudspeakers and a microphone according to an embodiment of this application;

FIG. 10 is a diagram of another layout of loudspeakers and a microphone;

FIG. 11 is a diagram of still another location information determining method according to an embodiment of this application;

FIG. 12 is a diagram of still another location information determining method according to an embodiment of this application; and

FIG. 13 is a diagram of still another location information determining method according to an embodiment of this application.

**DESCRIPTION OF EMBODIMENTS**

The technical solutions in embodiments of this application are clearly and completely described below with reference to the accompanying drawings. In the descriptions in embodiments of this application, unless otherwise stated, "/" represents "or". For example, A/B may represent A or B. In this specification, "and/or" merely describes an association relationship between associated objects, and represents that three relationships may exist. For example, A and/or B may represent the following three cases: Only A exists, both A and B exist, and only B exists. In addition, in the descriptions in embodiments of this application, "a plurality of" means two or more than two.

The following terms "first" and "second" are merely for a purpose of description, and cannot be understood as an indication or an implication of relative importance or an implicit indication of a quantity of indicated technical features. Therefore, a feature limited by "first" and "second" may explicitly or implicitly include one or more features. In the descriptions in embodiments of this application, unless otherwise stated, "a plurality of" means two or more.

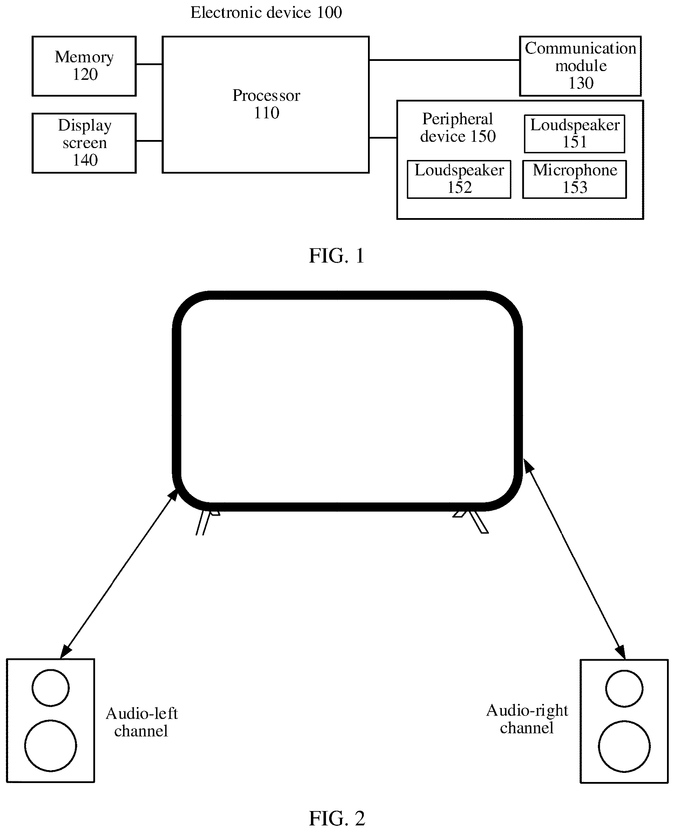

FIG. 1 is a diagram of a structure of an example of an electronic device 100 according to an embodiment of this application. The electronic device 100 may include a processor 110, a memory 120, a communication module 130, a display screen 140, a peripheral device 150, and the like. The peripheral device 150 includes a loudspeaker 151, a loudspeaker 152, and a microphone 153.

The processor 110 may include one or more processing units, and the memory 120 is configured to store program code and data. In this embodiment of this application, the processor 110 may execute computer-executable instructions stored in the memory 120, to control and manage an action of the electronic device 100.

The communication module 130 may be for communication between internal modules of the electronic device 100, communication between the electronic device 100 and another external electronic device, or the like. For example, if the electronic device 100 communicates with another electronic device in a wired connection manner, the communication module 130 may include an interface, for example, a USB interface. The USB interface may be an interface that complies with a USB standard specification, and may be specifically a mini USB interface, a micro USB interface, a USB type-C interface, or the like. The USB interface may be configured to connect to a charger to charge the electronic device 100, may be for data transmission between the electronic device 100 and a peripheral device, or may be configured to connect to a headset to play audio via the headset. The interface may be further configured to connect to another electronic device like an AR device.

Alternatively, the communication module 130 may include an audio component, a radio frequency circuit, a Bluetooth chip, a wireless fidelity (wireless fidelity, Wi-Fi) chip, a near-field communication (near-field communication, NFC) module, and the like, and may implement interaction between the electronic device 100 and the another electronic device in a plurality of different manners.

The display screen 140 may display an image, a video, or the like on a human-machine interaction interface.

Optionally, the peripheral device 150 may include the loudspeaker 151, the loudspeaker 152, and the microphone 153. The loudspeaker 151 and the loudspeaker 152, also referred to as "horns", are configured to convert an audio electrical signal into a sound signal. For example, the electronic device 100 may listen to music or listen to a hands-free call via the loudspeaker 151 and the loudspeaker 152. In some embodiments, the loudspeaker 151 and the loudspeaker 152 are configured to send ultrasonic signals. For example, the loudspeaker 151 may send a first ultrasonic signal, and the loudspeaker 152 may send a second ultrasonic signal. Optionally, a distance between the loudspeaker 151 and the loudspeaker 152 is greater than a preset distance. For example, the preset distance is 10 cm or 8 cm. Optionally, the loudspeaker 151 may be a first loudspeaker in embodiments of this application, and the loudspeaker 152 may be a second loudspeaker in embodiments of this application. In some embodiments, the electronic device 100 may include a plurality of loudspeakers.

The microphone 153, also referred to as a "mike", or a "mic", is configured to convert a sound signal into an electrical signal. For example, when making a call or sending a voice message, a user may input the sound signal to the microphone 153 by making a sound by using a mouth close to the microphone 153. At least one microphone may be disposed in the electronic device 100. In some other embodiments, two microphones may be disposed in the electronic device 100, to collect a sound signal and implement a noise reduction function. In some other embodiments, three, four, or more microphones may be alternatively disposed in the electronic device 100, to collect a sound signal, reduce noise, recognize a sound source, implement a directional recording function, and so on. Optionally, a distance between two microphones of the electronic device 100 is greater than a preset distance. For example, the preset distance is 2 cm, 4 cm, 6 cm, 8 cm, or 10 cm. In some embodiments, the microphone 153 of the electronic device 100 may receive an ultrasonic signal sent by another electronic device. For example, when the electronic device 100 is a first electronic device, the microphone 153 may receive a third ultrasonic signal sent by a second electronic device, or the microphone 153 may receive a fourth ultrasonic signal sent by a third electronic device.

For example, the electronic device 100 may be a television, a computer, or a projector.

Optionally, the peripheral device 150 may further include a mouse, a keyboard, a receiver, or the like. This is not limited in this embodiment of this application.

It should be understood that, in addition to various components or modules enumerated in FIG. 1, the structure of the electronic device 100 is not specifically limited in embodiments of this application. In some other embodiments of this application, the electronic device 100 may alternatively include more or fewer components than those shown in the figure, combine some components, split some components, or have a different component arrangement. The components shown in the figure may be implemented by hardware, software, or a combination of software and hardware.

In some scenarios, a plurality of electronic devices may collaborate to implement some functions. In a collaboration process of the plurality of electronic devices, the user needs to learn of locations of the electronic devices and manually set roles of the electronic devices based on the locations of the electronic devices. Some functions may be implemented based on different roles of the electronic devices. This imposes a high requirement on the user, and an operation is complex.

For example, when a plurality of electronic devices in a home of the user are networked, a primary electronic device needs to learn of locations of the electronic devices, so that networking can be better performed.

For another example, the electronic device 100 in FIG. 1 may be a large screen, and the large screen may play different audio signals via a plurality of speakers to implement a stereo effect. For example, the large screen may be a television, a computer, or a projector. After placing the plurality of speakers, the user may perform an operation on a display interface of the large screen based on locations of the plurality of speakers relative to the large screen, to set an audio channel corresponding to each speaker. The plurality of speakers play the different audio signals from the large screen to implement the stereo effect. However, in this process, the user needs to roughly learn of the locations of the plurality of speakers and perform manual setting, the user needs to have audio channel allocation knowledge, an operation is complex, and user experience is poor. As shown in FIG. 2, the user needs to allocate an audio-left channel to a left speaker and allocate an audio-right channel to a right speaker on the display interface of the large screen. Specifically, the display interface of the large screen may display an identifier of the left speaker, and the user allocates the audio-left channel to the left speaker based on the identifier of the left speaker; and the display interface of the large screen may display an identifier of the right speaker, and the user allocates the audio-right channel to the right speaker based on the identifier of the right speaker.

The following specifically describes an audio channel setting manner used by the user.

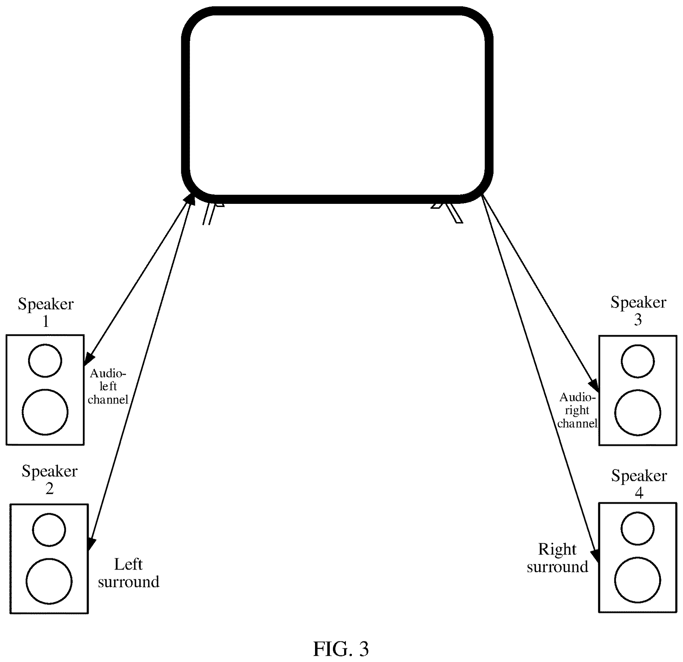

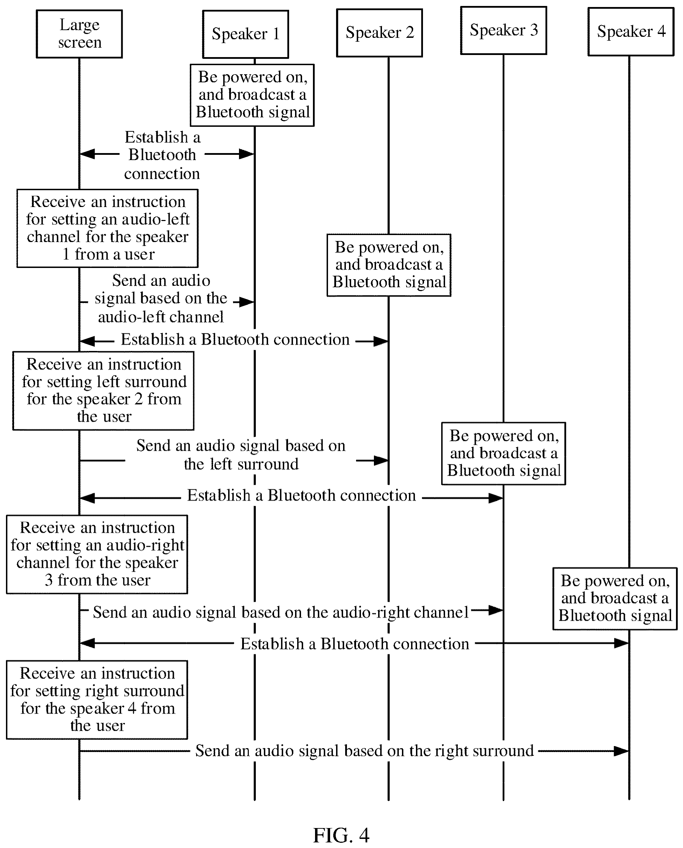

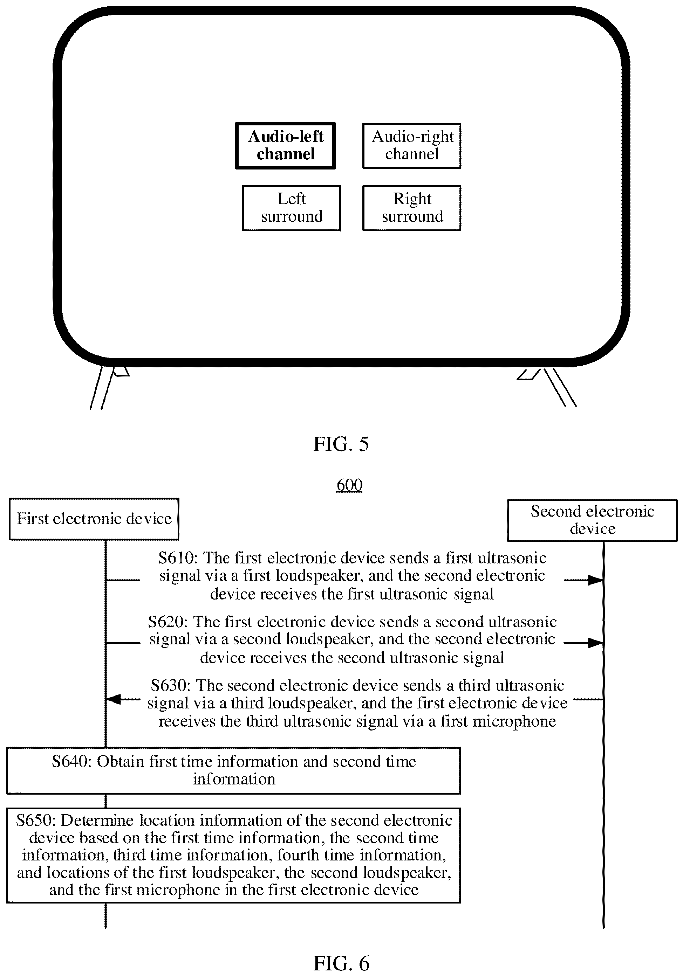

As shown in FIG. 3, there are four speakers around the large screen: a speaker 1, a speaker 2, a speaker 3, and a speaker 4. The user manually places the four speakers. As shown in FIG. 4, the speaker 1 is powered on, and the speaker 1 broadcasts a Bluetooth signal. After the large screen finds the Bluetooth signal broadcast by the speaker 1, the display interface of the large screen displays the found speaker 1. The user clicks to perform a connection establishment operation. In response to the operation of the user, the large screen establishes a Bluetooth connection to the speaker 1. The user sets an audio-left channel for the speaker 1 on the display interface of the large screen based on a location of the speaker 1, and the large screen receives an instruction for setting the audio-left channel for the speaker 1 from the user. For example, as shown in FIG. 5, the user selects an audio-left channel by using a remote control, to complete audio channel setting of the speaker 1. The large screen sends an audio signal to the speaker 1 through the established Bluetooth connection based on the audio-left channel set by the user for the speaker 1. The speaker 2 is powered on, and the speaker 2 broadcasts a Bluetooth signal. After the large screen finds the Bluetooth signal broadcast by the speaker 2, the display interface of the large screen displays the found speaker 2. The user clicks to perform a connection establishment operation. In response to the operation of the user, the large screen establishes a Bluetooth connection to the speaker 2. The user sets left surround for the speaker 2 on the display interface of the large screen based on a location of the speaker 2, and the large screen receives an instruction for setting the left surround for the speaker 2 from the user. For example, the user selects, by using the remote control, left surround shown in FIG. 5, to complete audio channel setting of the speaker 2. The large screen sends an audio signal to the speaker 2 through the established Bluetooth based on the left surround set by the user for the speaker 2. The speaker 3 is powered on, and the speaker 3 broadcasts a Bluetooth signal. After the large screen finds the Bluetooth signal broadcast by the speaker 3, the display interface of the large screen displays the found speaker 3. The user clicks to perform a connection establishment operation. In response to the operation of the user, the large screen establishes a Bluetooth connection to the speaker 3. The user sets an audio-right channel for the speaker 3 on the display interface of the large screen based on a location of the speaker 3, and the large screen receives an instruction for setting the audio-right channel for the speaker 3 from the user. For example, the user selects, by using the remote control, an audio-right channel shown in FIG. 5, to complete audio channel setting of the speaker 3. The large screen sends an audio signal to the speaker 3 based on the audio-right channel set by the user for the speaker 3. The speaker 4 is powered on, and the speaker 4 broadcasts a Bluetooth signal. After the large screen finds the Bluetooth signal broadcast by the speaker 4, the display interface of the large screen displays the found speaker 4. The user clicks to perform a connection establishment operation. In response to the operation of the user, the large screen establishes a Bluetooth connection to the speaker 4. The user sets right surround for the speaker 4 on the display interface of the large screen based on a location of the speaker 4, and the large screen receives an instruction for setting the right surround for the speaker 4 from the user. For example, the user selects, by using the remote control, right surround shown in FIG. 5, to complete audio channel setting of the speaker 4. The large screen sends an audio signal to the speaker 4 through the established Bluetooth connection based on the right surround set by the user for the speaker 4. In other words, the user needs to turn on each speaker in sequence, and set an audio channel for the speaker based on a relative location relationship between the speaker and the large screen. The operation is complex, and user experience is poor. Especially when a quantity of speakers is large, the user needs to perform a plurality of times of operations, and user experience is poor. Alternatively, in some embodiments, the four speakers may be powered on simultaneously, and the user may respectively allocate audio channels to the four speakers on the display interface of the large screen. However, in this scenario, the display interface of the large screen needs to simultaneously display identifiers of the four speakers, the user needs to learn of identifiers of speakers at different locations, and the user further needs to set an audio channel of each speaker based on a location of the speaker. In other words, this imposes the high requirement on the user. The user needs to learn of the identifiers of the different speakers at the different locations to set different audio channels for the speakers at the different locations, and the user also needs to perform a plurality of times of setting. User experience is poor.

It should be noted that the electronic device 100 in FIG. 1 may be the first electronic device in embodiments of this application, the electronic device 100 in FIG. 1 may be a second electronic device in embodiments of this application, or the electronic device 100 in FIG. 1 may be a third electronic device in embodiments of this application.

In embodiments of this application, the first electronic device may respectively send a first ultrasonic signal and a second ultrasonic signal via a first loudspeaker and a second loudspeaker, and the second electronic device may also send a third ultrasonic signal. The first electronic device may determine location information of the second electronic device based on first time information, second time information, third time information, fourth time information, and locations of the first loudspeaker, the second loudspeaker, and a first microphone in the first electronic device, where the first time information indicates a time difference obtained by subtracting a time point at which the second electronic device processes the third ultrasonic signal from a time point at which the second electronic device receives the first ultrasonic signal, the second time information indicates a time difference obtained by subtracting the time point at which the second electronic device processes the third ultrasonic signal from a time point at which the second electronic device receives the second ultrasonic signal, the third time information indicates a time difference obtained by subtracting a time point at which the first electronic device processes the first ultrasonic signal from a time point at which the first electronic device receives the third ultrasonic signal, and the fourth time information indicates a time difference obtained by subtracting a time point at which the first electronic device processes the second ultrasonic signal from the time point at which the first electronic device receives the third ultrasonic signal. In this way, a case in which a user needs to learn of the location information of the second electronic device is avoided, user experience can be improved, and operation complexity can be reduced. For example, in a scenario in which a large screen may play different audio signals via a plurality of speakers to implement a stereo effect, the first electronic device may be the large screen, and the second electronic device may be a speaker. The large screen may determine a location of the speaker based on the first time information, the second time information, the third time information, the fourth time information, and the locations of the first loudspeaker, the second loudspeaker, and the first microphone in the large screen, and the large screen may allocate an audio channel to the speaker based on the location of the speaker, to avoid a case in which the user needs to learn of locations of the speakers and manually allocate audio channels based on the locations of the speakers, so that user experience can be improved, and the complexity can be reduced.

With reference to FIG. 6, the following describes a location information determining method 600 in an embodiment of this application. As shown in FIG. 6, the method 600 includes the following steps.

S610: A first electronic device sends a first ultrasonic signal via a first loudspeaker, and a second electronic device receives the first ultrasonic signal.

Optionally, the first electronic device may record a first moment at which the first ultrasonic signal is sent via the first loudspeaker.

Optionally, after the first electronic device sends the first ultrasonic signal via the first loudspeaker, the first electronic device may receive, via a first microphone, the first ultrasonic signal sent by the first electronic device via the first loudspeaker, and the first electronic device may record a second moment at which the first ultrasonic signal is received via the first microphone.

Optionally, the first electronic device may be a large screen, and the second electronic device may be a speaker.

Optionally, the second electronic device may record a third moment at which the first ultrasonic signal is received. Optionally, the second electronic device may receive the first ultrasonic signal via a fourth microphone, and the second electronic device may record the third moment at which the first ultrasonic signal is received via the fourth microphone.

S620: The first electronic device sends a second ultrasonic signal via a second loudspeaker, and the second electronic device receives the second ultrasonic signal.

Optionally, the first electronic device may record a fourth moment at which the second ultrasonic signal is sent via the second loudspeaker.

Optionally, after the first electronic device sends the second ultrasonic signal via the second loudspeaker, the first electronic device may receive, via the first microphone, the second ultrasonic signal sent by the first electronic device via the second loudspeaker, and the first electronic device may record a fifth moment at which the second ultrasonic signal is received via the first microphone.

Optionally, the second electronic device may record a sixth moment at which the second ultrasonic signal is received. Optionally, the second electronic device may receive the second ultrasonic signal via a fifth microphone, and the second electronic device may record the sixth moment at which the second ultrasonic signal is received via the fifth microphone.

Optionally, before S610 and S620, the first electronic device may preconfigure, for the second electronic device, the first ultrasonic signal and the second ultrasonic signal that are to be sent by the first electronic device. In this way, the second electronic device can learn that the first electronic device is to send the first ultrasonic signal and the second ultrasonic signal. In other words, the first ultrasonic signal and the second ultrasonic signal that are for determining location information of the second electronic device may be preconfigured by the first electronic device for the second electronic device. For example, before S610 and S620, the first electronic device may establish a Bluetooth channel with the second electronic device, and the first electronic device may configure, for the second electronic device through the established Bluetooth channel, the first ultrasonic signal and the second ultrasonic signal that are to be sent by the first electronic device.

Optionally, S610 may be performed before or after S620, and the first ultrasonic signal may be the same as or different from the second ultrasonic signal.

Optionally, S610 and S620 may be simultaneously performed. In this case, the first ultrasonic signal may be different from the second ultrasonic signal. For example, frequencies at which the first electronic device sends the first ultrasonic signal and the second ultrasonic signal are different, or the first ultrasonic signal and the second ultrasonic signal are orthogonal signals.

S630: The second electronic device sends a third ultrasonic signal via a third loudspeaker, and the first electronic device receives the third ultrasonic signal via the first microphone.

Optionally, the second electronic device may send the third ultrasonic signal via the third loudspeaker, and a second microphone of the second electronic device may receive the third ultrasonic signal. Optionally, after sending the third ultrasonic signal via the third loudspeaker, the second electronic device may record a seventh moment at which the second electronic device sends the third ultrasonic signal; and after the second microphone of the second electronic device receives the third ultrasonic signal, the second electronic device may record an eighth moment at which the second microphone of the second electronic device receives the third ultrasonic signal.

Optionally, the third loudspeaker may be a loudspeaker corresponding to the fourth microphone for receiving the first ultrasonic signal and/or the fifth microphone for receiving the second ultrasonic signal. Optionally, that the third loudspeaker may be the loudspeaker corresponding to the fourth microphone for receiving the first ultrasonic signal and/or the fifth microphone for receiving the second ultrasonic signal includes that the third loudspeaker is a loudspeaker close to the fourth microphone and/or the fifth microphone, or includes that the third loudspeaker may be, if the fourth microphone receives the first ultrasonic signal before the fifth microphone receives the second ultrasonic signal, a loudspeaker close to the fourth microphone or that the third loudspeaker may be, if the fifth microphone receives the second ultrasonic signal before the fourth microphone receives the first ultrasonic signal, a loudspeaker close to the fifth microphone. Optionally, the fourth microphone and the fifth microphone may be a same microphone or different microphones.

Optionally, after sending the third ultrasonic signal, the second electronic device may record the seventh moment at which the second electronic device sends the third ultrasonic signal; and after receiving the third ultrasonic signal, the first electronic device may record a ninth moment at which the first electronic device receives the third ultrasonic signal.

Optionally, before S630, the first electronic device may preconfigure, for the second electronic device, the third ultrasonic signal to be sent by the second electronic device. In other words, the third ultrasonic signal for determining the location information of the second electronic device may be preconfigured by the first electronic device for the second electronic device. For example, before S630, the first electronic device may establish a Bluetooth channel with the second electronic device, and the first electronic device may configure, for the second electronic device through the established Bluetooth channel, the third ultrasonic signal to be sent by the second electronic device.

Optionally, the second electronic device may send the third ultrasonic signal and first identification information, and the first electronic device receives the first identification information and the third ultrasonic signal via the first microphone. If a device identified by the first identification information is the second electronic device, the first electronic device may determine that the third ultrasonic signal is sent by the second electronic device. Optionally, that the second electronic device may send the third ultrasonic signal and the first identification information, and the first electronic device receives the first identification information and the third ultrasonic signal via the first microphone includes: The second electronic device may send the third ultrasonic signal and the first identification information via the third loudspeaker at the seventh moment, and the first electronic device may receive the first identification information and the third ultrasonic signal via the first microphone at the ninth moment.

Optionally, S610 and S620 may be performed before or after S630, or S630 may be performed between S610 and S620. This is not limited in this embodiment of this application.

S640: The first electronic device obtains first time information and second time information.

The first time information indicates a time difference obtained by subtracting a time point at which the second electronic device processes the third ultrasonic signal from a time point at which the second electronic device receives the first ultrasonic signal, and the second time information indicates a time difference obtained by subtracting the time point at which the second electronic device processes the third ultrasonic signal from a time point at which the second electronic device receives the second ultrasonic signal.

The following describes, in two cases, the time point at which the second electronic device processes the third ultrasonic signal.

Case 1: Optionally, the time point at which the second electronic device processes the third ultrasonic signal may be a time point at which the second electronic device sends the third ultrasonic signal. Optionally, for example, if the time point at which the second electronic device receives the first ultrasonic signal is the third moment, and the time point at which the second electronic device sends the third ultrasonic signal is the seventh moment, the first time information indicates a time difference obtained by subtracting the seventh moment from the third moment. For example, if the second electronic device receives the first ultrasonic signal before the second electronic device sends the third ultrasonic signal, the time difference that is indicated by the first time information and that is obtained by subtracting the seventh moment from the third moment is a negative value. For another example, if the second electronic device receives the first ultrasonic signal after the second electronic device sends the third ultrasonic signal, the time difference that is indicated by the first time information and that is obtained by subtracting the seventh moment from the third moment is a positive value. Optionally, the second time information indicates the time point at which the second electronic device receives the second ultrasonic signal and the time point at which the second electronic device sends the third ultrasonic signal. For example, if the time point at which the second electronic device receives the second ultrasonic signal is the sixth moment, and the time point at which the second electronic device sends the third ultrasonic signal is the seventh moment, the second time information indicates a time difference obtained by subtracting the seventh moment from the sixth moment. For example, if the second electronic device receives the second ultrasonic signal before the second electronic device sends the third ultrasonic signal, the time difference that is indicated by the second time information and that is obtained by subtracting the seventh moment from the sixth moment is a negative value. For another example, if the second electronic device receives the second ultrasonic signal after the second electronic device sends the third ultrasonic signal, the time difference that is indicated by the second time information and that is obtained by subtracting the seventh moment from the sixth moment is a positive value.

Case 2: Optionally, the time point at which the second electronic device processes the third ultrasonic signal may be a time point at which the second electronic device receives, via the second microphone, the third ultrasonic signal sent by the second electronic device via the third loudspeaker, for example, the eighth moment. Optionally, the first time information indicates a time difference obtained by subtracting the time point at which the second electronic device receives, via the second microphone, the third ultrasonic signal sent by the second electronic device via the third loudspeaker from the time point at which the second electronic device receives the first ultrasonic signal. For example, if the time point at which the second electronic device receives the first ultrasonic signal is the third moment, and the time point at which the second electronic device receives, via the second microphone, the third ultrasonic signal sent by the second electronic device via the third loudspeaker is the eighth moment, the first time information indicates a time difference obtained by subtracting the eighth moment from the third moment. For example, if the second electronic device receives the first ultrasonic signal before the second electronic device receives, via the second microphone, the third ultrasonic signal sent by the second electronic device via the third loudspeaker, the time difference that is indicated by the first time information and that is obtained by subtracting the eighth moment from the third moment is a negative value. For another example, if the second electronic device receives the first ultrasonic signal after the second electronic device receives, via the second microphone, the third ultrasonic signal sent by the second electronic device via the third loudspeaker, the third moment and the eighth moment that are indicated by the first time information are positive values. Optionally, the second time information indicates the time point at which the second electronic device receives the second ultrasonic signal and the time point at which the second electronic device receives, via the second microphone, the third ultrasonic signal sent by the second electronic device via the third loudspeaker. For example, if the time point at which the second electronic device receives the second ultrasonic signal is the sixth moment, and the time point at which the second electronic device receives, via the second microphone, the third ultrasonic signal sent by the second electronic device via the third loudspeaker is the eighth moment, the second time information indicates a time difference obtained by subtracting the eighth moment from the sixth moment. For example, if the second electronic device receives the second ultrasonic signal before the second electronic device receives, via the second microphone, the third ultrasonic signal sent by the second electronic device via the third loudspeaker, the time difference that is indicated by the second time information and that is obtained by subtracting the eighth moment from the sixth moment is a negative value. For another example, if the second electronic device receives the second ultrasonic signal after the second electronic device receives, via the second microphone, the third ultrasonic signal sent by the second electronic device via the third loudspeaker, the time difference that is indicated by the second time information and that is obtained by subtracting the eighth moment from the sixth moment is a positive value.

Optionally, S640 includes: The second electronic device determines the first time information and the second time information, the second electronic device sends the first time information and the second time information to the first electronic device, and the first electronic device receives the first time information and the second time information from the second electronic device.

Optionally, S640 includes: The second electronic device sends a first recorded file to the first electronic device, where the first recorded file includes the first ultrasonic signal, the second ultrasonic signal, and the third ultrasonic signal. The first electronic device may determine the first time information and the second time information based on the first recorded file. Optionally, before S640, the second electronic device may establish a Bluetooth channel with the first electronic device. The first electronic device sends a first instruction to the second electronic device through the established Bluetooth channel, where the first instruction indicates the second electronic device to start recording. The second electronic device may start recording based on the first instruction. Recording ends after the second electronic device receives the first ultrasonic signal and the second ultrasonic signal and sends the third ultrasonic signal. The second electronic device may send the obtained recorded file to the first electronic device. Optionally, it may be specified that the second electronic device sends the third ultrasonic signal after receiving the first ultrasonic signal and the second ultrasonic signal, or it may be specified that the first electronic device may send the first ultrasonic signal and the second ultrasonic signal after the first electronic device receives the third ultrasonic signal sent by the second electronic device. In other words, a time interval between the time point at which the second electronic device sends the third ultrasonic signal and a time point at which the first electronic device sends the first ultrasonic signal is fixed, or a time interval between the time point at which the second electronic device sends the third ultrasonic signal and a time point at which the first electronic device sends the second ultrasonic signal is fixed. In this way, the first electronic device can determine a time range for sending the first ultrasonic signal and the second ultrasonic signal and receiving the third ultrasonic signal, and the first electronic device can indicate the second electronic device to perform recording within the time range. In this way, it can be ensured that the first recorded file obtained by the second electronic device through recording includes the first ultrasonic signal, the second ultrasonic signal, and the third ultrasonic signal.

Optionally, before S630, the first electronic device may learn of the third ultrasonic signal to be sent by the second electronic device. That the first electronic device may determine the first time information and the second time information based on the first recorded file includes: The first electronic device may determine, based on the pre-learned third ultrasonic signal and the sent first ultrasonic signal, the difference that is in the first recorded file and that is obtained by subtracting the time point at which the second electronic device receives, via the second microphone, the third ultrasonic signal sent by the third loudspeaker of the second electronic device from the time point at which the second electronic device receives the first ultrasonic signal, where the first time information indicates the difference obtained by subtracting the time point at which the second electronic device receives, via the second microphone, the third ultrasonic signal sent by the third loudspeaker of the second electronic device from the time point at which the second electronic device receives the first ultrasonic signal; and the first electronic device may determine, based on the pre-learned third ultrasonic signal and the sent second ultrasonic signal, a difference that is in the first recorded file and that is obtained by subtracting the time point at which the second electronic device receives, via the second microphone, the third ultrasonic signal sent by the third loudspeaker of the second electronic device from the time point at which the second electronic device receives the second ultrasonic signal, where the second time information indicates the difference obtained by subtracting the time point at which the second electronic device receives, via the second microphone, the third ultrasonic signal sent by the third loudspeaker of the second electronic device from the time point at which the second electronic device receives the second ultrasonic signal.

S650: The first electronic device determines the location information of the second electronic device based on the first time information, the second time information, third time information, fourth time information, and locations of the first loudspeaker, the second loudspeaker, and the first microphone in the first electronic device.

Optionally, S650 may include: The first electronic device determines the location information of the second electronic device based on the first time information, the second time information, the third time information, the fourth time information, the locations of the first loudspeaker, the second loudspeaker, and the first microphone in the first electronic device, and a location of a component of the second electronic device in the second electronic device. Optionally, the component of the second electronic device may include at least one of the second microphone, the fourth microphone, the fifth microphone, or the third loudspeaker. In other words, in a process of determining a location of the second electronic device, the first electronic device may determine the location of the second electronic device based on not only the locations of the components of the first electronic device in the first electronic device but also the location of the component of the second electronic device in the second electronic device.

The third time information indicates a time difference obtained by subtracting a time point at which the first electronic device processes the first ultrasonic signal from a time point at which the first electronic device receives the third ultrasonic signal, and the fourth time information indicates a time difference obtained by subtracting a time point at which the first electronic device processes the second ultrasonic signal from the time point at which the first electronic device receives the third ultrasonic signal.

The following describes, in two cases, the time point at which the first electronic device processes the first ultrasonic signal.

Case 1: Optionally, the time point at which the first electronic device processes the first ultrasonic signal may be the time point at which the first electronic device sends the first ultrasonic signal, for example, the first moment. Optionally, the third time information indicates a time difference obtained by subtracting the time point at which the first electronic device sends the first ultrasonic signal via the first loudspeaker from the time point at which the first electronic device receives the third ultrasonic signal. For example, if the time point at which the first electronic device sends the first ultrasonic signal via the first loudspeaker is the first moment, and the time point at which the first electronic device receives the third ultrasonic signal is the ninth moment, the third time information indicates a time difference obtained by subtracting the first moment from the ninth moment. For example, if the first electronic device sends the first ultrasonic signal via the first loudspeaker before the first electronic device receives the third ultrasonic signal, the time difference that is indicated by the third time information and that is obtained by subtracting the first moment from the ninth moment is a positive value. For another example, if the first electronic device sends the first ultrasonic signal via the first loudspeaker after the first electronic device receives the third ultrasonic signal, the time difference that is indicated by the third time information and that is obtained by subtracting the first moment from the ninth moment is a negative value.

Case 2: Optionally, the time point at which the first electronic device processes the first ultrasonic signal may be a time point at which the first microphone of the first electronic device receives the first ultrasonic signal, for example, the second moment. Optionally, the third time information indicates a time difference obtained by subtracting the time point at which the first microphone of the first electronic device receives the first ultrasonic signal sent by the first loudspeaker of the first electronic device from the time point at which the first electronic device receives the third ultrasonic signal. For example, if the time point at which the first microphone of the first electronic device receives the first ultrasonic signal sent by the first loudspeaker of the first electronic device is the second moment, and the time point at which the first electronic device receives the third ultrasonic signal is the ninth moment, the third time information indicates a time difference obtained by subtracting the second moment from the ninth moment. For example, if the first microphone of the first electronic device receives the first ultrasonic signal sent by the first loudspeaker of the first electronic device before the first microphone of the first electronic device receives the third ultrasonic signal, the time difference that is indicated by the third time information and that is obtained by subtracting the second moment from the ninth moment is a positive value. For another example, if the first microphone of the first electronic device receives the first ultrasonic signal sent by the first loudspeaker of the first electronic device after the first microphone of the first electronic device receives the third ultrasonic signal, the time difference that is indicated by the third time information and that is obtained by subtracting the second moment from the ninth moment is a negative value.

The following describes, in two cases, the time point at which the first electronic device processes the second ultrasonic signal.

Case 1: Optionally, the time point at which the first electronic device processes the second ultrasonic signal may be the time point at which the first electronic device sends the second ultrasonic signal, for example, the fourth moment. Optionally, the fourth time information indicates a time difference obtained by subtracting the time point at which the first electronic device sends the second ultrasonic signal via the second loudspeaker from the time point at which the first electronic device receives the third ultrasonic signal. For example, if the time point at which the first electronic device sends the second ultrasonic signal via the second loudspeaker is the fourth moment, and the time point at which the first electronic device receives the third ultrasonic signal is the ninth moment, the fourth time information indicates a time difference obtained by subtracting the fourth moment from the ninth moment. For example, if the first electronic device sends the second ultrasonic signal via the second loudspeaker before the first electronic device receives the third ultrasonic signal, the time difference that is indicated by the fourth time information and that is obtained by subtracting the fourth moment from the ninth moment is a positive value. For another example, if the first electronic device sends the second ultrasonic signal via the second loudspeaker after the first electronic device receives the third ultrasonic signal, the time difference that is indicated by the fourth time information and that is obtained by subtracting the fourth moment from the ninth moment is a negative value.

Case 2: Optionally, the time point at which the first electronic device processes the second ultrasonic signal may be a time point at which the first microphone of the first electronic device receives the second ultrasonic signal sent by the second loudspeaker of the first electronic device, for example, the fifth moment. Optionally, the fourth time information indicates a time difference obtained by subtracting the time point at which the first microphone of the first electronic device receives the second ultrasonic signal sent by the second loudspeaker of the first electronic device from the time point at which the first electronic device receives the third ultrasonic signal. For example, if the time point at which the first microphone of the first electronic device receives the second ultrasonic signal sent by the second loudspeaker of the first electronic device is the fifth moment, and the time point at which the first electronic device receives the third ultrasonic signal is the ninth moment, the fourth time information indicates a time difference obtained by subtracting the fifth moment from the ninth moment. For example, if the first microphone of the first electronic device receives the second ultrasonic signal sent by the second loudspeaker of the first electronic device before the first microphone of the first electronic device receives the third ultrasonic signal, the time difference that is indicated by the fourth time information and that is obtained by subtracting the fifth moment from the ninth moment is a positive value. For another example, if the first microphone of the first electronic device receives the second ultrasonic signal sent by the second loudspeaker of the first electronic device after the first microphone of the first electronic device receives the third ultrasonic signal, the time difference that is indicated by the fourth time information and that is obtained by subtracting the fifth moment from the ninth moment is a negative value.

Optionally, the location information of the second electronic device may indicate coordinates of the second electronic device.

Optionally, the location information of the second electronic device may indicate an angle of the second electronic device.

Optionally, the location information of the second electronic device may indicate a distance between the second electronic device and the first electronic device.

Optionally, the location information of the second electronic device may indicate an angle of the second electronic device and a distance between the second electronic device and the first electronic device.

The following describes S650 in four cases based on the time point at which the first electronic device processes the first ultrasonic signal, the time point at which the first electronic device processes the second ultrasonic signal, and the time point at which the second electronic device processes the third ultrasonic signal.

(a) The time point at which the first electronic device processes the first ultrasonic signal corresponds to the descriptions in the case 1, the time point at which the first electronic device processes the second ultrasonic signal corresponds to the descriptions in the case 1, and the time point at which the second electronic device processes the third ultrasonic signal corresponds to the descriptions in the case 1.

In other words, in (a), the time point at which the first electronic device processes the first ultrasonic signal may be the time point at which the first electronic device sends the first ultrasonic signal, the time point at which the first electronic device processes the second ultrasonic signal may be the time point at which the first electronic device sends the second ultrasonic signal, and the time point at which the second electronic device processes the third ultrasonic signal may be the time point at which the second electronic device sends the third ultrasonic signal. In this case, S650 includes: The first electronic device determines the location information of the second electronic device based on the first time information, the second time information, the third time information, the fourth time information, an ultrasonic-signal propagation velocity, and the locations of the first loudspeaker, the second loudspeaker, and the first microphone in the first electronic device.

Optionally, in (a), S650 includes: The first electronic device determines a sum of a first distance and a second distance based on the first time information and the third time information, where the first distance is a distance between the first loudspeaker and the second electronic device, and the second distance is a distance between the first microphone and the second electronic device. The first electronic device determines a sum of a third distance and the second distance based on the second time information and the fourth time information, where the third distance is a distance between the second loudspeaker and the second electronic device. The first electronic device determines the location information of the second electronic device based on the sum of the first distance and the second distance, the sum of the third distance and the second distance, and the locations of the first loudspeaker, the second loudspeaker, and the first microphone in the first electronic device. The first distance, the second distance, and the third distance may be unknown. In other words, the first electronic device may not determine specific values of the first distance, the second distance, and the third distance, but the first electronic device may determine the sum of the first distance and the second distance and the sum of the second distance and the third distance.

Optionally, that the first electronic device determines the sum of the first distance and the second distance based on the first time information and the third time information includes: The first electronic device determines the sum of the first distance and the second distance based on the first time information, the third time information, and the ultrasonic-signal propagation velocity. That the first electronic device determines the sum of the second distance and the third distance based on the second time information and the fourth time information includes: The first electronic device determines the sum of the second distance and the third distance based on the second time information, the fourth time information, and the ultrasonic-signal propagation velocity.

For example, the time point at which the first electronic device sends the first ultrasonic signal is $t_1$, the time point at which the second electronic device receives the first ultrasonic signal is $t_3$, the time point at which the first electronic device sends the second ultrasonic signal is $t_4$, the time point at which the second electronic device receives the second ultrasonic signal is $t_6$, the time point at which the second electronic device sends the third ultrasonic signal is $t_7$, and the time point at which the first electronic device receives the third ultrasonic signal is $t_9$. The first time information indicates a time difference obtained by subtracting $t_7$ from $t_3$. If the second electronic device receives the first ultrasonic signal before the second electronic device sends the third ultrasonic signal, $t_3$-$t_7$ indicated by the first time information is a negative value. If the second electronic device receives the first ultrasonic signal after the second electronic device sends the third ultrasonic signal, $t_3$-$t_7$ indicated by the first time information is a positive value. The second time information indicates a time difference obtained by subtracting $t_7$ from $t_6$. If the second electronic device receives the second ultrasonic signal before the second electronic device sends the third ultrasonic signal, $t_6$-$t_7$ indicated by the second time information is a negative value. If the second electronic device receives the second ultrasonic signal after the second electronic device sends the third ultrasonic signal, $t_6$-$t_7$ indicated by the second time information is a positive value. The third time information indicates a time difference obtained by subtracting $t_1$ from $t_9$. If the first electronic device sends the first ultrasonic signal via the first loudspeaker before the first electronic device receives the third ultrasonic signal, $t_9$-$t_1$ indicated by the third time information is a positive value. For another example, if the first electronic device sends the first ultrasonic signal via the first loudspeaker after the first electronic device receives the third ultrasonic signal, $t_9$-$t_1$ indicated by the third time information is a negative value. The fourth time information indicates a time difference obtained by subtracting $t_4$ from $t_9$. If the first electronic device sends the second ultrasonic signal via the second loudspeaker before the first electronic device receives the third ultrasonic signal, $t_9$-$t_4$ indicated by the fourth time information is a positive value. For another example, if the first electronic device sends the second ultrasonic signal via the second loudspeaker after the first electronic device receives the third ultrasonic signal, $t_9$-$t_4$ indicated by the fourth time information is a negative value. Coordinates of the first loudspeaker of the first electronic device are $(d_1, 0)$, coordinates of the second loudspeaker of the first electronic device are $(d_2, 0)$, and coordinates of the first microphone of the first electronic device are $(d_3, 0)$. The first electronic device may determine the location information of the second electronic device based on $t_3$-$t_7$, $t_6$-$t_7$, $t_9$-$t_1$, $t_9$-$t_4$, $(d_1, 0)$, $(d_2, 0)$, and $(d_3, 0)$. That the first electronic device may determine the location information of the second electronic device based on $t_3$-$t_7$, $t_6$-$t_7$, $t_9$-$t_1$, $t_9$-$t_4$, $(d_1, 0)$, $(d_2, 0)$, and $(d_3, 0)$ includes: The first electronic device may determine the sum of the first distance and the second distance based on $t_3$-$t_7$, $t_9$-$t_1$, and $v$, and determine the sum of the second distance and the third distance based on $t_6$-$t_7$, $t_9$-$t_4$, and $v$. $v$ is the ultrasonic-signal propagation velocity.

(b) The time point at which the first electronic device processes the first ultrasonic signal corresponds to the descriptions in the case 2, the time point at which the first electronic device processes the second ultrasonic signal corresponds to the descriptions in the case 2, and the time point at which the second electronic device processes the third ultrasonic signal corresponds to the descriptions in the case 1.

In other words, in (b), the time point at which the first electronic device processes the first ultrasonic signal may be the time point at which the first microphone of the first electronic device receives the first ultrasonic signal sent by the first loudspeaker of the first electronic device, the time point at which the first electronic device processes the second ultrasonic signal may be the time point at which the first microphone of the first electronic device receives the second ultrasonic signal sent by the second loudspeaker of the first electronic device, and the time point at which the second electronic device processes the third ultrasonic signal may be the time point at which the second electronic device sends the third ultrasonic signal. In this case, S650 includes: The first electronic device determines the location information of the second electronic device based on the first time information, the second time information, the third time information, the fourth time information, a distance from the first loudspeaker to the first microphone, a distance from the second loudspeaker to the first microphone, and the locations of the first loudspeaker, the second loudspeaker, and the first microphone in the first electronic device. Optionally, that the first electronic device determines the location information of the second electronic device based on the first time information, the second time information, the third time information, the fourth time information, the distance from the first loudspeaker to the first microphone, the distance from the second loudspeaker to the first microphone, and the locations of the first loudspeaker, the second loudspeaker, and the first microphone in the first electronic device includes: The first electronic device determines the location information of the second electronic device based on the first time information, the second time information, the third time information, the fourth time information, the distance from the first loudspeaker to the first microphone, the distance from the second loudspeaker to the first microphone, an ultrasonic-signal propagation velocity, and the locations of the first loudspeaker, the second loudspeaker, and the first microphone in the first electronic device.

Optionally, S650 includes: The first electronic device determines a sum of a first distance and a second distance based on the first time information, the third time information, and the distance between the first loudspeaker and the first microphone, where the first distance is a distance between the first loudspeaker and the second electronic device, and the second distance is a distance between the first microphone and the second electronic device. The first electronic device determines a sum of a third distance and the second distance based on the second time information, the fourth time information, and the distance between the second loudspeaker and the first microphone, where the third distance is a distance between the second loudspeaker and the second electronic device. The location information of the second electronic device is determined based on the sum of the first distance and the second distance, the sum of the third distance and the second distance, and the locations of the first loudspeaker, the second loudspeaker, and the first microphone in the first electronic device. The first distance, the second distance, and the third distance may be unknown. In other words, the first electronic device may not determine specific values of the first distance, the second distance, and the third distance, but the first electronic device may determine the sum of the first distance and the second distance and the sum of the second distance and the third distance.

Optionally, that the first electronic device determines the sum of the first distance and the second distance based on the first time information, the third time information, and the distance between the first loudspeaker and the first microphone includes: The first electronic device determines the sum of the first distance and the second distance based on the first time information, the third time information, the ultrasonic-signal propagation velocity, and the distance between the first loudspeaker and the first microphone. That the first electronic device determines the sum of the second distance and the third distance based on the second time information, the fourth time information, and the distance between the second loudspeaker and the first microphone includes: The first electronic device determines the sum of the second distance and the third distance based on the second time information, the fourth time information, the ultrasonic-signal propagation velocity, and the distance between the second loudspeaker and the first microphone.

For example, the time point at which the first loudspeaker of the first electronic device sends the first ultrasonic signal is $t_1$, the time point at which the first microphone of the first electronic device receives the first ultrasonic signal sent by the first loudspeaker of the first electronic device is $t_2$, the time point at which the second electronic device receives the first ultrasonic signal is $t_3$, the time point at which the first electronic device sends the second ultrasonic signal is $t_4$, the time point at which the first microphone of the first electronic device receives the second ultrasonic signal sent by the second loudspeaker of the first electronic device is $t_5$, the time point at which the second electronic device receives the second ultrasonic signal is $t_6$, the time point at which the second electronic device sends the third ultrasonic signal is $t_7$, and the time point at which the first electronic device receives the third ultrasonic signal is $t_9$. The first time information indicates a time difference obtained by subtracting $t_7$ from $t_3$. If the second electronic device receives the first ultrasonic signal before the second electronic device sends the third ultrasonic signal, $t_3$-$t_7$ indicated by the first time information is a negative value. If the second electronic device receives the first ultrasonic signal after the second electronic device sends the third ultrasonic signal, $t_3$-$t_7$ indicated by the first time information is a positive value. The second time information indicates a time difference obtained by subtracting $t_7$ from $t_6$. If the second electronic device receives the second ultrasonic signal before the second electronic device sends the third ultrasonic signal, $t_6$-$t_7$ indicated by the second time information is a negative value. If the second electronic device receives the second ultrasonic signal after the second electronic device sends the third ultrasonic signal, $t_6$-$t_7$ indicated by the second time information is a positive value. The third time information indicates a time difference obtained by subtracting $t_2$ from $t_9$. If the first electronic device receives, via the first microphone, the first ultrasonic signal sent by the first loudspeaker of the first electronic device before the first electronic device receives the third ultrasonic signal, $t_9$-$t_2$ indicated by the third time information is a positive value. For another example, if the first electronic device receives, via the first microphone, the first ultrasonic signal sent by the first loudspeaker of the first electronic device after the first electronic device receives the third ultrasonic signal, $t_9$-$t_2$ indicated by the third time information is a negative value. The fourth time information indicates a time difference obtained by subtracting $t_5$ from $t_9$. If the first electronic device receives, via the first microphone, the second ultrasonic signal sent by the second loudspeaker of the first electronic device before the first electronic device receives the third ultrasonic signal, $t_9$-$t_5$ indicated by the fourth time information is a positive value. For another example, if the first electronic device receives, via the first microphone, the second ultrasonic signal sent by the second loudspeaker of the first electronic device after the first electronic device receives the third ultrasonic signal, $t_9$-$t_5$ indicated by the fourth time information is a negative value. Coordinates of the first loudspeaker of the first electronic device are $(d_1, 0)$, coordinates of the second loudspeaker of the first electronic device are $(d_2, 0)$, coordinates of the first microphone of the first electronic device are $(d_3, 0)$, the distance from the first microphone of the first electronic device to the first loudspeaker of the first electronic device is $|d_1$-$d_3|$, and the distance from the first microphone of the first electronic device to the second loudspeaker of the first electronic device is $|d_2 - d_3|$. The first electronic device may determine the location information of the second electronic device based on $t_3$-$t_7$, $t_6$-$t_7$, $t_9$-$t_2$, $t_9$-$t_5$, $|d_1$-$d_3$, $|d_2 - d_3|$, $(d_1, 0)$, $(d_2, 0)$, and $(d_3, 0)$. The first electronic device may determine the sum of the first distance and the second distance based on $t_3$-$t_7$, $t_9$-$t_2$, $\mathit{l}$, and $|d_1$-$d_3|$, the first electronic device determines the sum of the second distance and the third distance based on $t_6$-$t_7$, $t_9$-$t_5$, and $|d_2$-$d_3|$, and the first electronic device determines the location information of the second electronic device based on the sum of the first distance and the second distance, the sum of the second distance and the third distance, $(d_1, 0)$, $(d_2, 0)$, and $(d_3, 0)$.

(c) The time point at which the first electronic device processes the first ultrasonic signal corresponds to the descriptions in the case 1, the time point at which the first electronic device processes the second ultrasonic signal corresponds to the descriptions in the case 1, and the time point at which the second electronic device processes the third ultrasonic signal corresponds to the descriptions in the case 2.

In other words, in (c), the time point at which the first electronic device processes the first ultrasonic signal may be the time point at which the first electronic device sends the first ultrasonic signal, the time point at which the first electronic device processes the second ultrasonic signal may be the time point at which the first electronic device sends the second ultrasonic signal, and the time point at which the second electronic device processes the third ultrasonic signal may be the time point at which the second electronic device receives, via the second microphone, the third ultrasonic signal sent by the second electronic device via the third loudspeaker. In this case, S650 includes: The first electronic device determines the location information of the second electronic device based on the first time information, the second time information, the third time information, the fourth time information, a distance from the third loudspeaker to the second microphone, and the locations of the first loudspeaker, the second loudspeaker, and the first microphone in the first electronic device. Optionally, that the first electronic device determines the location information of the second electronic device based on the first time information, the second time information, the third time information, the fourth time information, the distance from the third loudspeaker to the second microphone, and the locations of the first loudspeaker, the second loudspeaker, and the first microphone in the first electronic device includes: The first electronic device determines the location information of the second electronic device based on the first time information, the second time information, the third time information, the fourth time information, the distance from the third loudspeaker to the second microphone, an ultrasonic-signal propagation velocity, and the locations of the first loudspeaker, the second loudspeaker, and the first microphone in the first electronic device.

Optionally, in (c), S650 includes: The first electronic device determines a sum of a seventh distance and an eighth distance based on the first time information, the third time information, and the distance from the second microphone to the third loudspeaker, where the seventh distance is a distance between the first loudspeaker and the fourth microphone of the second electronic device, and the eighth distance is a distance between the third loudspeaker of the second electronic device and the first microphone. The first electronic device determines a sum of the eighth distance and a ninth distance based on the second time information, the fourth time information, and the distance from the second microphone to the third loudspeaker, where the ninth distance is a distance between the second loudspeaker and the fifth microphone of the second electronic device. The first electronic device determines the location information of the second electronic device based on the sum of the seventh distance and the eighth distance, the sum of the eighth distance and the ninth distance, the locations of the first loudspeaker, the second loudspeaker, and the first microphone in the first electronic device, and locations of the fourth microphone, the fifth microphone, and the third loudspeaker in the second electronic device. The seventh distance, the eighth distance, and the ninth distance may be unknown. In other words, the first electronic device may not determine specific values of the seventh distance, the eighth distance, and the ninth distance, but the first electronic device may determine the sum of the seventh distance and the eighth distance and the sum of the eighth distance and the ninth distance.

Optionally, that the first electronic device determines the sum of the seventh distance and the eighth distance based on the first time information, the third time information, and the distance from the second microphone to the third loudspeaker includes: The first electronic device determines the sum of the seventh distance and the eighth distance based on the first time information, the third time information, the ultrasonic-signal propagation velocity, and the distance from the second microphone to the third loudspeaker. That the first electronic device determines the sum of the eighth distance and the ninth distance based on the second time information, the fourth time information, and the distance from the second microphone to the third loudspeaker includes: The first electronic device determines the sum of the eighth distance and the ninth distance based on the second time information, the fourth time information, the ultrasonic-signal propagation velocity, and the distance from the second microphone to the third loudspeaker.

For example, the time point at which the first electronic device sends the first ultrasonic signal is $t_1$, the time point at which the second electronic device receives the first ultrasonic signal is $t_3$, the time point at which the first electronic device sends the second ultrasonic signal is $t_4$, the time point at which the second electronic device receives the second ultrasonic signal is $t_6$, the time point at which the second electronic device sends the third ultrasonic signal via the third loudspeaker is $t_7$, the time point at which the second electronic device receives, via the second microphone, the third ultrasonic signal sent by the second electronic device via the third loudspeaker is $t_8$, and the time point at which the first electronic device receives the third ultrasonic signal is $t_9$. The first time information indicates a time difference obtained by subtracting $t_8$ from $t_3$. If the second electronic device receives the first ultrasonic signal before the second electronic device receives, via the second microphone, the third ultrasonic signal sent by the second electronic device via the third loudspeaker, $t_3$-$t_8$ indicated by the first time information is a negative value. If the second electronic device receives the first ultrasonic signal after the second electronic device receives, via the second microphone, the third ultrasonic signal sent by the second electronic device via the third loudspeaker, $t_3$-$t_8$ indicated by the first time information is a positive value. The second time information indicates a time difference obtained by subtracting $t_8$ from $t_6$. If the second electronic device receives the second ultrasonic signal before the second electronic device sends the third ultrasonic signal, $t_6$-$t_8$ indicated by the second time information is a negative value. If the second electronic device receives the second ultrasonic signal after the second electronic device sends the third ultrasonic signal, $t_6$-$t_8$ indicated by the second time information is a positive value. The third time information indicates a time difference obtained by subtracting $t_1$ from $t_9$. If the first electronic device sends the first ultrasonic signal via the first loudspeaker before the first electronic device receives the third ultrasonic signal, $t_9$-$t_1$ indicated by the third time information is a positive value. For another example, if the first electronic device sends the first ultrasonic signal via the first loudspeaker after the first electronic device receives the third ultrasonic signal, $t_9$-$t_1$ indicated by the third time information is a negative value. The fourth time information indicates a time difference obtained by subtracting $t_4$ from $t_9$. If the first electronic device sends the second ultrasonic signal via the second loudspeaker before the first electronic device receives the third ultrasonic signal, $t_9$-$t_4$ indicated by the fourth time information is a positive value. For another example, if the first electronic device sends the second ultrasonic signal via the second loudspeaker after the first electronic device receives the third ultrasonic signal, $t_9$-$t_4$ indicated by the fourth time information is a negative value. Coordinates of the third loudspeaker of the second electronic device are $(x+l_1, y+l_2)$, coordinates of the second microphone of the second electronic device are $(x+l_3, y+l_4)$, coordinates of the fourth microphone of the second electronic device are $(x+l_5, y+l_6)$, coordinates of the fifth microphone of the second electronic device are $(x+l_7, y+l_8)$, the distance from the second microphone of the second electronic device to the third loudspeaker of the second electronic device is $\sqrt{(l_1 - l_3)^2 + (l_2 - l_4)^2}$, coordinates of a center point of the second electronic device are $(x, y)$, and $(x, y)$ is unknown. Coordinates of the first loudspeaker of the first electronic device are $(d_1, 0)$, coordinates of the second loudspeaker of the first electronic device are $(d_2, 0)$, and coordinates of the first microphone of the first electronic device are $(d_3, 0)$. The first electronic device may determine the location information of the second electronic device based on $t_3$-$t_8$, $t_6$-$t_8$, $t_9$-$t_1$, $t_9$-$t_4$, $(d_1, 0)$, $(d_2, 0)$, $(d_3, 0)$, and $\sqrt{(l_1 - l_3)^2 + (l_2 - l_4)^2}$. That the first electronic device may determine the location information of the second electronic device based on $t_3$-$t_8$, $t_6$-$t_8$, $t_9$-$t_1$, $t_9$-$t_4$, $(d_1, 0)$, $(d_2, 0)$, $(d_3, 0)$, and $\sqrt{(l_1 - l_3)^2 + (l_2 - l_4)^2}$ includes: The first electronic device determines the sum of the seventh distance and the eighth distance based on $t_3$-$t_8$, $t_9$-$t_1$, and $\sqrt{(l_1 - l_3)^2 + (l_2 - l_4)^2}$, determines the sum of the eighth distance and the ninth distance based on $t_6$-$t_8$, $t_9$-$t_4$, and $\sqrt{(l_1 - l_3)^2 + (l_2 - l_4)^2}$, and determines the location information of the second electronic device based on $(d_1, 0)$, $(d_2, 0)$, $(d_3, 0)$, $(x+l_1, y+l_2)$, $(x+l_5, y+l_6)$, $(x+l_7, y+l_8)$, the sum of the seventh distance and the eighth distance, and the sum of the eighth distance and the ninth distance.

(d) The time point at which the first electronic device processes the first ultrasonic signal corresponds to the descriptions in the case 2, the time point at which the first electronic device processes the second ultrasonic signal corresponds to the descriptions in the case 2, and the time point at which the second electronic device processes the third ultrasonic signal corresponds to the descriptions in the case 2.

In other words, in (d), the time point at which the first electronic device processes the first ultrasonic signal may be the time point at which the first microphone of the first electronic device receives the first ultrasonic signal sent by the first loudspeaker of the first electronic device, the time point at which the first electronic device processes the second ultrasonic signal may be the time point at which the first microphone of the first electronic device receives the second ultrasonic signal sent by the second loudspeaker of the first electronic device, and the time point at which the second electronic device processes the third ultrasonic signal may be the time point at which the second electronic device receives, via the second microphone, the third ultrasonic signal sent by the second electronic device via the third loudspeaker. In this case, S650 includes: The first electronic device determines the location information of the second electronic device based on the first time information, the second time information, the third time information, the fourth time information, a distance from the first loudspeaker to the first microphone, a distance from the second loudspeaker to the first microphone, a distance from the second microphone to the third loudspeaker, and the locations of the first loudspeaker, the second loudspeaker, and the first microphone in the first electronic device. Optionally, that the first electronic device determines the location information of the second electronic device based on the first time information, the second time information, the third time information, the fourth time information, the distance from the first loudspeaker to the first microphone, the distance from the second loudspeaker to the first microphone, the distance from the second microphone to the third loudspeaker, the locations of the first loudspeaker, the second loudspeaker, and the first microphone in the first electronic device, and locations of the third loudspeaker, the fourth microphone, and the fifth microphone in the second electronic device includes: The first electronic device determines the location information of the second electronic device based on the first time information, the second time information, the third time information, the fourth time information, the distance from the first loudspeaker to the first microphone, the distance from the second loudspeaker to the first microphone, the distance from the second microphone to the third loudspeaker, an ultrasonic-signal propagation velocity, the locations of the first loudspeaker, the second loudspeaker, and the first microphone in the first electronic device, and the locations of the third loudspeaker, the fourth microphone, and the fifth microphone in the second electronic device.

Optionally, in (d), S650 includes: The first electronic device determines a sum of a seventh distance and an eighth distance based on the first time information, the third time information, the distance from the second microphone to the third loudspeaker, and the distance from the first loudspeaker to the first microphone, where the seventh distance is a distance between the first loudspeaker and the fourth microphone of the second electronic device, and the eighth distance is a distance between the third loudspeaker of the second electronic device and the first microphone. The first electronic device determines a sum of the eighth distance and a ninth distance based on the second time information, the fourth time information, the distance from the second microphone to the third loudspeaker, and the distance from the second loudspeaker to the first microphone, where the ninth distance is a distance between the second loudspeaker and the fifth microphone of the second electronic device. The first electronic device determines the location information of the second electronic device based on the sum of the seventh distance and the eighth distance, the sum of the eighth distance and the ninth distance, the locations of the first loudspeaker, the second loudspeaker, and the first microphone in the first electronic device, and the locations of the fourth microphone, the fifth microphone, and the third loudspeaker in the second electronic device. The seventh distance, the eighth distance, and the ninth distance may be unknown. In other words, the first electronic device may not determine specific values of the seventh distance, the eighth distance, and the ninth distance, but the first electronic device may determine the sum of the seventh distance and the eighth distance and the sum of the eighth distance and the ninth distance.

Optionally, that the first electronic device determines the sum of the seventh distance and the eighth distance based on the first time information, the third time information, the distance from the second microphone to the third loudspeaker, and the distance from the first loudspeaker to the first microphone includes: The first electronic device determines the sum of the seventh distance and the eighth distance based on the first time information, the third time information, the ultrasonic-signal propagation velocity, the distance from the second microphone to the third loudspeaker, and the distance from the first loudspeaker to the first microphone. That the first electronic device determines the sum of the eighth distance and the ninth distance based on the second time information, the fourth time information, the distance from the second microphone to the third loudspeaker, and the distance from the second loudspeaker to the first microphone includes: The first electronic device determines the sum of the eighth distance and the ninth distance based on the second time information, the fourth time information, the ultrasonic-signal propagation velocity, the distance from the second microphone to the third loudspeaker, and the distance from the second loudspeaker to the first microphone.

For example, the time point at which the first loudspeaker of the first electronic device sends the first ultrasonic signal is $t_1$, the time point at which the first microphone of the first electronic device receives the first ultrasonic signal sent by the first loudspeaker of the first electronic device is $t_2$, the time point at which the second electronic device receives the first ultrasonic signal is $t_3$, the time point at which the first electronic device sends the second ultrasonic signal is $t_4$, the time point at which the first microphone of the first electronic device receives the second ultrasonic signal sent by the second loudspeaker of the first electronic device is $t_5$, the time point at which the second electronic device receives the second ultrasonic signal is $t_6$, the time point at which the second electronic device sends the third ultrasonic signal is $t_7$, the time point at which the second electronic device receives, via the second microphone, the third ultrasonic signal sent by the second electronic device via the third loudspeaker is $t_8$, and the time point at which the first electronic device receives the third ultrasonic signal is $t_9$. The first time information indicates a time difference obtained by subtracting $t_8$ from $t_3$. If the second electronic device receives the first ultrasonic signal before the second electronic device receives, via the second microphone, the third ultrasonic signal sent by the second electronic device via the third loudspeaker, $t_3$-$t_8$ indicated by the first time information is a negative value. If the second electronic device receives the first ultrasonic signal after the second electronic device receives, via the second microphone, the third ultrasonic signal sent by the second electronic device via the third loudspeaker, $t_3$-$t_8$ indicated by the first time information is a positive value. The second time information indicates a time difference obtained by subtracting $t_8$ from $t_6$ . If the second electronic device receives the second ultrasonic signal before the second electronic device receives, via the second microphone, the third ultrasonic signal sent by the second electronic device via the third loudspeaker, $t_6$-$t_8$ indicated by the second time information is a negative value. If the second electronic device receives the second ultrasonic signal after the second electronic device receives, via the second microphone, the third ultrasonic signal sent by the second electronic device via the third loudspeaker, $t_6$-$t_8$ indicated by the second time information is a positive value. The third time information indicates a time difference obtained by subtracting $t_2$ from $t_9$. If the first electronic device receives, via the first microphone, the first ultrasonic signal sent by the first loudspeaker of the first electronic device before the first electronic device receives the third ultrasonic signal, $t_9$-$t_2$ indicated by the third time information is a positive value. For another example, if the first electronic device receives, via the first microphone, the first ultrasonic signal sent by the first loudspeaker of the first electronic device after the first electronic device receives the third ultrasonic signal, $t_9$-$t_2$ indicated by the third time information is a negative value. The fourth time information indicates a time difference obtained by subtracting $t_5$ from $t_9$. If the first electronic device receives, via the first microphone, the second ultrasonic signal sent by the second loudspeaker of the first electronic device before the first electronic device receives the third ultrasonic signal, $t_9$-$t_5$ indicated by the fourth time information is a positive value. For another example, if the first electronic device receives, via the first microphone, the second ultrasonic signal sent by the second loudspeaker of the first electronic device after the first electronic device receives the third ultrasonic signal, $t_9$-$t_5$ indicated by the fourth time information is a negative value. Coordinates of the first loudspeaker of the first electronic device are $(d_1, 0)$, coordinates of the second loudspeaker of the first electronic device are $(d_2, 0)$, coordinates of the first microphone of the first electronic device are $(d_3, 0)$, coordinates of the third loudspeaker of the second electronic device are $(x+l_1, y+l_2)$, coordinates of a distance of the second microphone of the second electronic device are $(x+l_3, y+l_4)$, coordinates of the fourth microphone of the second electronic device are $(x+l_5, y+l_6)$, coordinates of the fifth microphone of the second electronic device are $(x+l_7, y+l_8)$, the distance from the first microphone of the first electronic device to the first loudspeaker of the first electronic device is $|d_1$-$d_3|$, the distance from the first microphone of the first electronic device to the second loudspeaker of the first electronic device is $|d_2 - d_3|$, and the distance from the second microphone of the second electronic device to the third loudspeaker of the second electronic device is $\sqrt{(l_1 - l_3)^2 + (l_2 - l_4)^2}$ . The first electronic device may determine the location information of the second electronic device based on $t_3$-$t_8$, $t_6$-$t_8$, $t_9$-$t_2$, $t_9$-$t_5$, $|d_1$-$d_3|$, $|d_2$-$d_3|$,

$\sqrt{(l_1 - l_3)^2 + (l_2 - l_4)^2}$ , $(d_1, 0)$, $(d_2,0)$, $(d_3,0)$, $(x+l_1, y+l_2)$, $(x+l_5, y+l_6)$, and $(x+l_7, y+l_8)$. That the first electronic device may determine the location information of the second electronic device based on $t_3$-$t_8$, $t_6$-$t_8$, $t_9$-$t_2$, $t_9$-$t_5$, $|d_1$-$d_3|$, $|d_2$-$d_3|$,

$\sqrt{(l_1 - l_3)^2 + (l_2 - l_4)^2}$ $(d_1, 0)$, $(d_2, 0)$, $(d_3, 0)$, $(x+l_1, y+l_2)$, $(x+l_5, y+l_6)$, and $(x+l_7, y+l_8)$ includes: The first electronic device determines the sum of the seventh distance and the eighth distance based on $t_3$-$t_8$, $t_9$-$t_2$, $\sqrt{(l_1 - l_3)^2 + (l_2 - l_4)^2}$ , and |

$d_1$-$d_3|$, determines the sum of the eighth distance and the ninth distance based on $t_6$-$t_8$, $t_9$-$t_5$, $\sqrt{(l_1 - l_3)^2 + (l_2 - l_4)^2}$ , and $|d_2$-$d_3|$, and determines the location information of the second electronic device based on $(d_1, 0)$, $(d_2, 0)$, $(d_3, 0)$, $(x+l_1, y+l_2)$, $(x+l_5,y+l_6)$, $(x+l_7, y+l_8)$, the sum of the seventh distance and the eighth distance, and the sum of the eighth distance and the ninth distance.

Optionally, S650 includes: The first electronic device determines the location information of the second electronic device based on an absolute value of the time difference that is indicated by the first time information and that is obtained by subtracting the time point at which the second electronic device processes the third ultrasonic signal from the time point at which the second electronic device receives the first ultrasonic signal, an absolute value of the time difference that is indicated by the second time information and that is obtained by subtracting the time point at which the second electronic device processes the third ultrasonic signal from the time point at which the second electronic device receives the second ultrasonic signal, an absolute value of the time difference that is indicated by the third time information and that is obtained by subtracting the time point at which the first electronic device processes the first ultrasonic signal from the time point at which the first electronic device receives the third ultrasonic signal, an absolute value of the time difference that is indicated by the fourth time information and that is obtained by subtracting the time point at which the first electronic device processes the second ultrasonic signal from the time point at which the first electronic device receives the third ultrasonic signal, and the locations of the first loudspeaker, the second loudspeaker, and the first microphone in the first electronic device.

Optionally, any two of the second microphone, the fourth microphone, and the fifth microphone of the second electronic device may be a same microphone or different microphones. This is not limited in this embodiment of this application.

Optionally, in the method 600, the first microphone of the first electronic device may receive the third ultrasonic signal sent by the third loudspeaker of the second electronic device, and the location information of the second electronic device is determined in S650. If the first electronic device includes a plurality of microphones, the first electronic device may determine location information of the second electronic device once for each microphone, and determine the location information of the second electronic device based on location information that is of the second electronic device and that is obtained a plurality of times. For example, the location information of the second electronic device is obtained by performing an averaging operation on the location information that is of the second electronic device and that is obtained the plurality of times. Alternatively, the first electronic device may determine the location information of the second electronic device based on signal quality of an ultrasonic signal. For example, a microphone 1 of the first electronic device receives the third ultrasonic signal of the second electronic device. In this case, the third time information indicates a time difference obtained by subtracting the time point at which the first electronic device processes the first ultrasonic signal from a time point at which the microphone 1 receives the third ultrasonic signal, and the fourth time information indicates a time difference obtained by subtracting the time point at which the first electronic device processes the second ultrasonic signal from the time point at which the microphone 1 receives the third ultrasonic signal. The first electronic device determines, based on the first time information, the second time information, the third time information, the fourth time information, and locations of the first loudspeaker, the second loudspeaker, and the microphone 1 in the first electronic device, location information that is of the second electronic device and that corresponds to the microphone 1. A microphone 2 of the first electronic device receives the third ultrasonic signal of the second electronic device. In this case, the third time information indicates a time difference obtained by subtracting the time point at which the first electronic device processes the first ultrasonic signal from a time point at which the microphone 2 receives the third ultrasonic signal, and the fourth time information indicates a time difference obtained by subtracting the time point at which the first electronic device processes the second ultrasonic signal from the time point at which the microphone 2 receives the third ultrasonic signal. The first electronic device may determine, based on the first time information, the second time information, the third time information, the fourth time information, and locations of the first loudspeaker, the second loudspeaker, and the microphone 2 in the first electronic device, location information that is of the second electronic device and that corresponds to the microphone 2. If signal quality of the third ultrasonic signal received by the microphone 1 is higher than signal quality of the third ultrasonic signal received by the microphone 2, the location information that is of the second electronic device and that corresponds to the microphone 1 is determined as the location information of the second electronic device. In other words, after the first electronic device sends the first ultrasonic signal and the second ultrasonic signal once, the plurality of microphones of the first electronic device may receive the third ultrasonic signal sent by the second electronic device, and the first electronic device may calculate the location information of the second electronic device once for each microphone. In other words, values of the ninth moment for different microphones in the method 600 are different, which may cause different location information that is of the second electronic device and that is obtained through calculation.

In some embodiments, the first electronic device may determine location information of a plurality of electronic devices. With reference to the method 600, if the first electronic device further determines location information of a third electronic device, the first electronic device may continue to send a fifth ultrasonic signal to the third electronic device via the first loudspeaker and send a sixth ultrasonic signal to the third electronic device via the second loudspeaker. Then, the third electronic device sends a seventh ultrasonic signal to the first electronic device. The first electronic device determines the location information of the third electronic device based on a method similar to the method 600. For example, the first electronic device may allocate an audio channel to each electronic device based on the location information of the plurality of electronic devices.

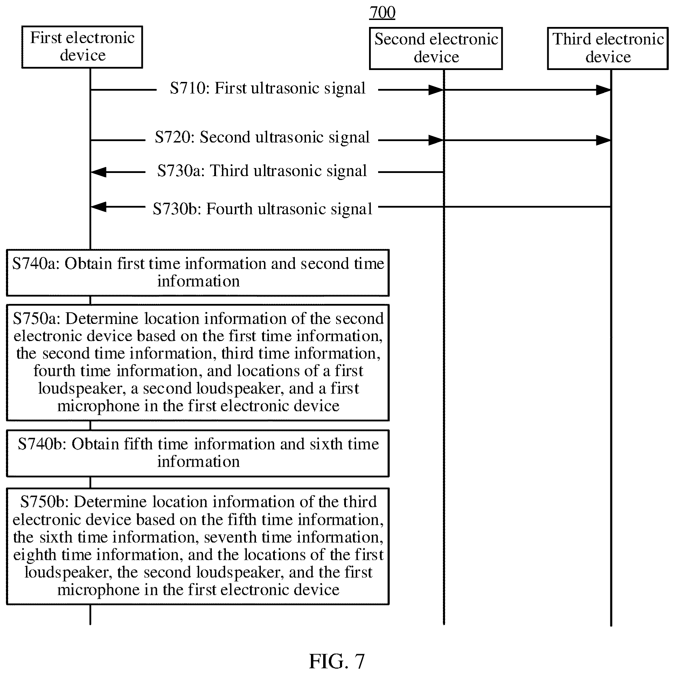

In some embodiments, the first electronic device may determine location information of a plurality of electronic devices. The first electronic device may send the first ultrasonic signal and the second ultrasonic signal, and both the second electronic device and a third electronic device may receive the first ultrasonic signal and the second ultrasonic signal. Then, the second electronic device sends a fourth ultrasonic signal, and the third electronic device sends a fifth ultrasonic signal. The first electronic device may determine the location information of the second electronic device based on the method 600, or may determine the location information of the second electronic device based on a method similar to the method 600. The following describes this embodiment with reference to a method 700 in FIG. 7. As shown in FIG. 7, the method 700 includes the following steps.

S710: A first electronic device sends a first ultrasonic signal via a first loudspeaker, a second electronic device receives the first ultrasonic signal, and a third electronic device receives the first ultrasonic signal.

Optionally, for sending the first ultrasonic signal by the first electronic device, refer to the descriptions in S610.

Optionally, that the third electronic device receives the first ultrasonic signal is similar to that the second electronic device receives the first ultrasonic signal. Refer to the descriptions in S610.

S720: The first electronic device sends a second ultrasonic signal via a second loudspeaker, the second electronic device receives the second ultrasonic signal, and the third electronic device receives the second ultrasonic signal.

Optionally, for sending the second ultrasonic signal by the first electronic device, refer to the descriptions in S620.

Optionally, that the third electronic device receives the second ultrasonic signal is similar to that the second electronic device receives the second ultrasonic signal. Refer to the descriptions in S620.

S730a is the same as S630.

S730b: The third electronic device sends a fourth ultrasonic signal, and the first electronic device receives the fourth ultrasonic signal.

A manner in which the third electronic device sends the fourth ultrasonic signal is similar to the manner in which the second electronic device sends the third ultrasonic signal. Refer to the descriptions in S630. To avoid redundancy, details are not described.

S740a is the same as S640.

S740b: The first electronic device obtains fifth time information and sixth time information.

Optionally, the fifth time information indicates a time difference obtained by subtracting a time point at which the third electronic device processes the fourth ultrasonic signal from a time point at which the third electronic device receives the first ultrasonic signal, the sixth time information indicates a time difference obtained by subtracting the time point at which the third electronic device processes the fourth ultrasonic signal from a time point at which the third electronic device receives the second ultrasonic signal, and the time point at which the third electronic device processes the fourth ultrasonic signal includes: a time point at which the third electronic device sends the fourth ultrasonic signal via the third loudspeaker or a time point at which a third microphone of the third electronic device receives the fourth ultrasonic signal.

The fifth time information is similar to the first time information in S640, and the sixth time information is similar to the second time information in S640. A manner in which the first electronic device obtains the fifth time information and the sixth time information is similar to the manner in which the first electronic device obtains the first time information and the second time information in S640. Refer to the descriptions in S640. To avoid redundancy, details are not described.

S750a is the same as S650.

S750b: The first electronic device determines location information of the third electronic device based on the fifth time information, the sixth time information, seventh time information, eighth time information, and the locations of the first loudspeaker, the second loudspeaker, and the first microphone in the first electronic device.

The seventh time information is similar to the third time information in S650, and the eighth time information is similar to the fourth time information in S650. A manner in which the first electronic device determines the location information of the third electronic device based on the fifth time information, the sixth time information, the seventh time information, the eighth time information, and the locations of the first loudspeaker, the second loudspeaker, and the first microphone in the first electronic device is similar to that in S650. Refer to the descriptions in S650. To avoid redundancy, details are not described.

Optionally, the first electronic device may determine the location information of the second electronic device and the location information of the third electronic device, and allocate audio channels to the second electronic device and the third electronic device based on the location information of the second electronic device and the location information of the third electronic device. By analogy, the first electronic device may determine location information of a plurality of electronic devices. For example, the first electronic device may determine, based on location information of each electronic device, whether the electronic device is on a left side or on a right side of the first electronic device and a relative distance relationship between any two electronic devices and the first electronic device. For example, the first electronic device is a large screen, and the plurality of electronic devices are four speakers. The large screen may allocate audio channels to the four speakers based on distances from the four speakers to the large screen and angles of the four speakers relative to the large screen. Specifically, the large screen determines, based on the angles of the four speakers relative to the large screen, whether the four speakers are on the left side or the right side of the large screen. Then, the large screen sets an audio-left channel for a closer speaker on the left side, sets left surround for a farther speaker on the left side, sets an audio-right channel for a closer speaker on the right side, and sets right surround for a farther speaker on the right side.

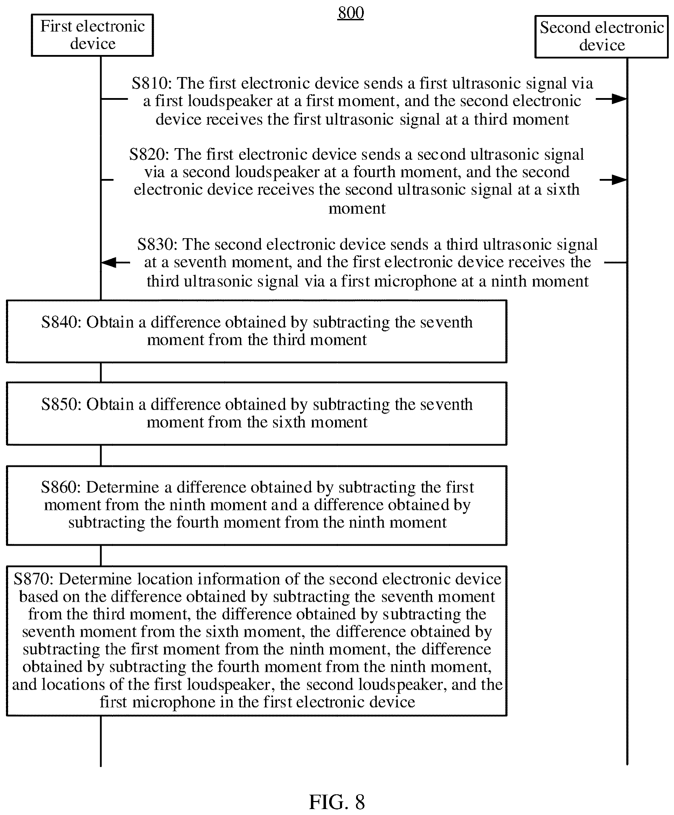

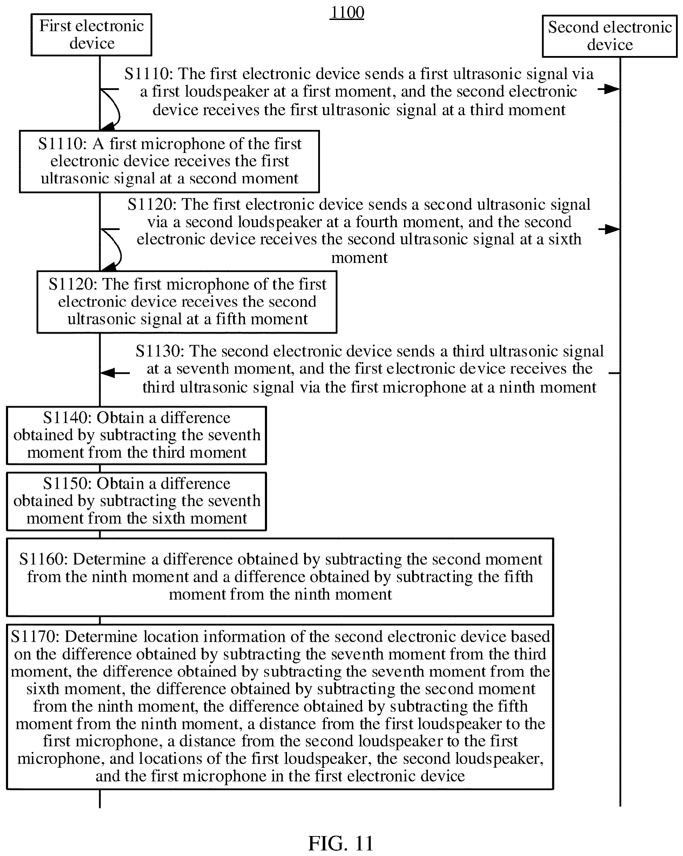

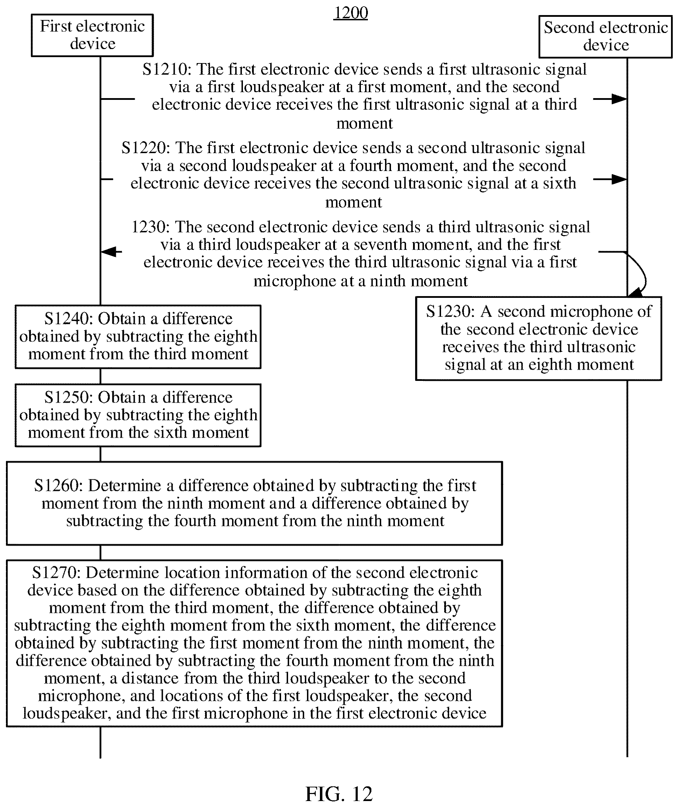

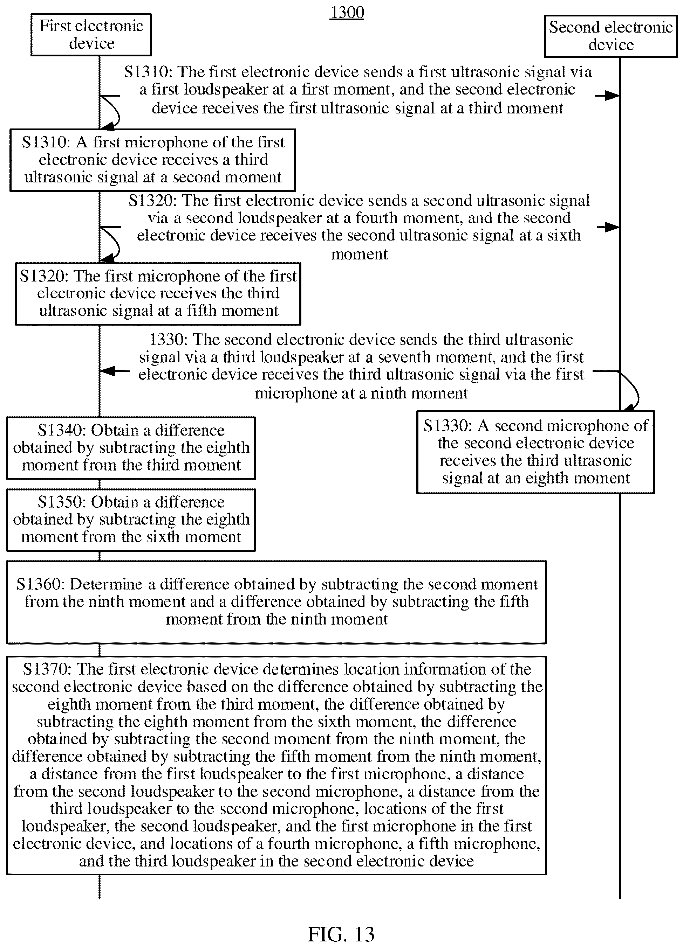

To better describe the foregoing method embodiments, the following provides specific descriptions with reference to FIG. 8 to FIG. 13. An example in which a first electronic device determines location information of a second electronic device is used for description in the following description process. That the first electronic device determines location information of another electronic device, for example, that the first electronic device determines location information of a third electronic device, is similar to determining the location information of the second electronic device. To avoid redundancy, details are not described. (a) in S650 is described in detail with reference to FIG. 8 to FIG. 10, (b) in S650 is described in detail with reference to FIG. 11, (c) in S650 is described in detail with reference to FIG. 12, and (d) in S650 is described in detail with reference to FIG. 13. As shown in FIG. 8, a method 800 includes the following steps.

S810: A first electronic device sends a first ultrasonic signal via a first loudspeaker at a first moment, and a second electronic device receives the first ultrasonic signal at a third moment.

S820: The first electronic device sends a second ultrasonic signal via a second loudspeaker at a fourth moment, and the second electronic device receives the second ultrasonic signal at a sixth moment.

After S810 and S820, the second electronic device may perform S830.

A sequence of S810 and S820 is not limited. S810 may be performed before or after S820, or S810 and S820 may be simultaneously performed. If S810 and S820 are simultaneously performed, the first ultrasonic signal is different from the second ultrasonic signal.

Optionally, before S810 and S820, the method 800 may further include: The first electronic device determines whether the second electronic device and the first electronic device are in same space. If the first electronic device determines that the second electronic device and the first electronic device are in the same space, S810 and S820 may be performed. If the first electronic device determines that the second electronic device and the first electronic device are not in the same space, S810 and S820 are not performed.

Optionally, before S810, the second electronic device may send a Bluetooth signal and an eighth ultrasonic signal to the first electronic device. The first electronic device determines, based on signal strength of the Bluetooth signal and signal strength of the eighth ultrasonic signal, whether the first electronic device and the second electronic device are in the same space. Because of wall obstruction, attenuation of the ultrasonic signal is far greater than attenuation of the Bluetooth signal. Therefore, if the signal strength of the Bluetooth signal is far higher than the signal strength of the eighth ultrasonic signal, it indicates that the first electronic device and the second electronic device are not in the same space. Optionally, the first electronic device may determine, based on a difference obtained by subtracting the signal strength of the eighth ultrasonic signal from the signal strength of the Bluetooth signal, whether the first electronic device and the second electronic device are in the same space.

For example, the signal strength of the Bluetooth signal is $\rho_B$, where $\rho_B = \dfrac{P_B W_B}{d^2}$, $P_B$ is a coefficient related to Bluetooth transmit power, the first electronic device can learn of $P_B$, $W_B$ is a Bluetooth attenuation coefficient caused by the wall obstruction, and $d$ is a distance from the first electronic device to the second electronic device. The signal strength of the eighth ultrasonic signal is $\rho_U$, where $\rho_U = \dfrac{P_U W_U}{d^2}$, $P_U$ is a coefficient related to ultrasonic transmit power, the first electronic device can learn of $P_U$, and $W_U$ is an ultrasonic attenuation coefficient caused by the wall obstruction. When the first electronic device and the second electronic device are in the same space, that is, when there is no wall obstruction between the first electronic device and the second electronic device, $W_B = 1$, and $W_U = 1$. When the first electronic device and the second electronic device are not in the same space, that is, when there is wall obstruction between the first electronic device and the second electronic device, ultrasonic attenuation is far greater than Bluetooth attenuation. Smaller $W_U$ indicates greater attenuation. Therefore, $W_U \ll W_B$. It can be learned that the first electronic device may determine, based on a ratio $\dfrac{\rho_B}{\rho_U}$ of the signal strength of the received Bluetooth signal to the signal strength of the received eighth ultrasonic signal, whether the first electronic device and the second electronic device are in the same space. Because $\dfrac{\rho_B}{\rho_U} = \dfrac{P_B W_B}{P_U W_U}$, in other words, $\dfrac{\rho_B}{\rho_U}$ is unrelated to the distance between the first electronic device and the second electronic device, and $P_U$ and $P_B$ are fixed values, $\dfrac{\rho_B}{\rho_U}$ is related to $\dfrac{W_B}{W_U}$. When there is no wall obstruction between the first electronic device and the second electronic device, $W_B = 1$, $W_U = 1$, and $\dfrac{\rho_B}{\rho_U} = \dfrac{P_B}{P_U}$. In other words, if the ratio of the signal strength of the Bluetooth signal received by the first electronic device to the signal strength of the eighth ultrasonic signal received by the first electronic device is equal to $\dfrac{P_B}{P_U}$, it indicates that the first electronic device and the second electronic device are in the same space. If $\dfrac{\rho_B}{\rho_U} = \dfrac{P_B W_B}{P_U W_U} >> \dfrac{P_B}{P_U}$ , it indicates that the first electronic device and the second electronic device are not in the same space. Optionally, the first electronic device may set a threshold $\sigma$, and the first electronic device may obtain $\sigma$ through testing. When $\dfrac{\rho_B}{\rho_U} > \sigma$ , it indicates that there is wall obstruction between the first electronic device and the second electronic device, and the first electronic device and the second electronic device are not in the same space. When $\dfrac{\rho_B}{\rho_U} \le \sigma$ , it indicates that there is no wall obstruction between the first electronic device and the second electronic device, and the first electronic device and the second electronic device are in the same space. Optionally, $\sigma = \dfrac{P_B}{P_U}$ .

It may be understood that, that the first electronic device determines whether the second electronic device and the first electronic device are in the same space is an optional step. The first electronic device may not determine whether the first electronic device and the second electronic device are in the same space. The first electronic device and the second electronic device are in the same space by default, or the method in this embodiment of this application may still be performed regardless of whether the first electronic device and the second electronic device are in the same space. In other words, even if the first electronic device and the second electronic device are not in the same space, the first electronic device may still determine location information of the second electronic device. For example, the first electronic device may still allocate an audio channel to the second electronic device based on the determined location information of the second electronic device.

S830: The second electronic device sends a third ultrasonic signal at a seventh moment, and the first electronic device receives the third ultrasonic signal via a first microphone at a ninth moment.

Optionally, S810 and S820 may be performed before S830, or S810 and S820 may be performed after S830. This is not limited in this embodiment of this application. If S810 and S820 are performed before S830, it indicates that the first electronic device first sends the first ultrasonic signal and the second ultrasonic signal and that the second electronic device may send the third ultrasonic signal after receiving the first ultrasonic signal and the second ultrasonic signal. If S810 and S820 are performed after S830, it indicates that the second electronic device first sends the third ultrasonic signal and that the first electronic device may send the first ultrasonic signal and the second ultrasonic signal after receiving the third ultrasonic signal sent by the second electronic device.

S840: The first electronic device obtains a difference obtained by subtracting the seventh moment from the third moment.

In this case, the first time information in the method 600 indicates the difference obtained by subtracting the seventh moment from the third moment.

Optionally, the second electronic device may send, to the first electronic device, indication information indicating the difference obtained by subtracting the seventh moment from the third moment.

S850: The first electronic device obtains a difference obtained by subtracting the seventh moment from the sixth moment.

In this case, the second time information in the method 600 indicates the difference obtained by subtracting the seventh moment from the sixth moment.

Optionally, the second electronic device may send, to the first electronic device, indication information indicating the difference obtained by subtracting the seventh moment from the sixth moment.

S860: The first electronic device determines a difference obtained by subtracting the first moment from the ninth moment and a difference obtained by subtracting the fourth moment from the ninth moment.

The third time information in the method 600 indicates the difference obtained by subtracting the first moment from the ninth moment, and the fourth time information in the method 600 indicates the difference obtained by subtracting the fourth moment from the ninth moment.

S870: The first electronic device determines the location information of the second electronic device based on the difference obtained by subtracting the seventh moment from the third moment, the difference obtained by subtracting the seventh moment from the sixth moment, the difference obtained by subtracting the first moment from the ninth moment, the difference obtained by subtracting the fourth moment from the ninth moment, and locations of the first loudspeaker, the second loudspeaker, and the first microphone in the first electronic device.

Optionally, S870 includes: The first electronic device determines the location information of the second electronic device based on the difference obtained by subtracting the seventh moment from the third moment, the difference obtained by subtracting the seventh moment from the sixth moment, the difference obtained by subtracting the first moment from the ninth moment, the difference obtained by subtracting the fourth moment from the ninth moment, an ultrasonic-signal propagation velocity, and the locations of the first loudspeaker, the second loudspeaker, and the first microphone in the first electronic device.

Optionally, that the first electronic device determines the location information of the second electronic device based on the difference obtained by subtracting the seventh moment from the third moment, the difference obtained by subtracting the seventh moment from the sixth moment, the difference obtained by subtracting the first moment from the ninth moment, the difference obtained by subtracting the fourth moment from the ninth moment, the ultrasonic-signal propagation velocity, and the locations of the first loudspeaker, the second loudspeaker, and the first microphone in the first electronic device includes: The first electronic device determines the location information of the second electronic device based on an absolute value of the difference obtained by subtracting the seventh moment from the third moment, an absolute value of the difference obtained by subtracting the seventh moment from the sixth moment, an absolute value of the difference obtained by subtracting the first moment from the ninth moment, an absolute value of the difference obtained by subtracting the fourth moment from the ninth moment, the ultrasonic-signal propagation velocity, and the locations of the first loudspeaker, the second loudspeaker, and the first microphone in the first electronic device.

The following describes, by using an example, a method for determining the location information of the second electronic device by the first electronic device.

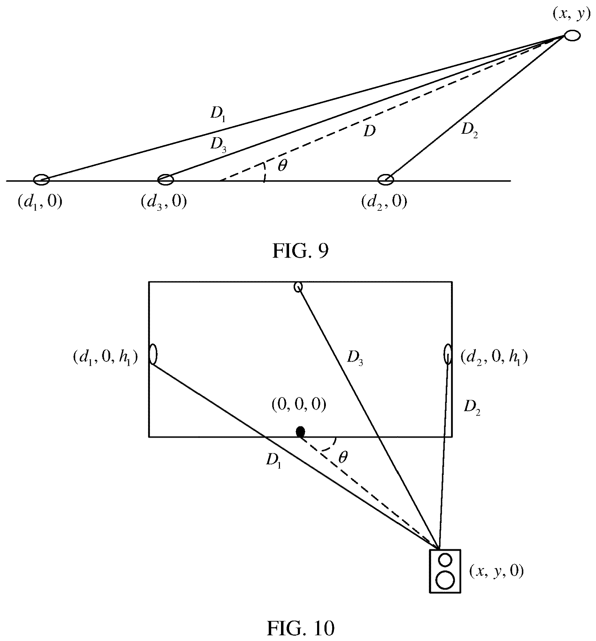

The first moment is $t_1$, the third moment is $t_3$, the fourth moment is $t_4$, the sixth moment is $t_6$, the seventh moment is $t_7$, and the ninth moment is $t_9$. As shown in FIG. 9, coordinates of the first loudspeaker of the first electronic device are $(d_1, 0)$, coordinates of the second loudspeaker of the first electronic device are $(d_2, 0)$, and coordinates of the first microphone of the first electronic device are $(d_3, 0)$, where coordinates of a midpoint between the first loudspeaker and the second loudspeaker may be $(0, 0)$, and the coordinates of the first loudspeaker, the coordinates of the second loudspeaker, and the coordinates of the first microphone may represent the locations in the first electronic device. The first loudspeaker may be understood as a left loudspeaker, the second loudspeaker may be understood as a right loudspeaker, and coordinates $(x, y)$ of the second electronic device are to-be-solved values. A volume of the second electronic device is less than a volume of the first electronic device. For example, the volume of the second electronic device may be less than a preset value. For example, the second electronic device is a speaker, and the first electronic device is a large screen. In this way, the second electronic device can be regarded as a point. In other words, a distance from the first loudspeaker to a fourth microphone of the second electronic device is equivalent to a distance from the first loudspeaker to the second electronic device, and a distance from the second loudspeaker to a fifth microphone of the second electronic device is equivalent to a distance from the second loudspeaker to the second electronic device. As shown in FIG. 9, the first distance from the first loudspeaker to the second electronic device is $D_1$, where $D_1 = \sqrt{(x - d_1)^2 + y^2}$; the third distance from the second loudspeaker to the second electronic device is $D_2$, where $D_2 = \sqrt{(x - d_2)^2 + y^2}$; and a second distance from the second electronic device to the first microphone is $D_3$, where $D_3 = \sqrt{(x - d_3)^2 + y^2}$. In this case, there is a formula (1) and a formula (2).

$$D_1 + D_3 = \left\| \left| t_9 - t_1 \right| - \left| t_3 - t_7 \right| \right\| v \tag{1}$$

$$D_2 + D_3 = \left\| \left| t_9 - t_4 \right| - \left| t_6 - t_7 \right| \right\| v \tag{2}$$

If S810 and S820 may be performed before S830, that is, if the first electronic device sends the first ultrasonic signal and the second ultrasonic signal before the second electronic device sends the third ultrasonic signal, the formula (1) may be replaced with a formula (3), and the formula (2) may be replaced with a formula (4).

$$D_1 + D_3 = ((t_9 - t_1) - (t_7 - t_3))v \tag{3}$$

$$D_2 + D_3 = ((t_9 - t_4) - (t_7 - t_6))v \tag{4}$$

If S810 and S820 may be performed after S830, that is, if the first electronic device sends the first ultrasonic signal and the second ultrasonic signal after the second electronic device sends the third ultrasonic signal, the formula (1) may be replaced with a formula (5), and the formula (2) may be replaced with a formula (6).

$$D_1 + D_3 = ((t_1 - t_9) - (t_3 - t_7))v \tag{5}$$

$$D_2 + D_3 = ((t_4 - t_9) - (t_6 - t_7))v \tag{6}$$

$v$ is the ultrasonic-signal propagation velocity. Right sides of the formula (1) to the formula (6) are all known. For brevity of description, the right side of the formula (1), the formula (3), or the formula (5) may be denoted as A. That is, in the formula (1), $A = ||t_9-t_1|-|t_3-t_7||v$; in the formula (3), $A = ((t_9-t_1)-(t_7-t_3))v$; and in the formula (5), $A = ((t_1-t_9)-(t_3-t_7))v$. In other words, A is a sum of the first distance and the second distance. The right side of the formula (2), the formula (4), or the formula (6) may be denoted as $B$. That is, in the formula (2), $B = ||t_9-t_4|-|t_6-t_7||v$; in the formula (4), $B = ((t_9-t_4)-(t_7-t_6))v$; and in the formula (6), $B = ((t_4-t_9)-(t_6-t_7))v$. In other words, $B$ is a sum of the second distance and the third distance.
The formula (1), the formula (3), or the formula (5) is transformed into a formula (7), and the formula (2), the formula (4), or the formula (6) is transformed into a formula (8).

$$\sqrt{(x-d_1)^2 + y^2} + \sqrt{(x-d_3)^2 + y^2} = A \tag{7}$$

$$\sqrt{(x-d_2)^2 + y^2} + \sqrt{(x-d_3)^2 + y^2} = B \tag{8}$$

The formula (7) and the formula (8) are solved, to obtain $(x, y)$, where

$$x = \left( \frac{A^2 - d_1^2 + d_3^2}{2A} - \frac{B^2 - d_2^2 + d_3^2}{2B} \right) \bigg/ \left( \frac{d_3 - d_1}{A} - \frac{d_3 - d_2}{B} \right),$$

and

$$y = \sqrt{ \left( \frac{A^2 - d_1^2 + d_3^2 + 2x(d_1 - d_3)}{2A} \right)^2 - \left( x - d_3 \right)^2 } \; .$$

$x$ may be substituted into $y$, and a value of $y$ may be obtained. In other words, if the formula (1) is transformed into the formula (7), and the formula (2) is transformed into the formula (8), in $x$ and $y$, $A = ||t_9-t_1|-|t_3-t_7||v$, and $B = ||t_9-t_4|-|t_6-t_7||v$. If the formula (3) is transformed into the formula (7), and the formula (4) is transformed into the formula (8), in $x$ and $y$, $A = ((t_9-t_1)-(t_7-t_3))v$, and $B = ((t_9-t_4)-(t_7-t_6))v$. If the formula (5) is transformed into the formula (7), and the formula (6) is transformed into the formula (8), in $x$ and $y$, $A = ((t_1-t_9)-(t_3-t_7))v$, and $B = ((t_4-t_9)-(t_6-t_7))v$. After determining the coordinates of the second electronic device, the first electronic device may further determine the distance between the first electronic device and the second electronic device, an angle of the second electronic device relative to the first electronic device, and/or the like based on the coordinates of the second electronic device. For example, a distance from the midpoint between the two loudspeakers of the first electronic device to the center point of the second electronic device is $D = \sqrt{x^2 + y^2}$, and an angle of the second electronic device relative to the midpoint between the two loudspeakers of the first electronic device is $\theta = \tan^{-1} \frac{y}{x}$. In other words, the location information of the second electronic device may indicate at least one of the coordinates of the second electronic device, the angle of the second electronic device relative to the midpoint between the two loudspeakers of the first electronic device, or the distance from the second electronic device to the midpoint between the two loudspeakers of the first electronic device. In addition, in this embodiment of this application, the midpoint between the two loudspeakers of the first electronic device is used as a coordinate origin. A physical size of the first electronic device is known, and the locations of the first loudspeaker, the second loudspeaker, and the first microphone in the first electronic device are all also known. Therefore, any location in the first electronic device may be the coordinate origin. When a location in the first electronic device is the coordinate origin, the coordinates of the first loudspeaker may be determined, the coordinates of the second loudspeaker may also be determined, and the coordinates of the first microphone may also be determined.

The foregoing uses two-dimensional coordinates as an example to deduce the two-dimensional coordinates of the second electronic device. In some cases, three-dimensional coordinates of the second electronic device may alternatively be deduced based on three-dimensional coordinates. The first moment is $t_1$, the third moment is $t_3$, the fourth moment is $t_4$, the sixth moment is $t_6$, the seventh moment is $t_7$, and the ninth moment is $t_9$. As shown in FIG. 10, coordinates of the first loudspeaker of the first electronic device are $(d_1, 0, h_1)$, and coordinates of the second loudspeaker of the first electronic device are $(d_2, 0, h_1)$, where heights of the first loudspeaker and the second loudspeaker are consistently $h_1$. Coordinates of a bottom midpoint of the first electronic device are $(0, 0, 0)$, and coordinates of the first microphone are $(d_3, 0, h_2)$. The first loudspeaker may be understood as a left loudspeaker, and the second loudspeaker may be understood as a right loudspeaker. The coordinates $(x, y, 0)$ of the second electronic device are to-be-solved values. A height of a speaker may be parallel to a bottom of a large screen. A volume of the second electronic device is less than a volume of the first electronic device. For example, the volume of the second electronic device may be less than a preset value. For example, the second electronic device is the speaker, and the first electronic device is the large screen. In this way, the second electronic device can be regarded as a point. In other words, a distance from the first loudspeaker to a fourth microphone of the second electronic device is equivalent to a distance from the first loudspeaker to the second electronic device, and a distance from the second loudspeaker to a fifth microphone of the second electronic device is equivalent to a distance from the second loudspeaker to the second electronic device. As shown in FIG. 10, the first distance from the first loudspeaker to the second electronic device is $D_1$, where $D_1 = \sqrt{(x - d_1)^2 + y^2 + h_1^2}$ ; the third distance from the second loudspeaker to the second electronic device is $D_2$, where $D_2 = \sqrt{(x - d_2)^2 + y^2 + h_1^2}$ ; and a second distance from the second electronic device to the first microphone is $D_3$, where $D_3 = \sqrt{(x - d_3)^2 + y^2 + h_2^2}$ . Therefore, the formula (1), the formula (3), or the formula (5) is transformed into a formula (9), and the formula (2), the formula (4), or the formula (6) is transformed into a formula (10).

$$\sqrt{(x - d_1)^2 + y^2 + h_1^2} + \sqrt{(x - d_3)^2 + y^2 + h_2^2} = A \tag{9}$$

$$\sqrt{(x - d_2)^2 + y^2 + h_1^2} + \sqrt{(x - d_3)^2 + y^2 + h_2^2} = B \tag{10}$$

The formula (9) and the formula (10) are solved, to obtain $(x, y, 0)$, where

$$x = \left( \frac{A^2 - d_1^2 + d_3^2 + h_2^2 - h_1^2}{2A} - \frac{B^2 - d_2^2 + d_3^2 + h_2^2 - h_1^2}{2B} \right) \bigg/ \left( \frac{d_3 - d_1}{A} - \frac{d_3 - d_2}{B} \right),$$

and

$$y = \sqrt{\left( \frac{A^2 - d_1^2 + d_3^2 + h_2^2 - h_1^2 + 2x(d_1 - d_3)}{2A} \right)^2 - \left( x - d_3 \right)^2 - h_2^2}.$$

$x$ may be substituted into $y$, and a value of $y$ may be obtained. After determining the coordinates of the second electronic device, the first electronic device may further determine the distance between the first electronic device and the second electronic device, an angle of the second electronic device relative to the first electronic device, and/or the like based on the coordinates of the second electronic device. For example, a distance from the bottom midpoint of the first electronic device to the center point of the second electronic device is $D = \sqrt{x^2 + y^2}$ , and an angle of the second electronic device relative to a midpoint between the two loudspeakers of the first electronic device is $\theta = \tan^{-1} \frac{y}{x}$ . In other words, the location information of the second electronic device may indicate at least one of the coordinates of the second electronic device, the angle of the second electronic device relative to the midpoint between the two loudspeakers of the first electronic device, or a distance from the second electronic device to the midpoint between the two loudspeakers of the first electronic device. In addition, in this embodiment of this application, the bottom midpoint of the first electronic device is used as a coordinate origin. A physical size of the first electronic device is known, and the locations of the first loudspeaker, the second loudspeaker, and the first microphone in the first electronic device are all also known. Therefore, any location in the first electronic device may be the coordinate origin. When a location in the first electronic device is the coordinate origin, the coordinates of the first loudspeaker may be determined, the coordinates of the second loudspeaker may also be determined, and the coordinates of the first microphone may also be determined.

The following describes in detail (b) in S650 with reference to FIG. 11. As shown in FIG. 11, a method 1100 includes the following steps.

S1110: A first electronic device sends a first ultrasonic signal via a first loudspeaker at a first moment, a first microphone of the first electronic device receives the first ultrasonic signal at a second moment, and a second electronic device receives the first ultrasonic signal at a third moment.

S1120: The first electronic device sends a second ultrasonic signal via a second loudspeaker at a fourth moment, the first microphone of the first electronic device receives the second ultrasonic signal at a fifth moment, and the second electronic device receives the second ultrasonic signal at a sixth moment.

After S1110 and S1120, the second electronic device may perform S1130.

A sequence of S1110 and S1120 is not limited. S1110 may be performed before or after S1120, or S1110 and S1120 may be simultaneously performed. If S1110 and S1120 are simultaneously performed, the first ultrasonic signal is different from the second ultrasonic signal.

Optionally, before S1110 and S1120, the method 1100 may further include: The first electronic device determines whether the second electronic device and the first electronic device are in same space. If the first electronic device determines that the second electronic device and the first electronic device are in the same space, S1110 and S1120 may be performed. If the first electronic device determines that the second electronic device and the first electronic device are not in the same space, S1110 and S1120 are not performed. For a manner in which the first electronic device determines whether the second electronic device and the first electronic device are in the same space, refer to the descriptions in the method 900. To avoid redundancy, details are not described.

S1130: The second electronic device sends a third ultrasonic signal at a seventh moment, and the first electronic device receives the third ultrasonic signal via the first microphone at a ninth moment.

Optionally, S1110 and S1120 may be performed before S1130, or S1110 and S1120 may be performed after S1130. This is not limited in this embodiment of this application. If S1110 and S1120 are performed before S1130, it indicates that the first electronic device first sends the first ultrasonic signal and the second ultrasonic signal and that the second electronic device may send the third ultrasonic signal after receiving the first ultrasonic signal and the second ultrasonic signal. If S1110 and S1120 are performed after S1130, it indicates that the second electronic device first sends the third ultrasonic signal and that the first electronic device may send the first ultrasonic signal and the second ultrasonic signal after receiving the third ultrasonic signal sent by the second electronic device.

S1140: The first electronic device obtains a difference obtained by subtracting the seventh moment from the third moment.

In this case, the first time information in the method 600 indicates the difference obtained by subtracting the seventh moment from the third moment.

Optionally, the second electronic device may send, to the first electronic device, indication information indicating the difference obtained by subtracting the seventh moment from the third moment.

S1150: The first electronic device obtains a difference obtained by subtracting the seventh moment from the sixth moment.

In this case, the second time information in the method 600 indicates the difference obtained by subtracting the seventh moment from the sixth moment.

Optionally, the second electronic device may send, to the first electronic device, indication information indicating the difference obtained by subtracting the seventh moment from the sixth moment.

S1160: The first electronic device determines a difference obtained by subtracting the second moment from the ninth moment and a difference obtained by subtracting the fifth moment from the ninth moment.

The third time information in the method 600 indicates the difference obtained by subtracting the second moment from the ninth moment, and the fourth time information in the method 600 indicates the difference obtained by subtracting the fifth moment from the ninth moment.

S1170: The first electronic device determines location information of the second electronic device based on the difference obtained by subtracting the seventh moment from the third moment, the difference obtained by subtracting the seventh moment from the sixth moment, the difference obtained by subtracting the second moment from the ninth moment, the difference obtained by subtracting the fifth moment from the ninth moment, a distance from the first loudspeaker to the first microphone, a distance from the second loudspeaker to the first microphone, and locations of the first loudspeaker, the second loudspeaker, and the first microphone in the first electronic device.

Optionally, S1170 includes: The first electronic device determines the location information of the second electronic device based on the difference obtained by subtracting the seventh moment from the third moment, the difference obtained by subtracting the seventh moment from the sixth moment, the difference obtained by subtracting the second moment from the ninth moment, the difference obtained by subtracting the fifth moment from the ninth moment, an ultrasonic-signal propagation velocity, the distance from the first loudspeaker to the first microphone, the distance from the second loudspeaker to the first microphone, and the locations of the first loudspeaker, the second loudspeaker, and the first microphone in the first electronic device.

Optionally, that the first electronic device determines the location information of the second electronic device based on the difference obtained by subtracting the seventh moment from the third moment, the difference obtained by subtracting the seventh moment from the sixth moment, the difference obtained by subtracting the second moment from the ninth moment, the difference obtained by subtracting the fifth moment from the ninth moment, the ultrasonic-signal propagation velocity, the distance from the first loudspeaker to the first microphone, the distance from the second loudspeaker to the first microphone, and the locations of the first loudspeaker, the second loudspeaker, and the first microphone in the first electronic device includes: The first electronic device determines the location information of the second electronic device based on an absolute value of the difference obtained by subtracting the seventh moment from the third moment, an absolute value of the difference obtained by subtracting the seventh moment from the sixth moment, an absolute value of the difference obtained by subtracting the second moment from the ninth moment, an absolute value of the difference obtained by subtracting the fifth moment from the ninth moment, the ultrasonic-signal propagation velocity, the distance from the first loudspeaker to the first microphone, the distance from the second loudspeaker to the first microphone, and the locations of the first loudspeaker, the second loudspeaker, and the first microphone in the first electronic device.

The following describes, by using an example, a method for determining the location information of the second electronic device by the first electronic device.

The second moment is $t_2$, the third moment is $t_3$, the fifth moment is $t_5$, the sixth moment is $t_6$, the seventh moment is $t_7$, and the ninth moment is $t_9$. As shown in FIG. 9, coordinates of the first loudspeaker of the first electronic device are $(d_1, 0)$, coordinates of the second loudspeaker of the first electronic device are $(d_2, 0)$, and coordinates of the first microphone of the first electronic device are $(d_3, 0)$, where coordinates of a midpoint between the first loudspeaker and the second loudspeaker may be $(0, 0)$, and the coordinates of the first loudspeaker, the coordinates of the second loudspeaker, and the coordinates of the first microphone may represent the locations in the first electronic device. The first loudspeaker may be understood as a left loudspeaker, the second loudspeaker may be understood as a right loudspeaker, and coordinates $(x, y)$ of the second electronic device are to-be-solved values. A volume of the second electronic device is less than a volume of the first electronic device. For example, the volume of the second electronic device may be less than a preset value. For example, the second electronic device is a speaker, and the first electronic device is a large screen. In this way, the second electronic device can be regarded as a point. In other words, a distance from the first loudspeaker to a fourth microphone of the second electronic device is equivalent to a distance from the first loudspeaker to the second electronic device, and a distance from the second loudspeaker to a fifth microphone of the second electronic device is equivalent to a distance from the second loudspeaker to the second electronic device. As shown in FIG. 9, the first distance from the first loudspeaker to the second electronic device is $D_1$, where $D_1 = \sqrt{(x - d_1)^2 + y^2}$ ; the third distance from the second loudspeaker to the second electronic device is $D_2$, where $D_2 = \sqrt{(x - d_2)^2 + y^2}$ ; and a second distance from the second electronic device to the first microphone is $D_3$, where $D_3 = \sqrt{(x - d_3)^2 + y^2}$ . In this case, there is a formula (11) and a formula (12).

$$D_1 + D_3 = \left\| |t_9 - t_2| - |t_3 - t_7| \right\| v + |d_1 - d_3| \tag{11}$$

$$D_2 + D_3 = \left\| |t_9 - t_5| - |t_6 - t_7| \right\| v + |d_2 - d_3| \tag{12}$$

If S1110 and S1120 may be performed before S1130, that is, if the first electronic device sends the first ultrasonic signal and the second ultrasonic signal before the second electronic device sends the third ultrasonic signal, the formula (11) may be replaced with a formula (13), and the formula (12) may be replaced with a formula (14).

$$D_1 + D_3 = ((t_9 - t_2) - (t_7 - t_3))v + |d_1 - d_3| \tag{13}$$

$$D_2 + D_3 = ((t_9 - t_5) - (t_7 - t_6))v + |d_2 - d_3| \qquad (14)$$

If S1110 and S1120 may be performed after S1130, that is, if the first electronic device sends the first ultrasonic signal and the second ultrasonic signal after the second electronic device sends the third ultrasonic signal, the formula (11) may be replaced with a formula (15), and the formula (12) may be replaced with a formula (16).

$$D_1 + D_3 = ((t_2 - t_9) - (t_3 - t_7))v + |d_1 - d_3| \qquad (15)$$

$$D_2 + D_3 = ((t_5 - t_9) - (t_6 - t_7))v + |d_2 - d_3| \qquad (16)$$

$v$ is the ultrasonic-signal propagation velocity. Right sides of the formula (11) to the formula (16) are all known. For brevity of description, the right side of the formula (11), the formula (13), or the formula (15) may be denoted as $A$. That is, in the formula (11), $A = ||t_9-t_2|-|t_3-t_7||v+|d_1-d_3|$; in the formula (13), $A=((t_9-t_2)-(t_7-t_3))v+|d_1-d_3|$; and in the formula (15), $A= ((t_2-t_9)-(t_3-t_7))v+|d_1-d_3|$. In other words, $A$ is a sum of the first distance and the second distance. The right side of the formula (12), the formula (14), or the formula (16) may be denoted as $B$. That is, in the formula (12), $B =||t_9-t_5|-|t_6-t_7||v+|d_2-d_3|$; in the formula (14), $B = ((t_9-t_5)-(t_7-t_6))v+|d_2-d_3|$; and in the formula (16), $B = ((t_5-t_9)-(t_6-t_7))v+|d_2-d_3|$. In other words, $B$ is a sum of the second distance and the third distance.

Therefore, if the formula (11) and the formula (12) are solved, in the coordinates $(x, y)$ of the second electronic device in the method 800, $A$ is correspondingly replaced with $A =||t_9-t_2|-|t_3-t_7||v+|d_1-d_3|$, and $B$ is correspondingly replaced with $B =||t_9-t_5|-t_6-t_7||v+|d_2-d_3|$. If the formula (13) and the formula (14) are solved, in the coordinates $(x, y)$ of the second electronic device in the method 800, $A$ is correspondingly replaced with $A = ((t_9-t_2)-(t_7-t_3))v+|d_1-d_3|$, and $B$ is correspondingly replaced with $B = ((t_9-t_5)-(t_7-t_6))v+|d_2-d_3|$. If the formula (15) and the formula (16) are solved, in the coordinates $(x, y)$ of the second electronic device in the method 800, $A$ is correspondingly replaced with $A = ((t_2-t_9)-(t_3-t_7))v+|d_1-d_3|$, and $B$ is correspondingly replaced with $B = ((t_5-t_9)-(t_6-t_7))v+|d_2-d_3|$. In other words, $A$ in the method 1100 is different from $A$ in the method 800, and $B$ in the method 1100 is different from $B$ in the method 800. As a result, the coordinates of the second electronic device that are calculated by using the method 800 are different from the coordinates of the second electronic device that are calculated by using the method 1100.

In the foregoing embodiment, the second electronic device may be regarded as the point. In other words, the coordinates of the second electronic device may be coordinates of the fourth microphone of the second electronic device, coordinates of the fifth microphone of the second electronic device, coordinates of a second microphone of the second electronic device, coordinates of a third loudspeaker of the second electronic device, or the like. In other words, coordinates of any microphone or loudspeaker in the second electronic device are equivalent to the coordinates of the second electronic device. In some embodiments, the coordinates of the second electronic device may be a center point of the second electronic device, a physical size of the second electronic device is known, and a location of the any microphone or loudspeaker in the second electronic device may also be known.

The following describes embodiments in which coordinates of a second electronic device are determined as a center point of the second electronic device.

The following describes in detail (c) in S650 with reference to FIG. 12. As shown in FIG. 12, a method 1200 includes the following steps.

S1210: A first electronic device sends a first ultrasonic signal via a first loudspeaker at a first moment, and a fourth microphone of a second electronic device receives the first ultrasonic signal at a third moment.

S 1220: The first electronic device sends a second ultrasonic signal via a second loudspeaker at a fourth moment, and a fifth microphone of the second electronic device receives the second ultrasonic signal at a sixth moment.

After S1210 and S1220, the second electronic device may perform S1230.

A sequence of S1210 and S1220 is not limited. S1210 may be performed before or after S1220, or S1210 and S1220 may be simultaneously performed. If S1210 and S1220 are simultaneously performed, the first ultrasonic signal is different from the second ultrasonic signal.

Optionally, before S1210 and S1220, the method 1200 may further include: The first electronic device determines whether the second electronic device and the first electronic device are in same space. If the first electronic device determines that the second electronic device and the first electronic device are in the same space, S1210 and S1220 may be performed. If the first electronic device determines that the second electronic device and the first electronic device are not in the same space, S1210 and S1220 are not performed. For a method for determining, by the first electronic device, whether the second electronic device and the first electronic device are in the same space, refer to the descriptions in the method 900. To avoid redundancy, details are not described.

S 1230: The second electronic device sends a third ultrasonic signal via a third loudspeaker at a seventh moment, the second electronic device receives the third ultrasonic signal via a second microphone at an eighth moment, and the first electronic device receives the third ultrasonic signal via a first microphone at a ninth moment.

Optionally, S1210 and S1220 may be performed before S1230, or S1210 and S1220 may be performed after S 1230. This is not limited in this embodiment of this application. If S1210 and S1220 are performed before S1230, it indicates that the first electronic device first sends the first ultrasonic signal and the second ultrasonic signal and that the second electronic device may send the third ultrasonic signal after receiving the first ultrasonic signal and the second ultrasonic signal. If S1210 and S1220 are performed after S1230, it indicates that the second electronic device first sends the third ultrasonic signal and that the first electronic device may send the first ultrasonic signal and the second ultrasonic signal after receiving the third ultrasonic signal sent by the second electronic device.

S1240: The first electronic device obtains a difference obtained by subtracting the eighth moment from the third moment.

In this case, the first time information in the method 600 indicates the difference obtained by subtracting the eighth moment from the third moment.

Optionally, the second electronic device may send, to the first electronic device, indication information indicating the difference obtained by subtracting the eighth moment from the third moment.

S1250: The first electronic device obtains a difference obtained by subtracting the eighth moment from the sixth moment.

In this case, the second time information in the method 600 indicates the difference obtained by subtracting the eighth moment from the sixth moment.

Optionally, the second electronic device may send, to the first electronic device, indication information indicating the difference obtained by subtracting the eighth moment from the sixth moment.

S1260: The first electronic device determines a difference obtained by subtracting the first moment from the ninth moment and a difference obtained by subtracting the fourth moment from the ninth moment.

The third time information in the method 600 indicates the difference obtained by subtracting the first moment from the ninth moment, and the fourth time information in the method 600 indicates the difference obtained by subtracting the fourth moment from the ninth moment.

S1270: The first electronic device determines location information of the second electronic device based on the difference obtained by subtracting the eighth moment from the third moment, the difference obtained by subtracting the eighth moment from the sixth moment, the difference obtained by subtracting the first moment from the ninth moment, the difference obtained by subtracting the fourth moment from the ninth moment, a distance from the third loudspeaker to the second microphone, and locations of the first loudspeaker, the second loudspeaker, and the first microphone in the first electronic device.

Optionally, S1270 includes: The first electronic device determines the location information of the second electronic device based on a difference obtained by subtracting the third moment from the eighth moment, a difference obtained by subtracting the sixth moment from the eighth moment, the difference obtained by subtracting the first moment from the ninth moment, the difference obtained by subtracting the fourth moment from the ninth moment, the distance from the third loudspeaker to the second microphone, an ultrasonic-signal propagation velocity, and the locations of the first loudspeaker, the second loudspeaker, and the first microphone in the first electronic device.

Optionally, that the first electronic device determines the location information of the second electronic device based on the difference obtained by subtracting the third moment from the eighth moment, the difference obtained by subtracting the sixth moment from the eighth moment, the difference obtained by subtracting the first moment from the ninth moment, the difference obtained by subtracting the fourth moment from the ninth moment, the distance from the third loudspeaker to the second microphone, the ultrasonic-signal propagation velocity, and the locations of the first loudspeaker, the second loudspeaker, and the first microphone in the first electronic device includes: The first electronic device determines the location information of the second electronic device based on an absolute value of the difference obtained by subtracting the third moment from the eighth moment, an absolute value of the difference obtained by subtracting the sixth moment from the eighth moment, an absolute value of the difference obtained by subtracting the first moment from the ninth moment, an absolute value of the difference obtained by subtracting the fourth moment from the ninth moment, the distance from the third loudspeaker to the second microphone, the ultrasonic-signal propagation velocity, and the locations of the first loudspeaker, the second loudspeaker, and the first microphone in the first electronic device.

The following describes, by using an example, a method for determining the location information of the second electronic device by the first electronic device.

The first moment is $t_1$, the third moment is $t_3$, the fourth moment is $t_4$, the sixth moment is $t_6$, the eighth moment is $t_8$, and the ninth moment is $t_9$. For example, coordinates of the first loudspeaker of the first electronic device are $(d_1, 0)$, coordinates of the second loudspeaker of the first electronic device are $(d_2, 0)$, and coordinates of the first microphone of the first electronic device are $(d_3, 0)$, where coordinates of a midpoint between the first loudspeaker and the second loudspeaker may be $(0, 0)$, and the coordinates of the first loudspeaker, the coordinates of the second loudspeaker, and the coordinates of the first microphone may represent the locations in the first electronic device. The first loudspeaker may be understood as a left loudspeaker, the second loudspeaker may be understood as a right loudspeaker, and coordinates

$(x, y)$ of a center point of the second electronic device are to-be-solved values. Coordinates of the third loudspeaker of the second electronic device are $(x+l_1, y+l_2)$, coordinates of a distance of the second microphone of the second electronic device are $(x+l_3, y+l_4)$, the distance from the third loudspeaker of the second electronic device to the second microphone of the second electronic device is $\sqrt{(l_1-l_3)^2+(l_2-l_4)^2}$, coordinates of the fourth microphone are $(x+l_5, y+l_6)$, and coordinates of the fifth microphone are $(x+l_7, y+l_8)$. The coordinates of the third loudspeaker, the coordinates of the fourth microphone, and the coordinates of the fifth microphone represent locations in the second electronic device. A seventh distance from the first loudspeaker to the fourth microphone of the second electronic device is $D_1$, where

$$D_1 = \sqrt{(x+l_5-d_1)^2+(y+l_6)^2}$$ ; a ninth distance from the second loudspeaker to the fifth microphone of the second electronic device is $D_2$, where $D_2 = \sqrt{(x+l_7-d_2)^2+(y+l_8)^2}$ ; and an eighth distance from the third loudspeaker of the second electronic device to the first microphone is $D_3$, where $D_3 = \sqrt{(x+l_1-d_3)^2+(y+l_2)^2}$ . In this case, there is a formula (17) and a formula (18).

$$D_1 + D_3 = \left\| |t_9 - t_1| - |t_3 - t_8| \right\| v + \sqrt{(l_1-l_3)^2+(l_2-l_4)^2} \tag{17}$$

$$D_2 + D_3 = \left\| |t_9 - t_4| - |t_6 - t_8| \right\| v + \sqrt{(l_1-l_3)^2+(l_2-l_4)^2} \tag{18}$$

If S1210 and S1220 may be performed before S1230, that is, if the first electronic device sends the first ultrasonic signal and the second ultrasonic signal before the second electronic device sends the third ultrasonic signal, the formula (17) may be replaced with a formula (19), and the formula (18) may be replaced with a formula (20).

$$D_1 + D_3 = ((t_9 - t_1) - (t_8 - t_3))v + \sqrt{(l_1-l_3)^2+(l_2-l_4)^2} \tag{19}$$

$$D_2 + D_3 = ((t_9 - t_4) - (t_8 - t_6))v + \sqrt{(l_1-l_3)^2+(l_2-l_4)^2} \tag{20}$$

If S1210 and S1220 may be performed after S1230, that is, if the first electronic device sends the first ultrasonic signal and the second ultrasonic signal after the second electronic device sends the third ultrasonic signal, the formula (17) may be replaced with a formula (21), and the formula (18) may be replaced with a formula (22).

$$D_1 + D_3 = ((t_1 - t_9) - (t_3 - t_8))v + \sqrt{(l_1-l_3)^2+(l_2-l_4)^2} \tag{21}$$

$$D_2 + D_3 = ((t_4 - t_9) - (t_6 - t_8))v + \sqrt{(l_1-l_3)^2+(l_2-l_4)^2} \tag{22}$$

$v$ is the ultrasonic-signal propagation velocity. Right sides of the formula (17) to the formula (22) are all known. For brevity of description, the right side of the formula (17), the formula (19), or the formula (21) may be denoted as $A$. That is, in the formula (17), $A = \left\| |t_9 - t_1| - |t_3 - t_8| \right\| v + \sqrt{(l_1-l_3)^2+(l_2-l_4)^2}$ ; in the formula (19),

$A = ((t_9 - t_1) - (t_8 - t_3))v + \sqrt{(l_1-l_3)^2+(l_2-l_4)^2}$ ; and in the formula (21),

$A = ((t_1 - t_9) - (t_3 - t_8))v + \sqrt{(l_1-l_3)^2+(l_2-l_4)^2}$ . In other words, $A$ is a sum of the seventh distance and the eighth distance. The right side of the formula (18), the formula (20), or the formula (22) may be denoted as $B$. That is, in the formula (18),

$$B = \left\| \left| t_9 - t_4 \right| - \left| t_6 - t_8 \right| \right\| v + \sqrt{(l_1 - l_3)^2 + (l_2 - l_4)^2} \ ;$$

in the formula (20),

$$B = ((t_9 - t_4) - (t_8 - t_6))v + \sqrt{(l_1 - l_3)^2 + (l_2 - l_4)^2} \ ;$$

and in the formula (22),

$$B = ((t_4 - t_9) - (t_6 - t_8))v + \sqrt{(l_1 - l_3)^2 + (l_2 - l_4)^2} \ .$$

In other words, $B$ is a sum of the eighth distance and the ninth distance.

Therefore, the formula (17), the formula (19), or the formula (21) is transformed into a formula (23), and the formula (18), the formula (20), or the formula (22) is transformed into a formula (24).

$$\sqrt{(x + l_5 - d_1)^2 + (y + l_6)^2} + \sqrt{(x + l_1 - d_3)^2 + (y + l_2)^2} = A \tag{23}$$

$$\sqrt{(x + l_7 - d_2)^2 + (y + l_8)^2} + \sqrt{(x + l_1 - d_3)^2 + (y + l_2)^2} = B \tag{24}$$

The formula (23) and the formula (24) are two equations, and have two unknowns $x$ and $y$. Therefore, *(x, y)* may be obtained through solving. For example, $x$ and $y$ may be obtained through solving by using a traversal method. After determining the coordinates of the center point of the second electronic device, the first electronic device may further determine a distance between the first electronic device and the center point of the second electronic device, an angle of the second electronic device relative to a center point of the first electronic device, and/or the like based on the coordinates of the center point of the second electronic device. For example, a distance from the midpoint between the two loudspeakers of the first electronic device to the center point of the second electronic device is $D = \sqrt{x^2 + y^2}$, and an angle of the second electronic device relative to the midpoint between the two loudspeakers of the first electronic device is $\theta = \tan^{-1} \dfrac{y}{x}$. In other words, the location information of the second electronic device may indicate at least one of the coordinates of the center point of the second electronic device, the angle of the center point of the second electronic device relative to the midpoint between the two loudspeakers of the first electronic device, or the distance from the center point of the second electronic device to the midpoint between the two loudspeakers of the first electronic device.

A method for solving the center point of the second electronic device in a three-dimensional coordinate system is similar to that in a two-dimensional coordinate system. To avoid redundancy, details are not described.

The following describes in detail (d) in S650 with reference to FIG. 13. As shown in FIG. 13, a method 1300 includes the following steps.

S1310: A first electronic device sends a first ultrasonic signal via a first loudspeaker at a first moment, the first electronic device receives the first ultrasonic signal via a first microphone at a second moment, and a fourth microphone of a second electronic device receives the first ultrasonic signal at a third moment.

S 1320: The first electronic device sends a second ultrasonic signal via a second loudspeaker at a fourth moment, the first electronic device receives the second ultrasonic signal via the first microphone at a fifth moment, and a fifth microphone of the second electronic device receives the second ultrasonic signal at a sixth moment.

After S1310 and S1320, the second electronic device may perform S1330.

A sequence of S1310 and S1320 is not limited. S1310 may be performed before or after S1320, or S1310 and S1320 may be simultaneously performed. If S1310 and S1320 are simultaneously performed, the first ultrasonic signal is different from the second ultrasonic signal.

Optionally, before S1310 and S1320, the method 1300 may further include: The first electronic device determines whether the second electronic device and the first electronic device are in same space. If the first electronic device determines that the second electronic device and the first electronic device are in the same space, S1310 and S1320 may be performed. If the first electronic device determines that the second electronic device and the first electronic device are not in the same space, S1310 and S1320 are not performed. For a method for determining, by the first electronic device, whether the second electronic device and the first electronic device are in the same space, refer to the descriptions in the method 800. To avoid redundancy, details are not described.

S 1330: The second electronic device sends a third ultrasonic signal via a third loudspeaker at a seventh moment, the second electronic device receives the third ultrasonic signal via a second microphone at an eighth moment, and the first electronic device receives the third ultrasonic signal via the first microphone at a ninth moment.

S1340: The first electronic device obtains a difference obtained by subtracting the eighth moment from the third moment.

In this case, the first time information in the method 600 indicates the difference obtained by subtracting the eighth moment from the third moment.

Optionally, the second electronic device may send, to the first electronic device, indication information indicating the difference obtained by subtracting the eighth moment from the third moment.

S1350: The first electronic device obtains a difference obtained by subtracting the eighth moment from the sixth moment.

In this case, the second time information in the method 600 indicates the difference obtained by subtracting the eighth moment from the sixth moment.

Optionally, the second electronic device may send, to the first electronic device, indication information indicating the difference obtained by subtracting the eighth moment from the sixth moment.

S1360: The first electronic device determines a difference obtained by subtracting the second moment from the ninth moment and a difference obtained by subtracting the fifth moment from the ninth moment.

The third time information in the method 600 indicates the difference obtained by subtracting the second moment from the ninth moment, and the fourth time information in the method 600 indicates the difference obtained by subtracting the fifth moment from the ninth moment.

S1370: The first electronic device determines location information of the second electronic device based on the difference obtained by subtracting the eighth moment from the third moment, the difference obtained by subtracting the eighth moment from the sixth moment, the difference obtained by subtracting the second moment from the ninth moment, the difference obtained by subtracting the fifth moment from the ninth moment, a distance from the first loudspeaker to the first microphone, a distance from the second loudspeaker to the second microphone, a distance from the third loudspeaker to the second microphone, locations of the first loudspeaker, the second loudspeaker, and the first microphone in the first electronic device, and locations of the fourth microphone, the fifth microphone, and the third loudspeaker in the second electronic device.

Optionally, S1370 includes: the first electronic device determines the location information of the second electronic device based on the difference obtained by subtracting the eighth moment from the third moment, the difference obtained by subtracting the eighth moment from the sixth moment, the difference obtained by subtracting the second moment from the ninth moment, the difference obtained by subtracting the fifth moment from the ninth moment, the distance from the first loudspeaker to the first microphone, the distance from the second loudspeaker to the second microphone, the distance from the third loudspeaker to the second microphone, an ultrasonic-signal propagation velocity, the locations of the first loudspeaker, the second loudspeaker, and the first microphone in the first electronic device, and the locations of the fourth microphone, the fifth microphone, and the third loudspeaker in the second electronic device.

Optionally, the difference obtained by subtracting the eighth moment from the third moment, the difference obtained by subtracting the eighth moment from the sixth moment, the difference obtained by subtracting the second moment from the ninth moment, the difference obtained by subtracting the fifth moment from the ninth moment, the distance from the first loudspeaker to the first microphone, the distance from the second loudspeaker to the second microphone, the distance from the third loudspeaker to the second microphone, the ultrasonic-signal propagation velocity, the locations of the first loudspeaker, the second loudspeaker, and the first microphone in the first electronic device, and the locations of the fourth microphone, the fifth microphone, and the third loudspeaker in the second electronic device include: an absolute value of the difference obtained by subtracting the eighth moment from the third moment, an absolute value of the difference obtained by subtracting the eighth moment from the sixth moment, an absolute value of the difference obtained by subtracting the second moment from the ninth moment, an absolute value of the difference obtained by subtracting the fifth moment from the ninth moment, the distance from the first loudspeaker to the first microphone, the distance from the second loudspeaker to the second microphone, the distance from the third loudspeaker to the second microphone, the ultrasonic-signal propagation velocity, the locations of the first loudspeaker, the second loudspeaker, and the first microphone in the first electronic device, and the locations of the fourth microphone, the fifth microphone, and the third loudspeaker in the second electronic device.

The following describes, by using an example, a method for determining the location information of the second electronic device by the first electronic device.

The second moment is $t_2$, the third moment is $t_3$, the fifth moment is $t_5$, the sixth moment is $t_6$, the eighth moment is $t_8$, and the ninth moment is $t_9$. Coordinates of the first loudspeaker of the first electronic device are $(d_1, 0)$, coordinates of the second loudspeaker of the first electronic device are $(d_2, 0)$, and coordinates of the first microphone of the first electronic device are $(d_3, 0)$, where coordinates of a midpoint between the first loudspeaker and the second loudspeaker may be $(0,$

0) , and the coordinates of the first loudspeaker, the coordinates of the second loudspeaker, and the coordinates of the first microphone may represent the locations in the first electronic device. The first loudspeaker may be understood as a left loudspeaker, the second loudspeaker may be understood as a right loudspeaker, and coordinates $(x, y)$ of a center point of the second electronic device are to-be-solved values. Coordinates of the third loudspeaker of the second electronic device are $(x+l_1, y+l_2)$, coordinates of a distance of the second microphone of the second electronic device are $(x+l_3, y+l_4)$, the distance from the third loudspeaker of the second electronic device to the second microphone of the second electronic

device is $\sqrt{(l_1 - l_3)^2 + (l_2 - l_4)^2}$ , coordinates of the fourth microphone are $(x+l_5, y+l_6)$, and coordinates of the fifth microphone are $(x+l_7, y+l_8)$. The coordinates of the third loudspeaker, the coordinates of the fourth microphone, and the coordinates of the fifth microphone represent the locations in the second electronic device. A seventh distance from the first loudspeaker to the fourth microphone of the second electronic device is $D_1$, where

$D_1 = \sqrt{(x+l_5 - d_1)^2 + (y+l_6)^2}$ ; a ninth distance from the second loudspeaker to the fifth microphone of the second electronic device is $D_2$, where $D_2 = \sqrt{(x+l_7 - d_2)^2 + (y+l_8)^2}$ ; and an eighth distance from the third loudspeaker of the second electronic device to the first microphone is $D_3$, where $D_3 = \sqrt{(x+l_1 - d_3)^2 + (y+l_2)^2}$ . In this case, there is a formula (25) and a formula (26).

$$D_1 + D_3 = \left\| |t_9 - t_2| - |t_3 - t_8| \right\| + \sqrt{(l_1 - l_3)^2 + (l_2 - l_4)^2} + |d_1 - d_3| \tag{25}$$

$$D_2 + D_3 = \left\| |t_9 - t_5| - |t_6 - t_8| \right\| v + \sqrt{(l_1 - l_3)^2 + (l_2 - l_4)^2} + |d_2 - d_3| \tag{26}$$

If S1310 and S1320 may be performed before S1330, that is, if the first electronic device sends the first ultrasonic signal and the second ultrasonic signal before the second electronic device sends the third ultrasonic signal, the formula (25) may be replaced with a formula (27), and the formula (26) may be replaced with a formula (28).

$$D_1 + D_3 = ((t_9 - t_2) - (t_8 - t_3))v + \sqrt{(l_1 - l_3)^2 + (l_2 - l_4)^2} + |d_1 - d_3| \tag{27}$$

$$D_2 + D_3 = ((t_9 - t_5) - (t_8 - t_6))v + \sqrt{(l_1 - l_3)^2 + (l_2 - l_4)^2} + |d_2 - d_3| \tag{28}$$

If S1310 and S1320 may be performed after S1330, that is, if the first electronic device sends the first ultrasonic signal and the second ultrasonic signal after the second electronic device sends the third ultrasonic signal, the formula (25) may be replaced with a formula (29), and the formula (26) may be replaced with a formula (30).

$$D_1 + D_3 = ((t_2 - t_9) - (t_3 - t_8))v + \sqrt{(l_1 - l_3)^2 + (l_2 - l_4)^2} + |d_1 - d_3| \tag{29}$$

$$D_2 + D_3 = ((t_5 - t_9) - (t_6 - t_8))v + \sqrt{(l_1 - l_3)^2 + (l_2 - l_4)^2} + |d_2 - d_3| \tag{30}$$

$v$ is the ultrasonic-signal propagation velocity. Right sides of the formula (25) to the formula (30) are all known. For brevity of description, the right side of the formula (25), the formula (27), or the formula (29) may be denoted as $A$. That is, in the formula (25), $A = \left\| |t_9 - t_2| - |t_3 - t_8| \right\| + \sqrt{(l_1 - l_3)^2 + (l_2 - l_4)^2} + |d_1 - d_3|$ ; in the formula (27),

$A = ((t_9 - t_2) - (t_8 - t_3))v + \sqrt{(l_1 - l_3)^2 + (l_2 - l_4)^2} + |d_1 - d_3|$ ; and in the formula (29),

$A = ((t_2 - t_9) - (t_3 - t_8))v + \sqrt{(l_1 - l_3)^2 + (l_2 - l_4)^2} + |d_1 - d_3|$ . In other words, $A$ is a sum of the seventh distance and the eighth distance. The right side of the formula (26), the formula (28), or the formula (30) may be denoted as

$B$. That is, in the formula (26), $$B = \left\| |t_9 - t_5| - |t_6 - t_8| \right\| v + \sqrt{(l_1 - l_3)^2 + (l_2 - l_4)^2} + |d_2 - d_3|$$ ; in the formula (28),

$$B = ((t_9 - t_5) - (t_8 - t_6))v + \sqrt{(l_1 - l_3)^2 + (l_2 - l_4)^2} + |d_2 - d_3|$$ ; and in the formula (30),

$$B = ((t_5 - t_9) - (t_6 - t_8))v + \sqrt{(l_1 - l_3)^2 + (l_2 - l_4)^2} + |d_2 - d_3|$$ . In other words, $B$ is a sum of the eighth distance and the ninth distance. $A$ in the method 1300 is different from $A$ in the method 1200, and $B$ in the method 1300 is different from $B$ in the method 1200. As a result, the coordinates of the second electronic device that are calculated by using the method 1300 are different from the coordinates of the second electronic device that are calculated by using the method 1300.

In embodiments of this application, an "ultrasonic signal" may be replaced with a term like an "ultrasonic wave signal", a "sequence", or an "ultrasonic sequence". This is not limited in embodiments of this application.

Based on a same inventive concept, an embodiment of this application further provides an electronic device, including a memory and a processor. The memory is configured to store a computer program. The processor is configured to perform the methods in the foregoing method embodiments when invoking the computer program.

The electronic device provided in this embodiment may perform the foregoing method embodiments. An implementation principle and technical effects of the electronic device are similar to those of the foregoing method embodiments. Details are not described herein again.

Based on a same inventive idea, an embodiment of this application further provides a chip system. The chip system includes a processor. The processor is coupled to a memory. The processor executes a computer program stored in the memory, to implement the methods in the foregoing method embodiments.

The chip system may be a single chip or a chip module including a plurality of chips.

An embodiment of this application further provides a computer-readable storage medium. The computer-readable storage medium stores a computer program. When the computer program is executed by a processor, the methods in the foregoing method embodiments are implemented.

An embodiment of this application further provides a computer program product. When the computer program product runs on an electronic device, the electronic device is enabled to perform the methods in the foregoing method embodiments.

When the foregoing integrated unit is implemented in a form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code, and the computer program code may be in a source code form, an object code form, an executable file, an intermediate form, or the like. The computer-readable storage medium may include at least any entity or apparatus that can carry the computer program code to a photographing apparatus/terminal device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk.

In the foregoing embodiments, descriptions in embodiments have respective focuses. For a part that is not described in detail or recorded in an embodiment, refer to the related descriptions in other embodiments.

Persons of ordinary skill in the art may be aware that, with reference to the units and the algorithm steps in the examples described in embodiments disclosed in this specification, this application can be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed apparatus/device and method may be implemented in other manners. For example, the foregoing apparatus/device embodiment is merely an example. For example, the division into the modules or units is merely logical function division, and may be other division in actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in electrical, mechanical, or other forms.

It should be understood that the term "include"/"comprise" when used in the specification and the appended claims of this application indicates the presence of the described feature, whole, step, operation, element, and/or component, but does not preclude the presence or addition of one or more other features, wholes, steps, operations, elements, components, and/or sets thereof.

It should be further understood that the term "and/or" used in the specification and the appended claims of this application refers to any combination of one or more of associated items that are listed and all possible combinations, and includes these combinations.

As used in the specification and the appended claims of this application, the term "if" may be interpreted as "when", "once", "in response to determining", "in response to detecting" depending on the context. Similarly, the phrase "if it is determined" or "if [the condition or event] is detected" may be interpreted as "once it is determined", "in response to determining", "once [the condition or event] is detected", or "in response to detecting [the condition or event]" depending on the context.

In addition, in the descriptions in the specification and the appended claims of this application, the terms "first", "second", "third", and the like are merely intended for differentiated description, but cannot be understood as an indication or an implication of relative importance.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", and "in some other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

Finally, it should be noted that the foregoing embodiments are merely intended for describing the technical solutions in this application other than limiting this application. Although this application is described in detail with reference to the foregoing embodiments, persons of ordinary skill in the art should understand that they may still make modifications to the technical solutions recorded in the foregoing embodiments or make equivalent replacements to some or all technical features thereof. However, these modifications or replacements do not cause the essence of the corresponding technical solutions to depart from the scope of the technical solutions in embodiments of this application.

## Claims

1. A location information determining method, comprising:

   sending, by a first electronic device, a first ultrasonic signal via a first loudspeaker;
   sending, by the first electronic device, a second ultrasonic signal via a second loudspeaker;
   receiving, by the first electronic device via a first microphone, a third ultrasonic signal sent by a second electronic device via a third loudspeaker;
   obtaining, by the first electronic device, first time information and second time information, wherein the first time information indicates a time difference obtained by subtracting a time point at which the second electronic device processes the third ultrasonic signal from a time point at which the second electronic device receives the first ultrasonic signal, the second time information indicates a time difference obtained by subtracting the time point at which the second electronic device processes the third ultrasonic signal from a time point at which the second electronic device receives the second ultrasonic signal, and the time point at which the second electronic device processes the third ultrasonic signal comprises: a time point at which the second electronic device sends the third ultrasonic signal via the third loudspeaker or a time point at which the second electronic device receives the third ultrasonic signal via a second microphone; and
   determining, by the first electronic device, location information of the second electronic device based on the first time information, the second time information, third time information, fourth time information, and locations of the first loudspeaker, the second loudspeaker, and the first microphone in the first electronic device, wherein the third time information indicates a time difference obtained by subtracting a time point at which the first electronic device processes the first ultrasonic signal from a time point at which the first electronic device receives the third ultrasonic signal, the fourth time information indicates a time difference obtained by subtracting a time point at which the first electronic device processes the second ultrasonic signal from the time point at which the first electronic device receives the third ultrasonic signal, the time point at which the first electronic device processes the first ultrasonic signal comprises: a time point at which the first electronic device sends the first ultrasonic signal via the first loudspeaker or a time point at which the first electronic device receives the first ultrasonic signal via the first microphone, and the time point at which the first electronic device processes the second ultrasonic signal comprises: a time point at which the first electronic device sends the second ultrasonic signal via the second loudspeaker or a time point at which the first electronic device receives the second ultrasonic signal via the first microphone.

2. The method according to claim 1, wherein determining, by the first electronic device, the location information of the second electronic device based on the first time information, the second time information, the third time information, the fourth time information, and the locations of the first loudspeaker, the second loudspeaker, and the first microphone in the first electronic device comprises:

determining, by the first electronic device, a sum of a first distance and a second distance based on the first time information and the third time information, wherein the first distance is a distance between the first loudspeaker and the second electronic device, and the second distance is a distance between the first microphone and the second electronic device;

determining, by the first electronic device, a sum of a third distance and the second distance based on the second time information and the fourth time information, wherein the third distance is a distance between the second loudspeaker and the second electronic device; and

determining, by the first electronic device, the location information of the second electronic device based on the sum of the first distance and the second distance, the sum of the third distance and the second distance, and the locations of the first loudspeaker, the second loudspeaker, and the first microphone in the first electronic device.

3. The method according to claim 1, wherein determining, by the first electronic device, the location information of the second electronic device based on the first time information, the second time information, the third time information, the fourth time information, and the locations of the first loudspeaker, the second loudspeaker, and the first microphone in the first electronic device comprises:

determining, by the first electronic device, a sum of a first distance and a second distance based on the first time information, the third time information, and a distance between the first loudspeaker and the first microphone, wherein the first distance is a distance between the first loudspeaker and the second electronic device, and the second distance is a distance between the first microphone and the second electronic device;

determining, by the first electronic device, a sum of a third distance and the second distance based on the second time information, the fourth time information, and a distance between the second loudspeaker and the first microphone, wherein the third distance is a distance between the second loudspeaker and the second electronic device; and

determining the location information of the second electronic device based on the sum of the first distance and the second distance, the sum of the third distance and the second distance, and the locations of the first loudspeaker, the second loudspeaker, and the first microphone in the first electronic device.

4. The method according to any one of claims 1 to 3, wherein obtaining, by the first electronic device, the first time information and the second time information comprises:
receiving, by the first electronic device, the first time information and the second time information from the second electronic device.

5. The method according to any one of claims 1 to 4, wherein the method further comprises:

receiving first identification information from the second electronic device, wherein the first identification information corresponds to the third ultrasonic signal; and
if a device identified by the first identification information is the second electronic device, determining, by the first electronic device, that the third ultrasonic signal is sent by the second electronic device.

6. The method according to any one of claims 1 to 5, wherein the first ultrasonic signal is different from the second ultrasonic signal; or the first ultrasonic signal is the same as the second ultrasonic signal, but the time point at which the first electronic device sends the first ultrasonic signal via the first loudspeaker is different from the time point at which the first electronic device sends the second ultrasonic signal via the second loudspeaker.

7. The method according to any one of claims 1 to 6, wherein the method further comprises:

receiving, by the first electronic device via the first microphone, a fourth ultrasonic signal sent by a fourth loudspeaker of a third electronic device;

obtaining, by the first electronic device, fifth time information and sixth time information, wherein the fifth time information indicates a time difference obtained by subtracting a time point at which the third electronic device processes the fourth ultrasonic signal from a time point at which the third electronic device receives the first ultrasonic signal, the sixth time information indicates a time difference obtained by subtracting the time point at which the third electronic device processes the fourth ultrasonic signal from a time point at which the third electronic device receives the second ultrasonic signal, and the time point at which the third electronic device processes the fourth ultrasonic signal comprises: a time point at which the third electronic device sends the fourth ultrasonic signal via the third loudspeaker or a time point at which a third microphone of the third electronic device receives the fourth ultrasonic signal; and

determining, by the first electronic device, location information of the third electronic device based on the fifth time information, the sixth time information, seventh time information, eighth time information, and the locations of the first loudspeaker, the second loudspeaker, and the first microphone in the first electronic device, wherein the seventh time information indicates a time difference obtained by subtracting the time point at which the first electronic device processes the first ultrasonic signal from a time point at which the first electronic device receives the fourth ultrasonic signal, the eighth time information indicates a time difference obtained by subtracting a time point at which the first electronic device processes the second ultrasonic signal from the time point at which the first electronic device receives the fourth ultrasonic signal, the time point at which the first electronic device processes the first ultrasonic signal comprises: the time point at which the first electronic device sends the first ultrasonic signal via the first loudspeaker or the time point at which the first electronic device receives the first ultrasonic signal via the first microphone, and the time point at which the first electronic device processes the second ultrasonic signal comprises: the time point at which the first electronic device sends the second ultrasonic signal via the second loudspeaker or the time point at which the first electronic device receives the second ultrasonic signal via the first microphone.

8. The method according to claim 7, wherein determining, by the first electronic device, the location information of the third electronic device based on the fifth time information, the sixth time information, the seventh time information, the eighth time information, and the locations of the first loudspeaker, the second loudspeaker, and the first microphone in the first electronic device comprises:

determining, by the first electronic device, a sum of a fourth distance and a fifth distance based on the fifth time information and the seventh time information, wherein the fourth distance is a distance between the first loudspeaker and the third electronic device, and the fifth distance is a distance between the first microphone and the third electronic device;

determining, by the first electronic device, a sum of a sixth distance and the fifth distance based on the sixth time information and the eighth time information, wherein the sixth distance is a distance between the second loudspeaker and the third electronic device; and

determining, by the first electronic device, the location information of the third electronic device based on the sum of the fourth distance and the fifth distance, the sum of the sixth distance and the fifth distance, and the locations of the first loudspeaker, the second loudspeaker, and the first microphone in the first electronic device.

9. The method according to claim 7, wherein determining, by the first electronic device, the location information of the third electronic device based on the fifth time information, the sixth time information, the seventh time information, the eighth time information, and the locations of the first loudspeaker, the second loudspeaker, and the first microphone in the first electronic device comprises:

determining, by the first electronic device, a sum of a fourth distance and a fifth distance based on the fifth time information, the seventh time information, and the distance between the first loudspeaker and the first microphone, wherein the fourth distance is a distance between the first loudspeaker and the third electronic device, and the fifth distance is a distance between the first microphone and the third electronic device;

determining, by the first electronic device, a sum of a sixth distance and the fifth distance based on the sixth time information, the eighth time information, and the distance between the second loudspeaker and the first microphone, wherein the sixth distance is a distance between the second loudspeaker and the third electronic device; and

determining the location information of the third electronic device based on the sum of the fourth distance and the fifth distance, the sum of the sixth distance and the fifth distance, and the locations of the first loudspeaker, the second loudspeaker, and the first microphone in the first electronic device.

**10.** The method according to any one of claims 7 to 9, wherein the method further comprises:

receiving second identification information from the third electronic device, wherein the second identification information corresponds to the fourth ultrasonic signal; and
if a device identified by the second identification information is the third electronic device, determining, by the first electronic device, that the fourth ultrasonic signal is sent by the third electronic device.

**11.** The method according to any one of claims 7 to 10, wherein the method further comprises:

allocating, by the first electronic device, an audio channel to the third electronic device based on the location information of the third electronic device; or
displaying, by the first electronic device, the location information of the third electronic device.

**12.** The method according to claim 2, any one of claims 4 to 6, or claim 8, 10, or 11, wherein

the time point at which the first electronic device processes the first ultrasonic signal is the time point at which the first electronic device sends the first ultrasonic signal via the first loudspeaker; and
the time point at which the first electronic device processes the second ultrasonic signal is the time point at which the first electronic device sends the second ultrasonic signal via the second loudspeaker.

**13.** The method according to any one of claims 3 to 6, or claim 9, 10, or 11, wherein

the time point at which the first electronic device processes the first ultrasonic signal is the time point at which the first electronic device receives the first ultrasonic signal via the first microphone; and
the time point at which the first electronic device processes the second ultrasonic signal is the time point at which the first electronic device receives the second ultrasonic signal via the first microphone.

**14.** The method according to any one of claims 1 to 13, wherein the method further comprises:

allocating, by the first electronic device, an audio channel to the second electronic device based on the location information of the second electronic device; or
displaying, by the first electronic device, the location information of the second electronic device.

**15.** The method according to any one of claims 1 to 14, wherein the first electronic device is a smart television.

**16.** A location information determining method, comprising:

receiving, by a second electronic device, a first ultrasonic signal from a first electronic device;
receiving, by the second electronic device, a second ultrasonic signal from the first electronic device;
sending, by the second electronic device, a third ultrasonic signal via a third loudspeaker; and
sending, by the second electronic device, first time information and second time information to the first electronic device, wherein the first time information indicates a time difference obtained by subtracting a time point at which the second electronic device processes the third ultrasonic signal from a time point at which the second electronic device receives the first ultrasonic signal, the second time information indicates a time difference obtained by subtracting the time point at which the second electronic device processes the third ultrasonic signal from a time point at which the second electronic device receives the second ultrasonic signal, the time point at which the second electronic device processes the third ultrasonic signal comprises: a time point at which the second electronic device sends the third ultrasonic signal via the third loudspeaker or a time point at which the second electronic device receives the third ultrasonic signal via a second microphone, and the first time information and the second time information are for determining location information of the second electronic device.

**17.** The method according to claim 16, wherein
receiving, by the second electronic device, the first ultrasonic signal from the first electronic device comprises:

receiving, by the second electronic device, the first ultrasonic signal from the first electronic device via a fourth microphone; and
receiving, by the second electronic device, the second ultrasonic signal from the first electronic device comprises:

receiving, by the second electronic device, the second ultrasonic signal from the first electronic device via a fifth microphone, wherein

the third loudspeaker is a loudspeaker that is in the second electronic device and that corresponds to the fourth microphone and the fifth microphone.

18. An electronic device, comprising a memory and a processor, wherein the memory is configured to store a computer program, and the processor is configured to enable, when invoking the computer program, the electronic device to perform the method according to any one of claims 1 to 17.

19. A computer-readable storage medium, wherein the computer-readable storage medium stores a computer program; and when the computer program is run, the method according to any one of claims 1 to 17 is implemented.

20. A chip, comprising a processor, wherein the processor is connected to a memory, the memory is configured to store a computer program, and the processor is configured to execute the computer program stored in the memory, to implement the method according to any one of claims 1 to 17.

21. A computer program product, wherein when the computer program product runs on an electronic device, the electronic device is enabled to perform the method according to any one of claims 1 to 17.

Electronic device 100

| Memory 120 | Processor 110 | Communication module 130 |

Display screen 140

Peripheral device 150 — Loudspeaker 151, Loudspeaker 152, Microphone 153

FIG. 1

Audio-left channel

Audio-right channel

FIG. 2

Speaker
1

Audio-
left
channel

Speaker
2

Left
surround

Speaker
3

Audio-
right
channel

Speaker
4

Right
surround

FIG. 3

```
┌──────────┐   ┌──────────┐   ┌──────────┐   ┌──────────┐   ┌──────────┐
│  Large   │   │Speaker 1 │   │Speaker 2 │   │Speaker 3 │   │Speaker 4 │
│  screen  │   └──────────┘   └──────────┘   └──────────┘   └──────────┘
└──────────┘
```

Be powered on, and broadcast a Bluetooth signal

Establish a Bluetooth connection

Receive an instruction for setting an audio-left channel for the speaker 1 from a user

Be powered on, and broadcast a Bluetooth signal

Send an audio signal based on the audio-left channel

Establish a Bluetooth connection

Receive an instruction for setting left surround for the speaker 2 from the user

Be powered on, and broadcast a Bluetooth signal

Send an audio signal based on the left surround

Establish a Bluetooth connection

Receive an instruction for setting an audio-right channel for the speaker 3 from the user

Be powered on, and broadcast a Bluetooth signal

Send an audio signal based on the audio-right channel

Establish a Bluetooth connection

Receive an instruction for setting right surround for the speaker 4 from the user

Send an audio signal based on the right surround

FIG. 4

| Audio-left channel | Audio-right channel |
|---|---|
| Left surround | Right surround |

FIG. 5

600

| First electronic device | | Second electronic device |
|---|---|---|

S610: The first electronic device sends a first ultrasonic signal via a first loudspeaker, and the second electronic device receives the first ultrasonic signal

S620: The first electronic device sends a second ultrasonic signal via a second loudspeaker, and the second electronic device receives the second ultrasonic signal

S630: The second electronic device sends a third ultrasonic signal via a third loudspeaker, and the first electronic device receives the third ultrasonic signal via a first microphone

S640: Obtain first time information and second time information

S650: Determine location information of the second electronic device based on the first time information, the second time information, third time information, fourth time information, and locations of the first loudspeaker, the second loudspeaker, and the first microphone in the first electronic device

FIG. 6

700

| First electronic device | | Second electronic device | Third electronic device |

S710: First ultrasonic signal →

S720: Second ultrasonic signal →

← S730a: Third ultrasonic signal

← S730b: Fourth ultrasonic signal

S740a: Obtain first time information and second time information

S750a: Determine location information of the second electronic device based on the first time information, the second time information, third time information, fourth time information, and locations of a first loudspeaker, a second loudspeaker, and a first microphone in the first electronic device

S740b: Obtain fifth time information and sixth time information

S750b: Determine location information of the third electronic device based on the fifth time information, the sixth time information, seventh time information, eighth time information, and the locations of the first loudspeaker, the second loudspeaker, and the first microphone in the first electronic device

FIG. 7

800

| First electronic device | | Second electronic device |

S810: The first electronic device sends a first ultrasonic signal via a first loudspeaker at a first moment, and the second electronic device receives the first ultrasonic signal at a third moment

S820: The first electronic device sends a second ultrasonic signal via a second loudspeaker at a fourth moment, and the second electronic device receives the second ultrasonic signal at a sixth moment

S830: The second electronic device sends a third ultrasonic signal at a seventh moment, and the first electronic device receives the third ultrasonic signal via a first microphone at a ninth moment

S840: Obtain a difference obtained by subtracting the seventh moment from the third moment

S850: Obtain a difference obtained by subtracting the seventh moment from the sixth moment

S860: Determine a difference obtained by subtracting the first moment from the ninth moment and a difference obtained by subtracting the fourth moment from the ninth moment

S870: Determine location information of the second electronic device based on the difference obtained by subtracting the seventh moment from the third moment, the difference obtained by subtracting the seventh moment from the sixth moment, the difference obtained by subtracting the first moment from the ninth moment, the difference obtained by subtracting the fourth moment from the ninth moment, and locations of the first loudspeaker, the second loudspeaker, and the first microphone in the first electronic device

FIG. 8

FIG. 9

FIG. 10

1100

| First electronic device | | Second electronic device |
| --- | --- | --- |

S1110: The first electronic device sends a first ultrasonic signal via a first loudspeaker at a first moment, and the second electronic device receives the first ultrasonic signal at a third moment

S1110: A first microphone of the first electronic device receives the first ultrasonic signal at a second moment

S1120: The first electronic device sends a second ultrasonic signal via a second loudspeaker at a fourth moment, and the second electronic device receives the second ultrasonic signal at a sixth moment

S1120: The first microphone of the first electronic device receives the second ultrasonic signal at a fifth moment

S1130: The second electronic device sends a third ultrasonic signal at a seventh moment, and the first electronic device receives the third ultrasonic signal via the first microphone at a ninth moment

S1140: Obtain a difference obtained by subtracting the seventh moment from the third moment

S1150: Obtain a difference obtained by subtracting the seventh moment from the sixth moment

S1160: Determine a difference obtained by subtracting the second moment from the ninth moment and a difference obtained by subtracting the fifth moment from the ninth moment

S1170: Determine location information of the second electronic device based on the difference obtained by subtracting the seventh moment from the third moment, the difference obtained by subtracting the seventh moment from the sixth moment, the difference obtained by subtracting the second moment from the ninth moment, the difference obtained by subtracting the fifth moment from the ninth moment, a distance from the first loudspeaker to the first microphone, a distance from the second loudspeaker to the first microphone, and locations of the first loudspeaker, the second loudspeaker, and the first microphone in the first electronic device

FIG. 11

1200

First electronic device

Second electronic device

S1210: The first electronic device sends a first ultrasonic signal via a first loudspeaker at a first moment, and the second electronic device receives the first ultrasonic signal at a third moment

S1220: The first electronic device sends a second ultrasonic signal via a second loudspeaker at a fourth moment, and the second electronic device receives the second ultrasonic signal at a sixth moment

1230: The second electronic device sends a third ultrasonic signal via a third loudspeaker at a seventh moment, and the first electronic device receives the third ultrasonic signal via a first microphone at a ninth moment

S1240: Obtain a difference obtained by subtracting the eighth moment from the third moment

S1230: A second microphone of the second electronic device receives the third ultrasonic signal at an eighth moment

S1250: Obtain a difference obtained by subtracting the eighth moment from the sixth moment

S1260: Determine a difference obtained by subtracting the first moment from the ninth moment and a difference obtained by subtracting the fourth moment from the ninth moment

S1270: Determine location information of the second electronic device based on the difference obtained by subtracting the eighth moment from the third moment, the difference obtained by subtracting the eighth moment from the sixth moment, the difference obtained by subtracting the first moment from the ninth moment, the difference obtained by subtracting the fourth moment from the ninth moment, a distance from the third loudspeaker to the second microphone, and locations of the first loudspeaker, the second loudspeaker, and the first microphone in the first electronic device

FIG. 12

1300

| First electronic device | | Second electronic device |
|---|---|---|

S1310: The first electronic device sends a first ultrasonic signal via a first loudspeaker at a first moment, and the second electronic device receives the first ultrasonic signal at a third moment

S1310: A first microphone of the first electronic device receives a third ultrasonic signal at a second moment

S1320: The first electronic device sends a second ultrasonic signal via a second loudspeaker at a fourth moment, and the second electronic device receives the second ultrasonic signal at a sixth moment

S1320: The first microphone of the first electronic device receives the third ultrasonic signal at a fifth moment

1330: The second electronic device sends the third ultrasonic signal via a third loudspeaker at a seventh moment, and the first electronic device receives the third ultrasonic signal via the first microphone at a ninth moment

S1340: Obtain a difference obtained by subtracting the eighth moment from the third moment

S1330: A second microphone of the second electronic device receives the third ultrasonic signal at an eighth moment

S1350: Obtain a difference obtained by subtracting the eighth moment from the sixth moment

S1360: Determine a difference obtained by subtracting the second moment from the ninth moment and a difference obtained by subtracting the fifth moment from the ninth moment

S1370: The first electronic device determines location information of the second electronic device based on the difference obtained by subtracting the eighth moment from the third moment, the difference obtained by subtracting the eighth moment from the sixth moment, the difference obtained by subtracting the second moment from the ninth moment, the difference obtained by subtracting the fifth moment from the ninth moment, a distance from the first loudspeaker to the first microphone, a distance from the second loudspeaker to the second microphone, a distance from the third loudspeaker to the second microphone, locations of the first loudspeaker, the second loudspeaker, and the first microphone in the first electronic device, and locations of a fourth microphone, a fifth microphone, and the third loudspeaker in the second electronic device

FIG. 13

## INTERNATIONAL SEARCH REPORT

| | |
|---|---|
| International application No. | |
| | **PCT/CN2023/140438** |

### A. CLASSIFICATION OF SUBJECT MATTER

G01S 5/22(2006.01)i;  G01S 5/18(2006.01)i

According to International Patent Classification (IPC) or to both national classification and IPC

### B. FIELDS SEARCHED

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNTXT, ENTXTC, WPABSC, VEN: 华为, 王琪, 林力新, 黄青乾, 杜振国, 周永行, 第二, 扬声器, 喇叭, 麦克风, 话筒, 传声器, 音频, 声音, 声信号, 声波, 时间差, 时差, 位置, 确定, 定位, 距离, 屏, 音箱, 声道, second, speaker, horn, microphone, audio, sound, acoustic, time difference, location, determin+, localization, distance, screen, sound box, sound channel

### C. DOCUMENTS CONSIDERED TO BE RELEVANT

| Category* | Citation of document, with indication, where appropriate, of the relevant passages | Relevant to claim No. |
|---|---|---|
| Y | CN 114895244 A (HUAWEI TECHNOLOGIES CO., LTD.) 12 August 2022 (2022-08-12) description, paragraphs [0118]-[0121] and [0191]-[0208], and figure 18 | 16-21 |
| Y | CN 113055870 A (SUZHOU TOUCHAIR TECHNOLOGY CO., LTD.) 29 June 2021 (2021-06-29) description, paragraphs [0023]-[0046] | 16-21 |
| A | CN 107873136 A (SAMSUNG ELECTRONICS CO., LTD.) 03 April 2018 (2018-04-03) entire document | 1-21 |
| A | CN 108882139 A (BEIJING CHENGXIN DIGITAL SCIENCE AND TECHNOLOGY CO., LTD.) 23 November 2018 (2018-11-23) entire document | 1-21 |
| A | CN 115704889 A (BEIJING XIAOMI MOBILE SOFTWARE CO., LTD.) 17 February 2023 (2023-02-17) entire document | 1-21 |
| A | US 2008304361 A1 (MICROSOFT CORP.) 11 December 2008 (2008-12-11) entire document | 1-21 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 January 2024** | **02 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/140438**

| Patent document cited in search report | | | Publication date (day/month/year) | Patent family member(s) | | | Publication date (day/month/year) |
|---|---|---|---|---|---|---|---|
| CN | 114895244 | A | 12 August 2022 | WO | 2022156566 | A1 | 28 July 2022 |
| | | | | EP | 4258006 | A1 | 11 October 2023 |
| CN | 113055870 | A | 29 June 2021 | | None | | |
| CN | 107873136 | A | 03 April 2018 | KR | 20160144919 | A | 19 December 2016 |
| | | | | KR | 102444075 | B1 | 16 September 2022 |
| | | | | US | 2018091898 | A1 | 29 March 2018 |
| | | | | US | 10349171 | B2 | 09 July 2019 |
| | | | | EP | 3258709 | A1 | 20 December 2017 |
| | | | | EP | 3258709 | B1 | 29 April 2020 |
| | | | | WO | 2016200171 | A1 | 15 December 2016 |
| CN | 108882139 | A | 23 November 2018 | | None | | |
| CN | 115704889 | A | 17 February 2023 | EP | 4130794 | A1 | 08 February 2023 |
| | | | | US | 2023045608 | A1 | 09 February 2023 |
| US | 2008304361 | A1 | 11 December 2008 | US | 7729204 | B2 | 01 June 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310225172